# EUROPÄISCHE PATENTSCHRIFT

(11) **EP 4 100 215 B1**
(45) Veröffentlichungstag und Bekanntmachung des Hinweises auf die Patenterteilung: **07.06.2023**
(21) Anmeldenummer: 21703694.6
(22) Anmeldetag: 05.02.2021
(51) Int. Cl.: B25J 9/08, B25J 19/00, B25J 17/00, B25J 18/00, H02K 9/19, H02K 5/20, H02K 7/14, H02K 9/28

(54) **ARMMODUL, ROBOTERARM UND INDUSTRIEROBOTER**
ARM MODULE, ROBOTIC ARM AND INDUSTRIAL ROBOT
MODULE DE BRAS, BRAS ROBOTIQUE ET ROBOT INDUSTRIEL

(30) Priorität: 06.02.2020 DE 102020103058
(43) Veröffentlichungstag der Anmeldung: 14.12.2022
(73) Patentinhaber: Beckhoff Automation GmbH, 33415 Verl (DE)
(72) Erfinder: KASTLER, Peter, 1220 Wien (AT); MAIER, Clemens, 6700 Bludenz (AT); MORSCHER, Thomas, 1080 Wien (AT); PEHLIVAN, Armin, 6714 Nüziders (AT); ZECH, Christoph, 1130 Wien (AT)
(74) Vertreter: Patentanwaltskanzlei WILHELM & BECK
(86) Internationale Anmeldenummer: PCT/EP2021/052788
(87) Internationale Veröffentlichungsnummer: WO 2021/156432

(56) Entgegenhaltungen:
- DE-A1-102016 004 847
- US-A- 4 678 952
- US-A1- 2012 048 051
- US-A1- 2013 071 218

## Beschreibung

Die Erfindung betrifft ein aktives Armmodul gemäß Patentanspruch 1, einen Roboterarm gemäß Patentanspruch 14 und einen Industrieroboter gemäß Patentanspruch 15.

Die technische Disziplin der Automatisierungstechnik hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind eine Entlastung des Menschen von gefährlichen, anstrengenden und/oder eintönigen Tätigkeiten, eine Verbesserung einer Qualität der produzierten Güter durch die technische Anlage, eine höhere Leistungsfähigkeit der Anlage und eine Kostenreduktion durch die Anlage. Durch allgemeine Fortschritte bei Maschinen, einer Signalerfassung, einer Signalverarbeitung und/oder einer Kommunikation von Komponenten innerhalb des Automatisierungssystems kann der Automatisierungsgrad einer bestehenden oder einer neuen Anlage im Vergleich mit dem Stand der Technik deutlich gesteigert werden.

Anwendungsspezifische Industrieroboter sind ein fester Bestandteil von solchen automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm mit einer Mehrzahl von gegeneinander schwenkbaren und/oder drehbaren proximalen und distalen Armgliedern, einem Endeffektor, einer lokalen Steuerung/Regelung und ggf. einer globalen Steuerung/Regelung. Oft sind Industrieroboter mit unterschiedlichen Sensoren ausgerüstet. Programmiert ist der Industrieroboter in der Lage, einen Arbeitsablauf autonom durchzuführen oder eine Durchführung einer Aufgabe in Abhängigkeit von Informationen eines Sensors zu variieren.

So zeigt beispielsweise die US 2018/0111275 A1 einen modularen Roboterarm. Der modulare Roboterarm weist einen Satz von modularen Roboterkomponenten auf, die miteinander verbunden sind. Um die modularen Roboterkomponenten miteinander zu verbinden, ist jeweils ein Ringabschnitt vorgesehen. In dieser Ausgestaltung wirken hohe Kräfte auf die Verbindung zwischen den beiden Roboterkomponenten.

Ferner ist aus DE 10 2016 004 847 A1 ein Roboter-Kühlsystem zum Kühlen eines Roboters bekannt. Der Roboter weist einen Antriebsmotor auf, der eine Wärmequelle bildet und zu kühlen ist, ein Robotergetriebe oder ein elektrisch betriebenes Applikationsbauteil und einen Primärkühlkreislauf, in dem ein primäres Kühlmittel zirkuliert, um den Antriebsmotor zu kühlen. Ferner weist der Roboter einen Sekundärkühlkreislauf auf, in dem ein sekundäres Kühlmittel strömt, wobei das Sekundärkühlsystem die Wärme von dem Primärkühlkreislauf abführt.

Aus DE 10 2015 009 214 A1 ist eine Beschichtungsanlage zur Beschichtung von Bauteilen, insbesondere von Kraftfahrzeugkarosseriebauteilen, mit einem Beschichtungsmittel bekannt. Die Beschichtungsanlage weist eine erste Beschichtungsanlagenkomponente, die im Betrieb als Nebenprodukt Abwärme produziert und eine Wärmequelle bildet, und eine zweite Beschichtungsanlagenkomponente auf, die im Betrieb erwärmt wird und eine Wärmesenke bildet. Die Abwärme der ersten Beschichtungsanlagenkomponente wird der zweiten Beschichtungsanlagenkomponente zur Erwärmung zugeführt.

Aus DE 20 2007 016 161 U1 ist eine Roboterhalterung zur um eine Längsachse drehbaren Festlegung eines fluidgekühlten Fügewerkzeuges an einem Roboterarm eines Fügeroboters bekannt.

Aus DE 103 57 609 A1 ist ein Mehrachs-Industrieroboter, insbesondere zum Einsatz in kontaminationsgefährdeter Umgebung mit einer Anzahl von mit einem Spülmedium beaufschlagbaren Spülräumen im Bereich von Antriebseinheiten des Handhabungsgeräts bekannt.

Aus DE 100 33 224 C1 ist ein Roboter mit verteilt angeordneten Antriebselektroniken, Servoverstärkern, Wechselrichtern bekannt, wobei jede Antriebselektronik wärmeisoliert gegenüber der Roboterstruktur angeordnet und mit einer Kühleinrichtung versehen ist.

Aus DE 40 33 331 A1 ist ein Industrieroboter bekannt. Der Industrieroboter weist einen Roboterkörper mit mehreren Motorräumen zum Unterbringen von Elektromotoren und mit mehreren Elektromotoren für den Antrieb des Roboterkörpers auf, wobei jeder Motor in einem der mehreren Motorräume untergebracht ist. Ferner weist der Industrieroboter mehrere Führungskanäle zum Einbringen eines Schutzgases in die mehreren Motorräume und mehrere Auslasskanäle zum Herausführen des Schutzgases auf. Jeder Auslasskanal ist in einen der mehreren Motorräume eingeformt. Ferner weist der Industrieroboter eine Gasliefereinrichtung zum Liefern eines Schutzgases in die mehreren Führungskanäle mit einem vorbestimmten Druck auf, wobei der vorbestimmte Druck höher ist als ein Umgebungsdruck.

Ferner offenbart US 4 678 952 A ein abgedichtetes Gelenk mit zwei benachbarten, axial ausgerichteten Buchsen, die durch eine rotierende Dichtung getrennt sind, wobei ein Gelenk im Verhältnis zum anderen beweglich ist. Die Gelenke enthalten einen rohrförmigen Durchgang, der von einem Motor und einem harmonischen Antrieb umgeben ist. Ein Drehzahlmesser und eine Bremse dienen zur Steuerung des Motors, und ein Positionsgeber misst die Rotationsbewegung zwischen den Buchsen. Alle Komponenten sind gegenüber der Außenseite der Buchsen abgedichtet montiert. Eine abdichtbare Öffnung steht mit dem Inneren des rohrförmigen Durchgangs für jede Buchse in Verbindung, so dass Steuerkabel und Flüssigkeitsleitungen durch eine Öffnung in die Verbindung, entlang des rohrförmigen Durchgangs und aus der anderen Öffnung heraus geführt werden können.

Es ist Aufgabe der Erfindung, ein besonders leistungsfähiges, kompaktes und leichtes aktives Armmodul für einen modularen Roboterarm, einen besonders einfach und flexibel zu montierenden Roboterarm und einen besonders schnellen und präzisen Industrieroboter bereitzustellen.

Diese Aufgabe wird mittels eines Armmoduls gemäß Patentanspruch 1, eines modularen Roboterarms gemäß Patentanspruch 14 und eines Industrieroboters gemäß Patentanspruch 15 gelöst. Vorteilhafte Ausführungsformen sind in den abhängigen Ausführungsformen angegeben.

Es wurde erkannt, dass ein verbessertes aktives Armmodul dadurch bereitgestellt werden kann, dass das aktive Armmodul ein erstes Gehäuse, einen Wärmetauscher, eine Antriebseinrichtung, eine erste Anschlussseite mit einer ersten Anschlussplatte und eine an der ersten Anschlussplatte angeordnete erste Fluidkontakteinrichtung aufweist. Die erste Anschlussplatte ist mit einem weiteren Armmodul des Roboterarms oder mit einer Roboterbasis des Roboterarms mechanisch zur Übertragung von Antriebs- und Stützkräften verbindbar. Das erste Gehäuse erstreckt sich entlang einer Rotationsachse und begrenzt einen die Antriebseinrichtung aufnehmenden Innenraum, wobei über die erste Fluidkontakteinrichtung ein Fluid mit dem weiteren Armmodul oder der Roboterbasis austauschbar ist. Der Wärmetauscher nimmt zumindest abschnittweise die Antriebseinrichtung auf und ist thermisch mit der Antriebseinrichtung gekoppelt, wobei der Wärmetauscher wenigstens einen Wärmetauscherfluidkanal aufweist. Der Wärmetauscherfluidkanal ist mit dem Fluid zum Austausch des Fluids mit der ersten Fluidkontakteinrichtung füllbar. Der Wärmetauscher ist ausgebildet, Wärme zwischen der Antriebseinrichtung und dem Fluid auszutauschen.

Diese Ausgestaltung hat den Vorteil, dass durch eine Kühlung der Antriebseinrichtung über den Wärmetauscher mit dem Fluid eine thermische Überhitzung der Antriebseinrichtung vermieden wird. Dadurch wird eine thermische Überlastung der Antriebseinrichtung geringgehalten, sodass die Antriebseinrichtung und damit einhergehend auch das aktive Armmodul eine besonders hohe Lebensdauer aufweist. Ferner wird eine dauerhaft hohe thermische Belastung, insbesondere von Permanentmagneten des Rotors der Antriebseinrichtung, geringgehalten. Insbesondere wird hierbei eine Umorientierung von Weißschen Bezirken von Permanentmagneten des Rotors, die insbesondere bei hohen Temperaturen auftritt, vermieden. Auch kann durch die Kühlung eine hohe Verlustleistung abgeleitet werden, sodass das Antriebsmodul besonders temperaturstabil ist.

Dabei kann das aktive Armmodul sowohl innerhalb eines Industrieroboters oder auch als Endeffektor des Industrieroboters ausgebildet sein.

In einer weiteren Ausführungsform weist das Armmodul eine zweite Anschlussseite auf, wobei die zweite Anschlussseite mit dem ersten Gehäuse mechanisch drehfest verbunden ist. Die zweite Anschlussseite weist eine zweite Fluidkontakteinrichtung auf, wobei der Wärmetauscherfluidkanal des Wärmetauschers zwischen der zweite Fluidkontakteinrichtung und der ersten Fluidkontakteinrichtung angeordnet und der Wärmetauscherfluidkanal zum Austausch des Fluids zwischen der ersten Fluidkontakteinrichtung und der zweiten Fluidkontakteinrichtung ausgebildet ist. Durch die Anordnung des Wärmetauschers zwischen der ersten und der zweiten Fluidkontakteinrichtung wird kein zusätzliches Fluid benötigt, um die Antriebseinrichtung zu kühlen, sondern es kann das Fluid verwendet werden, das zwischen der ersten und zweiten Anschlussseite ausgetauscht wird. Dadurch kann das aktive Armmodul besonders kompakt gehalten werden.

In einer weiteren Ausführungsform ist der Wärmetauscherfluidkanal in dem Wärmetauscher mäanderförmig verlaufend um die Antriebseinrichtung ausgebildet. Zusätzlich oder alternativ ist der Wärmetauscherfluidkanal zumindest abschnittsweise schraubenförmig in wenigstens einer Windung, vorzugsweise wenigstens in zwei Windungen um die Rotationsachse verlaufend um die Antriebseinrichtung ausgebildet. Diese Ausgestaltung hat den Vorteil, dass ein gleichmäßiger Wärmeaustausch zwischen dem Fluid und der Antriebseinrichtung sichergestellt ist und ferner eine lokale Überhitzung der Antriebseinrichtung durch die gleichmäßige Kühlung vermieden werden kann.

In einer weiteren Ausführungsform weist das aktive Armmodul einen Drehübertrager auf, wobei die erste Anschlussseite drehbar um die Rotationsachse gelagert ist. Der Drehübertrager verbindet die erste Fluidkontakteinrichtung mit dem Wärmetauscherfluidkanal, wobei der Drehübertrager ausgebildet ist, in einer Rotation der ersten Anschlussseite das Fluid zwischen dem Wärmetauscherfluidkanal des Wärmetauschers und der ersten Fluidkontakteinrichtung auszutauschen. Dadurch wird eine im Wesentlichen unbegrenzte Verdrehbarkeit der ersten Anschlussseite relativ zum ersten Gehäuse einerseits und andererseits eine ausreichende Fluidversorgung des Wärmetauschers mit Fluid sichergestellt.

In einer weiteren Ausführungsform weist die Antriebseinrichtung einen Rotor und einen Stator auf, wobei der Rotor drehmomentschlüssig mit der ersten Anschlussseite gekoppelt und ausgebildet ist, die erste Anschlussseite um die Rotationsachse zu rotieren. Der Wärmetauscher nimmt zumindest abschnittsweise den Stator auf. Der Wärmetauscher liegt zudem zumindest abschnittweise an dem Stator an. Dadurch wird eine gleichmäßige Kühlung des Stators im Betrieb des aktiven Armmoduls durch den Wärmetauscher sichergestellt, sodass eine lokale Überhitzung des Stators, insbesondere von einzelnen Wicklungen bzw. Wicklungsabschnitten des Stators, vermieden werden kann. Von besonderem Vorteil ist insbesondere in diesem Zusammenhang, wenn die Antriebseinrichtung als bürstenloser Motor, insbesondere als bürstenloser Gleichstrommotor, ausgebildet ist. Von besonderem Vorteil ist, wenn die Antriebseinrichtung als Innenläufer ausgebildet ist.

In einer weiteren Ausführungsform weist der Wärmetauscher wenigstens einen ersten Wärmetauscherabschnitt auf, wobei der erste Wärmetauscherabschnitt hohlzylindrisch um die Rotationsachse verlaufend ausgebildet ist. Ferner ist der erste Wärmetauscherabschnitt thermisch mit der Antriebseinrichtung verbunden und umschließt radial außenseitig die Antriebseinrichtung. Der erste Wärmetauscherabschnitt bildet zumindest abschnittweise den Wärmetauscherfluidkanal aus. Ferner ist der erste Wärmetauscherabschnitt ausgebildet, Wärme zwischen dem Fluid und der Antriebseinrichtung auszutauschen.

Diese Ausgestaltung hat den Vorteil, dass der Wärmetauscher und das erste Gehäuse besonders schnell und einfach in einem Gussverfahren hergestellt werden können. Ferner ist hierbei von Vorteil, wenn der Wärmetauscher einen leitfähigen Werkstoff, insbesondere einen Aluminiumwerkstoff aufweist. Ferner kann der erste Wärmetauscherabschnitt einstückig und materialeinheitlich mit dem ersten Gehäuse ausgebildet sein oder es ist eine zweiteilige Ausgestaltung des ersten Gehäuses und des ersten Wärmetauscherabschnitts möglich.

In einer weiteren Ausführungsform weist der Wärmetauscherfluidkanal einen zweiten Kanalabschnitt auf. Der der zweite Kanalabschnitt ist nutförmig ausgebildet sowie um die Rotationsachse geführt. Der zweite Kanalabschnitt ist an einer zweiten äußeren Umfangsseite des Wärmetauschers, insbesondere des ersten Wärmetauscherabschnitts, angeordnet. Das erste Gehäuse weist an einer dritten inneren Umfangsseite eine Wärmetauscheraufnahme auf, wobei in die Wärmetauscheraufnahme der Wärmetauscher zumindest abschnittsweise eingreift. Die dritte innere Umfangsseite der Wärmetauscheraufnahme begrenzt außenseitig den zweiten Kanalabschnitt. Dadurch kann der zweite Kanalabschnitt besonders einfach hergestellt und abgedichtet werden. Alternativ ist der zweite Kanalabschnitt an einer ersten Wärmetauscherstirnseite des Wärmetauschers, insbesondere des ersten Wärmetauscherabschnitts, angeordnet, wobei der zweite Kanalabschnitt bogenförmig, um die Rotationsachse verlaufend ausgebildet ist. Diese Ausgestaltung hat den Vorteil, dass der zweite Kanalabschnitt im einfachen Spanverfahren mittels eines Fingerfräsers oder eines Nutfräsers in den ersten Wärmetauscherabschnitt eingebracht werden kann. Alternativ kann mit einer Gießform der zweite Kanalabschnitt im Gießen des ersten Wärmetauscherabschnitts ausgeformt werden.

Die zweiteilige Ausgestaltung des Wärmetauschers ermöglicht eine besonders einfache und kostengünstige Herstellung. Insbesondere kann beispielsweise der Wärmetauscher durch eine Kombination eines Gieß- und eines Spanverfahrens besonders einfach und kostengünstig hergestellt werden.

Vorteilhafterweise sind der zweite Wärmetauscherabschnitt und ein drittes Gehäuse des Drehübertragers einstückig und materialeinheitlich ausgebildet.

In einer weiteren Ausführungsform liegt der Wärmetauscher an dem Drehübertrager an und der Wärmetauscherfluidkanal weist einen ersten Kanalabschnitt auf. Der erste Kanalabschnitt ersteckt sich entlang einer Richtung der Rotationsachse und ist beabstandet zu der Rotationsachse bohrungsartig verlaufend ausgebildet. Der erste Kanalabschnitt mündet an einer Seite in den zweiten Kanalabschnitt und ist an einer anderen Seite mit dem Drehübertrager verbunden. Der erste Kanalabschnitt ist zum Austausch des Fluids zwischen dem Drehübertrager und dem zweiten Kanalabschnitt ausgebildet.

Von besonderem Vorteil ist beispielsweise, wenn der erste Kanalabschnitt als Durchgangsöffnung, insbesondere als Bohrung ausgebildet ist.

In einer weiteren Ausführungsform weist der Wärmetauscher einen zweiten Wärmetauscherabschnitt auf, wobei der zweite Wärmetauscherabschnitt hohlzylindrisch um die Rotationsachse verlaufend ausgebildet ist. Der zweite Wärmetauscherabschnitt ist mit einem dritten Gehäuse des Drehübertragers verbunden, wobei der erste Wärmetauscherabschnitt an einer zur ersten Anschlussseite abgewandten dritten Wärmetauscherstirnseite an einer vierten Wärmetauscherstirnseite des zweiten Wärmetauscherabschnitts anliegt. Der erste Kanalabschnitt ist durch den zweiten Wärmetauscherabschnitt durchgeführt. Diese Ausgestaltung hat den Vorteil, dass der Wärmetauscher besonders einfach und kostengünstig herstellbar ist.

In einer weiteren Ausführungsform weist der Wärmetauscher einen axial neben dem ersten Wärmetauscherabschnitt angeordneten zweiten Wärmetauscherabschnitt auf. Der zweite Wärmetauscherabschnitt ist hohlzylindrisch um die Rotationsachse verlaufend ausgebildet. Der Wärmetauscherfluidkanal ist in dem ersten Wärmetauscherabschnitt und dem zweiten Wärmetauscherabschnitt abwechselnd angeordnet. Der zweite Wärmetauscherabschnitt liegt stirnseitig an dem ersten Wärmetauscherabschnitt an und ist thermisch mit dem ersten Wärmetauscherabschnitt verbunden. Vorzugsweise sind der zweite Wärmetauscherabschnitt und ein drittes Gehäuse des Drehübertragers einstückig und materialeinheitlich ausgebildet. Dadurch ist der Wärmetauscherfluidkanal besonders lang und das in dem Wärmetauscherfluidkanal geführte Fluid kann besonders viel Wärme mit dem Wärmetauscher austauschen.

In einer weiteren Ausführungsform weist das aktive Armmodul eine erste Fluidleitung auf, die bohrungsartig in dem ersten Gehäuse ausgebildet ist. Die erste Fluidleitung erstreckt sich abschnittsweise in radialer Richtung zu der Rotationsachse und mündet innenseitig in dem Wärmetauscherfluidkanal. Radial außen ist die erste Fluidleitung mit der zweiten Fluidkontakteinrichtung verbunden. Die erste Fluidleitung ist zum Austausch des Fluids zwischen dem zweiten Kanalabschnitt und dem Wärmetauscherfluidkanal ausgebildet. Diese Ausgestaltung hat den Vorteil, dass auf Schlauchleitungen in dem aktiven Armmodul verzichtet werden kann und dadurch das aktive Armmodul besonders einfach montiert werden kann.

In einer weiteren Ausführungsform weist das aktive Armmodul einen Leitungsblock mit wenigstens einer zweiten Fluidleitung auf, wobei die zweite Fluidleitung kanalförmig, insbesondere bohrungsartig in dem Leitungsblock ausgebildet ist. An einer der zweiten Anschlussseite zugewandten Seite des Leitungsblocks ist ein sechster Fluidkontakt der zweiten Fluidkontakteinrichtung an dem Leitungsblock befestigt. An einer zur zweiten Anschlussseite abgewandten Seite des Leitungsblocks liegt der Leitungsblock an dem Drehübertrager an. Die zweite Fluidleitung ist zum Austausch des Fluids zwischen dem Drehübertrager und der zweiten Fluidkontakteinrichtung ausgebildet. Diese Ausgestaltung hat den Vorteil, dass auf weitere Schlauchleitungen in dem aktiven Armmodul verzichtet werden kann und dadurch das aktive Armmodul besonders einfach montiert werden kann. Ferner werden Undichtigkeiten an der Schlauchleitung vermieden

In einer weiteren Ausführungsform weist das erste Gehäuse eine sich in radialer Richtung bezogen auf die Rotationsache nach innen erstreckenden ersten Absatz mit einer stirnseitig an dem ersten Absatz angeordneten ersten Absatzfläche auf. Die erste Absatzfläche ist geneigt zu der Rotationsachse angeordnet. Der Wärmetauscher weist an einer der ersten Anschlussseite zugewandten Seite eine zweite Absatzfläche auf, wobei zumindest abschnittsweise zwischen der ersten Absatzfläche und der zweiten Absatzfläche ein erstes Dichtelement, insbesondere ein erster Dichtring, angeordnet ist. Das erste Dichtelement liegt an der ersten Absatzfläche an und ist ausgebildet, den Wärmetauscherfluidkanal gegen einen Austritt des Fluids abzudichten. Diese Ausgestaltung hat den Vorteil, dass eine erste Dichtebene des aktiven Armmoduls besonders einfach ausgebildet wird.

In einer weiteren Ausführungsform weist das erste Gehäuse eine umlaufend um die Rotationsachse ausgebildete zweite Aussparung auf. Ferner weist der Wärmetauscher einen umlaufend um die Rotationsachse ausgebildeten dritten Absatz auf, der sich in radialer Richtung bezogen auf die Rotationsachse radial nach außen erstreckt und auf einer der ersten Anschlussseite zugewandten Seite eine dritte Absatzsatzfläche aufweist, die geneigt zu der Rotationsachse ausgerichtet ist. Der dritte Absatz greift zumindest abschnittsweise in die zweite Aussparung ein. In der dritten Absatzfläche oder in der zweiten Aussparung ist eine zweite Dichtnut angeordnet. In der zweiten Dichtnut ist ein zweites Dichtelement, insbesondere ein zweiter Dichtring angeordnet. Der zweite Wärmetauscherfluidkanal ist axial zumindest abschnittsweise zwischen der Wärmetauscherstirnseite und dem dritten Absatz angeordnet. Das zweite Dichtelement ist ausgebildet, den Wärmetauscher gegen einen Austritt von Fluid aus dem Wärmetauscherfluidkanal abzudichten. Dadurch kann der Wärmetauscher besonders einfach abgedichtet werden.

In einer weiteren Ausführungsform weist der Wärmetauscherfluidkanal wenigstens einen dritten Kanalabschnitt auf, wobei der dritte Kanalabschnitt sich entlang einer Richtung der Rotationsachse erstreckt und beabstandet zu der Rotationsachse verlaufend ausgebildet ist. Der dritte Kanalabschnitt ist in Umfangsrichtung versetzt zu dem ersten Kanalabschnitt angeordnet. Der zweite Kanalabschnitt verbindet den ersten Kanalabschnitt mit dem dritten Kanalabschnitt.

In einer weiteren Ausführungsform weist der Wärmetauscherfluidkanal wenigstens einen vierten Kanalabschnitt auf, wobei der vierte Kanalabschnitt an einer zweiten Wärmetauscherstirnseite des Drehübertragers in dem Drehübertrager angeordnet ist und nutförmig ausgebildet ist. Der vierte Kanalabschnitt ist um die Rotationsachse verlaufend ausgebildet. An dem vierten Kanalabschnitt mündet der dritte Kanalabschnitt. Der erste Wärmetauscherabschnitt liegt an der zweiten Wärmetauscherstirnseite an und verschließt den vierten Kanalabschnitt. Diese Ausgestaltung hat den Vorteil, dass der vierte Kanalabschnitt besonders einfach mittels eines Spanvorgangs in den zweiten Wärmetauscherabschnitt eingebracht werden kann. Auch kann mittels einer Gussform der vierte Kanalabschnitt in dem zweiten Wärmetauscherabschnitt ausgeformt werden.

In einer weiteren Ausführungsform weist das aktive Armmodul ein Getriebe auf, wobei das Getriebe eingangsseitig drehfest mit der Antriebseinrichtung und ausgangsseitig drehfest mit der ersten Anschlussseite verbunden ist. Das Getriebe liegt stirnseitig an dem Wärmetauscher an und verschließt den zweiten Kanalabschnitt. Dadurch ist in Axialrichtung das aktive Armmodul besonders kompakt ausgebildet. Zusätzlich kann ein Dichtmittel zwischen dem Getriebe und der ersten Wärmetauscherstirnseite zur fluiddichten Abdichtung des zweiten Kanalabschnitts angeordnet sein. Das Dichtmittel kann beispielsweise eine ausgehärtete Flüssigdichtung sein.

In einer weiteren Ausführungsform weist der Drehübertrager einen ersten Anschluss und einen nutförmig um die Rotationsachse verlaufenden ersten Abnehmerkanal auf, wobei der Wärmetauscherfluidkanal den ersten Anschluss mit dem ersten Abnehmerkanal zum Austausch des Fluids zwischen dem ersten Abnehmerkanal und dem ersten Anschluss verbindet. Der erste Anschluss ist mit der zweiten Fluidkontakteinrichtung mittels einer ersten Fluidleitung verbunden. Der erste Anschluss ist fluidisch mit der zweiten Fluidkontakteinrichtung verbunden. Diese Ausgestaltung hat den Vorteil, dass auf zusätzliche Kanäle und/oder Leitungen, insbesondere Schlauchleitungen, verzichtet werden kann, sodass eine Bauteilanzahl besonders gering ist.

Ein besonders vorteilhafter Roboterarm kann dadurch bereitgestellt werden, dass der Roboterarm ein aktives Armmodul und ein Armmodul oder eine Roboterbasis aufweist, wobei das aktive Armmodul wie oben beschrieben ausgebildet ist. Das Armmodul weist wenigstens eine zweite Anschlussseite auf, wobei die erste Anschlussseite des aktiven Armmoduls mit der zweiten Anschlussseite des Armmoduls oder der Roboterbasis mechanisch zur Übertragung von Stützkräften und/oder Antriebskräften zwischen dem aktiven Armmodul und dem Armmodul verbunden ist. Über die miteinander verbundenen ersten und zweiten Anschlussseiten des aktiven Armmoduls und des Armmoduls oder der Roboterbasis ist ein Fluid austauschbar. Dadurch wird auf eine zusätzliche Leitungsführung, insbesondere außenseitig des ersten Gehäuses des aktiven Armmoduls verzichtet. Dadurch wird ein Verhaken beispielsweise des Endeffektors am Roboterarm vermieden.

Ein besonders temperaturstabiler und präziser Industrieroboter, der insbesondere für Pick-and-Place-Aufgaben geeignet ist, kann dadurch bereitgestellt werden, dass der Industrieroboter einen oben beschriebenen Roboterarm und eine Roboterbasis aufweist. Die erste Anschlussseite des Armmoduls ist der Roboterbasis zugewandt, wobei über die erste Anschlussseite des Armmoduls, die zweite Anschlussseite des Armmoduls und die erste Anschlussseite des aktiven Armmoduls hinweg das Fluid zwischen der Roboterbasis und dem aktiven Armmodul übertragbar ist.

Nachfolgend wird die Erfindung anhand von Figuren näher erläutert. Dabei zeigen:
- Figur 1: eine perspektivische Ansicht eines Industrieroboters für ein Automatisierungssystem;
- Figur 2: eine perspektivische Darstellung eines in Figur 1 gezeigten aktiven Armmoduls gemäß einer ersten Ausführungsform;
- Figur 3: eine vergrößerte perspektivische Ansicht auf eine erste Anschlussseite des in den Figuren 1 und 2 gezeigten ersten aktiven Armmoduls;
- Figur 4: eine Draufsicht auf die zweite Anschlussseite des in den Figuren 1 bis 3 gezeigten aktiven Armmoduls;
- Figur 5: einen perspektivischen Längsschnitt durch das in Figur 2 gezeigte aktive Armmodul;
- Figur 6: eine perspektivische Darstellung eines Wärmetauscherfluidkanals eines Wärmetauschers des in Figur 2 gezeigten aktiven Armmoduls;
- Figur 7: eine Seitenansicht auf ein erstes Gehäuse des in den Figuren 1 bis 3 gezeigten aktiven Armmoduls;
- Figur 8: eine perspektivische Darstellung eines Drehübertragers des in Figur 2 gezeigten aktiven Armmoduls und des Wärmetauscherfluidkanals;
- Figur 9: eine Schnittansicht entlang einer in Figur 7 gezeigten Schnittebene X-X durch das in Figur 7 gezeigte aktive Armmodul;
- Figur 10: eine perspektivische Darstellung des in Figur 2 gezeigten aktiven Armmoduls;
- Figur 11: eine Seitenansicht auf das in Figur 2 gezeigte aktive Armmodul;
- Figur 12: eine Schnittansicht entlang einer in Figur 11 gezeigten Schnittebene A-A;
- Figur 13: eine Schnittansicht entlang einer in Figur 11 gezeigten Schnittebene B-B;
- Figur 14: eine Schnittansicht entlang einer in Figur 11 gezeigten Schnittebene C-C;
- Figur 15: eine Seitenansicht der in Figur 11 gezeigten Darstellung des aktiven Armmoduls gemäß der ersten Ausführungsform;
- Figur 16: einen perspektivischen Längsschnitt durch ein aktives Armmodul gemäß einer zweiten Ausführungsform;
- Figur 17: eine Seitenansicht auf das in Figur 16 gezeigte aktive Armmodul;
- Figur 18: einen Ausschnitt einer Schnittansicht entlang einer in Figur 17 gezeigten Schnittebene D-D durch das in Figur 17 gezeigte aktive Armmodul;
- Figur 19: eine Seitenansicht auf einen in Figur 18 gezeigten ersten Wärmetauscherabschnitt des in Figur 16 gezeigten aktiven Armmoduls;
- Figur 20: einen Längsschnitt durch den in Figur 19 gezeigten ersten Wärmetauscherabschnitt;
- Figur 21: einen in Figur 18 markierten Ausschnitt E der in Figur 18 gezeigten Schnittansicht durch das aktive Armmodul;
- Figur 22: eine perspektivische Darstellung des in den Figuren 16 bis 18 gezeigten aktiven Armmoduls gemäß der zweiten Ausführungsform;
- Figur 23: eine eine Schnittansicht entlang einer in Figur 17 gezeigten Schnittebene F-F durch das aktive Armmodul gemäß der zweiten Ausführungsform.

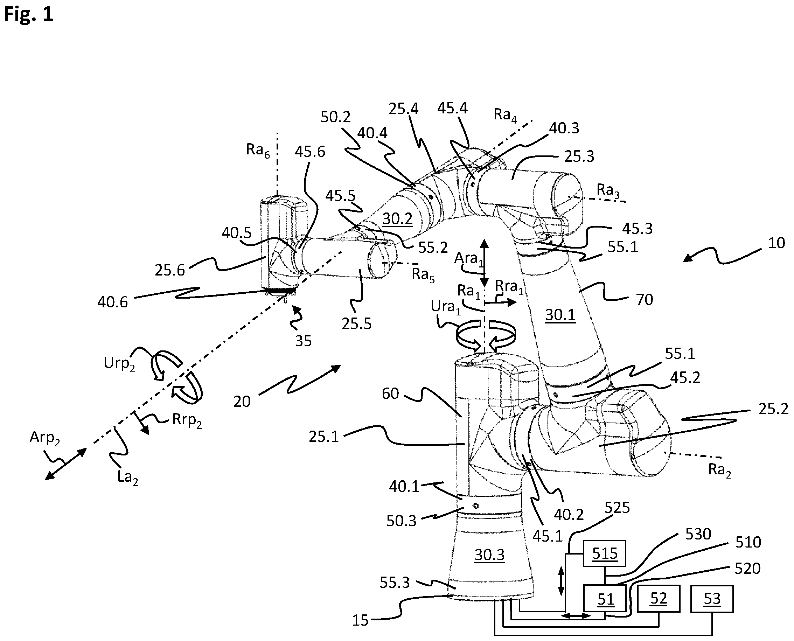

Figur 1 zeigt eine perspektivische Ansicht eines Industrieroboters 10 für ein Automatisierungssystem.

Unter dem Industrieroboter 10 wird eine (automatische) Maschine mit mehreren Freiheitsgraden (in Figur 1 beispielhaft sechs rotatorische Freiheitsgrade) für die Automatisierungstechnik bezeichnet, welche durch eine vorprogrammierte Steuerung/Regelung verschiedene Funktionen in einer Arbeitsumgebung in (bedingter) Eigenleistung durchführen kann. Der Industrieroboter 10 umfasst eine Roboterbasis 15, einen Roboterarm 20 und einen, bevorzugt auswechselbaren, Endeffektor (in Figur 1 nicht dargestellt), auch als Roboterhand bezeichenbar, mit z. B.: einem Werkzeug, einem Greifer etc., welcher an einem freien Ende des Roboterarms 20 angeordnet ist.

Der vorliegende Roboterarm 20 des Industrieroboters 10 ist insbesondere modular aus einem Modulbaukasten mit einer Mehrzahl von Armmodulen 18 ausgebildet. Die Armmodule 18 können als aktives Armmodul 25 oder als passives Armmodul 30 oder als Endeffektor beispielhaft aufgebaut sein. Der Modulbaukasten kann ferner weitere (Arm- und/oder End-)Module aufweisen. Prinzipiell ist der Aufbau des Roboterarms 20 mit aktiven Armmodulen 25 und passiven Armmodulen 30 beliebig wählbar und ist nur hinsichtlich einer maximalen Tragkraft der Armmodule 18 beschränkt.

In Figur 1 sind die aktiven Armmodule 25 nummeriert, wobei in Figur 1 von der Roboterbasis 15 in Richtung des Endeffektors nummeriert ist. Auch die passiven Armmodule 30 sind zur besseren Unterscheidung nummeriert. So ist beispielsweise ein drittes passives Armmodul 30.3 mit der Roboterbasis 15 an einem Ende und an einem anderen Ende mit einem ersten aktiven Armmodul 25.1 verbunden. Das erste aktive Armmodul 25.1 ist an seinem zweiten Ende mit einem zweiten aktiven Armmodul 25.2 verbunden. Zwischen dem zweiten aktiven Armmodul 25.2 und einem dritten aktiven Armmodul 25.3 ist ein erstes passives Armmodul 30.1 angeordnet. Das dritte aktive Armmodul 25.3 ist auf einer dem ersten passiven Armmodul 30.1 abgewandten Seite mit einem vierten aktiven Armmodul 25.4 verbunden, welches auf einer zum dritten aktiven Armmodul 25.3 abgewandten Seite mit einem zweiten passiven Armmodul 30.2 verbunden ist. Das zweite passive Armmodul 30.2 ist mit einem fünften aktiven Armmodul 25.5 verbunden. Auf der zum zweiten passiven Armmodul 30.2 abgewandten Seite ist ein sechstes aktives Armmodul 25.6 angeordnet, an dem auf einer zum fünften aktiven Armmodul 25.5 abgewandten ersten Anschlussseite 40.6 der Endeffektor angeordnet ist. Die erste Anschlussseite 40.6 des sechsten aktiven Armmoduls 25.6 bildet somit eine Endeffektoranschlussseite 35 aus, an der der Endeffektor angeschlossen werden kann.

Die aktiven Armmodule 25 weisen jeweils eine Antriebseinrichtung auf, mittels welcher ein daran anschließbares weiteres aktives Armmodul 25 oder ein passives Armmodul 30 um eine zugeordnete Rotationsachse Raₙ des aktiven Armmoduls 25 rotiert werden kann.

Analog dazu wird bei den passiven Armmodulen 30 auf die Antriebseinrichtung verzichtet. Sie sind also als eine Art Verlängerungsteil ausgebildet.

Der Roboterarm 20 umfasst in Abhängigkeit einer Anzahl von aktiven Armmodulen 25 auch eine entsprechende Anzahl von Rotationsachsen Raₙ. D. h., bevorzugt lassen sich eine beliebige Anzahl von vollständigen Umdrehungen eines betreffenden aktiven Armmoduls 25 des Roboterarms 20 in bevorzugt beide Umfangsrichtungen Uraₙ einer betreffenden Rotationsachse Raₙ durchführen.

Ferner bezieht sich die Erläuterung im Folgenden auf ein polares Koordinatensystem jeweils eines aktiven Armmoduls 25. Das polare Koordinatensystem weist jeweils eine im Allgemeinen und nicht auf ein bestimmtes aktives Armmodul 25 verweisende Rotationsachse Raₙ auf. Entlang der Rotationsachse Raₙ verläuft eine Axialrichtung Araₙ des aktiven Armmoduls 25. Senkrecht nach außen bezogen auf die jeweilige Rotationsachse Raₙ verläuft eine Radialrichtung Rraₙ des jeweiligen aktiven Armmoduls 25. Eine Umfangsrichtung Uraₙ des jeweiligen aktiven Armmoduls 25 verläuft auf einer (Kreis-)Bahn um die Rotationsachse Raₙ des aktiven Armmoduls 25. Die allgemeine Nomenklatur wird verwendet, um im Allgemeinen den Aufbau des aktiven Armmoduls 25 zu erläutern.

Im Speziellen sind in Figur 1 die Rotationsachsen Raₙ, die Axialrichtungen Araₙ und die Umfangsrichtungen Uraₙ des jeweiligen aktiven Armmoduls 25 gemäß ihrer Nummerierung bezeichnet. So trägt beispielsweise eine erste Rotationsachse Ra₁ des ersten aktiven Armmoduls 25.1 als Index an der Stelle von n den Index 1. Eine zweite Rotationsachse Ra₂ des zweiten aktiven Armmoduls 25.2 ist entsprechend in Figur 1 beschriftet. Analog sind entsprechend auch die Axialrichtungen Araₙ, die Radialrichtungen Rraₙ und die Umfangsrichtungen Uraₙ der aktiven Armmodule 25 bezeichnet. In Figur 1 sind aus Übersichtlichkeitsgründen nur alle Richtungsangaben (die erste Rotationsachse Ra₁, die erste Axialrichtung Ara₁ und die erste Umfangsrichtung Ura₁) für das erste aktive Armmodul 25.1 eingezeichnet.

Ferner bezieht sich die Erläuterung im Folgenden auf ein weiteres polares Koordinatensystem jeweils eines passiven Armmoduls 30. Das weitere polare Koordinatensystem weist jeweils eine Längsachse Laₙ auf. Entlang der Längsachse Laₙ verläuft eine Axialrichtung Arpₙ des jeweiligen passiven Armmoduls 30.

Einer jeweiligen Rotationsachse Raₙ des aktiven Armmoduls 25 ist bevorzugt ein Kraft- und/oder Drehmomentsensor sowie ggf. eine erste und/oder zweite Sensoreinrichtung jeweils eines aktiven Armmoduls 25 zugeordnet, mit dem eine Kraft und/oder ein Drehmoment auf das aktive Armmodul 25 sowie eine Position des aktiven Armmoduls 25 gegenüber der Rotationsachse Raₙ erfassbar ist. Die Rotationsachse Raₙ ist beispielhaft als ideelles "Gelenk" (Rotationsgelenk, Drehgelenk und/oder Schwenkgelenk) des mehrgliedrigen bzw. bevorzugt modular aufgebauten Roboterarms 20, z. B. gegenüber der Roboterbasis 15, ausgebildet.

Für die jeweilige Rotationsachse Raₙ kann ein Kraft-, Drehmoment- und/oder Positionssensor für eine Überwachung von am Roboterarm 20 auftretenden Kräften und/oder Drehmomenten und/oder einer Relativposition der Armmodule 18 zueinander vorgesehen sein. Dies kann auch auf einen Abschnitt des Roboterarms 20 beschränkbar sein.

Vorliegend weist ein bestimmter Modulbaukasten für einen Roboterarm 20 wenigstens einen Typ eines beispielweise I-, J-, L- bzw. T-förmig ausgebildeten, aktiven Armmoduls 25 und vorzugsweise wenigstens einen Typ eines beispielsweise I-, J-, L- bzw. T-förmig ausgebildeten, passiven Armmoduls 30 auf. Beispielhaft sind in Figur 1 die aktiven Armmodule 25 J- oder L-förmig ausgebildet, während hingegen die passiven Armmodule 30 beispielhaft I-förmig ausgebildet sind.

In Figur 1 sind bevorzugt sämtliche Armmodule 18 des Modulbaukastens für Roboterarme 20 derart ausgebildet, dass jedes der Armmodule 18 jeweils wenigstens zwei erste, zweite, dritte und/oder vierte Anschlussseiten 40, 45, 50, 55 aufweist. Die ersten bis vierten Anschlussseiten 40, 45, 50, 55 der Armmodule 18 können miteinander korrespondieren und miteinander verbunden werden. Dabei weist beispielhaft jedes aktive Armmodul 25 eine erste Anschlussseite 40 und eine zweite Anschlussseite 45 auf. Jedes passive Armmodul 30 weist eine dritte Anschlussseite 50 und eine vierte Anschlussseite 55 auf. Es ist jedoch auch möglich, dass jedes aktive Armmodul 25 zwei erste Anschlussseiten 40 oder zwei zweite Anschlussseiten 45 aufweist. Analog ist es auch möglich, dass jedes passive Armmodul 30 zwei dritte Anschlussseiten 50 oder zwei vierte Anschlussseiten 55 aufweist.

Zur eindeutigen Identifizierung der jeweiligen ersten bis vierten Anschlussseite 40, 45, 50, 55 erfolgt die Zuordnung der ersten bis vierten Anschlussseiten 40, 45, 50, 55 korrespondierend zu der Nummerierung der aktiven Armmodule 25 oder der passiven Armmodule 30. So ist die erste Anschlussseite des ersten aktiven Armmoduls 25.1 mit dem Bezugszeichen 40.1 in Figur 1 bezeichnet.

Die erste Anschlussseite 40, die zweite Anschlussseite 45, die dritten Anschlussseiten 50 und die vierten Anschlussseiten 55 sind korrespondierend zueinander ausgebildet. D. h., dass an jede erste Anschlussseite 40 eines aktiven Armmoduls 25 eine zweite Anschlussseite 45 eines anderen aktiven Armmoduls 25 oder eine dritte Anschlussseite 50 eines passiven Armmoduls 30 anschließbar wäre. Ebenso wäre an jede zweite Anschlussseite 45 eines aktiven Armmoduls 25 eine erste Anschlussseite 40 eines anderen aktiven Armmoduls 25 oder eine vierte Anschlussseite 55 eines passiven Armmoduls 30 anschließbar.

In Figur 1 ist beispielhaft die vierte Anschlussseite 55.3 des dritten passiven Armmoduls 30.3 mit der Roboterbasis 15 verbunden. Neben der mechanischen Verbindung der vierten Anschlussseite 55.3 des dritten passiven Armmoduls 30.3 zur Abstützung von Kräften und Drehmomenten aus dem Roboterarm 20 an der Roboterbasis 15 wird über die vierte Anschlussseite 55.3 des dritten passiven Armmoduls 30.3 der Roboterarm 20 mit einem Fluid 51 versorgt, welches über die vierte Anschlussseite 55.3 des dritten passiven Armmoduls 30.3 in den Roboterarm 20 eingeleitet wird.

Das Fluid 51 weist bei Einleitung eine erste niedrige Temperatur T1 auf. Die erste Temperatur T1 kann beispielsweise 20° C betragen. Auch kann das Fluid 51 vorgekühlt sein und beispielsweise die erste Temperatur T1= 4° C aufweisen. Alternativ kann das Fluid 51 erwärmt sein und die erste Temperatur von 60° C aufweisen.

Ferner kann die Roboterbasis 15 eingangsseitig mit einem Fluidspeicher 510 über eine erste fluidische Versorgungsleitung 520 verbunden sein. Der Fluidspeicher 510 ist zur Speicherung des Fluids 51 ausgebildet und kann beispielsweise als Tank oder Druckspeicher ausgebildet sein.

Ferner kann die Roboterbasis 15 ausgangsseitig mit einer Eingangsseite einer Förderpumpe 515 über eine zweite fluidische Versorgungsleitung 525 verbunden sein. Eine dritte fluidische Versorgungsleitung 530 kann eine Ausgangsseite der Förderpumpe 515 mit dem Fluidspeicher 510 verbinden.

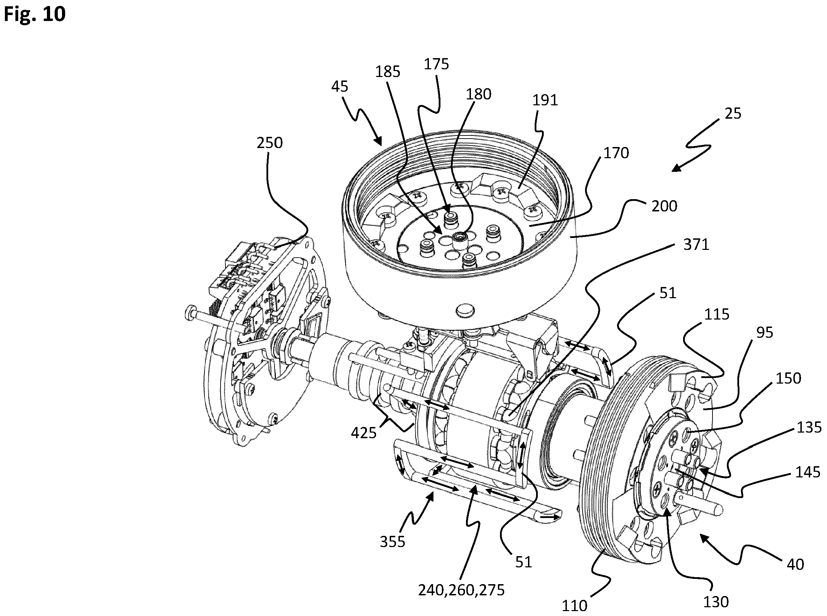

Sofern nicht gesondert erläutert saugt im Betrieb der Förderpumpe 515 die Förderpumpe 515 das Fluid 51 an und erzeugt einen Unterdruck an der Roboterbasis 15. Das angesaugte Fluid 51 wird über die dritte fluidische Versorgungsleitung 530 zurück in den Fluidspeicher 510 gefördert. Über die erste fluidische Versorgungsleitung 520 kann Fluid 51 aus dem Fluidspeicher 510 an die Roboterbasis 15 strömen. Auf die Strömung des Fluids 51 innerhalb des Industrieroboters 10 wird im Rahmen der Figuren 10 bis 14 detailliert eingegangen.

In einer Weiterbildung des gezeigten Industrieroboters 10 kann das Fluid 51 druckbeaufschlagt der Roboterbasis 15 bereitgestellt werden und beispielsweise einen Druck von zwei bar bis zweihundert bar bei Bereitstellung an der Roboterbasis 15 aufweisen. Dabei kann die Förderpumpe 515 ausgangsseitig mit der Roboterbasis 15 und eingangsseitig mit dem Fluidspeicher 510 verbunden sein. Anstatt der oben beschriebenen Ausgestaltung pumpt die Förderpumpe 515 das Fluid 51 zu der Roboterbasis 30. Auch kann das Fluid 51 druckbeaufschlagt im Fluidspeicher 510 gespeichert werden, sodass auf die Förderpumpe 515 zwischen Roboterbasis 15 und Fluidspeicher 515 verzichtet werden kann.

Da das Fluid 51 entsprechend der vorigen Beschreibung je nach Ausführungsform des Industrieroboters 10 in den ersten bis dritten fluidischen Versorgungsleitungen 520, 525, 530 in verschiedene Strömungsrichtungen fließen bzw. gesaugt oder gepumpt werden kann, ist die Strömungsrichtung des Fluids 51 mittels Doppelpfeilen dargestellt. Das gilt entsprechend auch für die Strömungsrichtung des Fluids 51 in den weiteren Figuren. Selbst wenn zu den einzelnen Ausführungsformen des Industrieroboters 10 nur beschrieben sein sollte, dass das Fluid 51 in eine Richtung fließt bzw. gefördert bzw. gesaugt wird, so ist auch ohne explizite Beschreibung mit offenbart, dass das Fluid 51 selbstverständlich auch in die entgegengesetzte Richtung fließen bzw. gefördert werden bzw. gesaugt werden kann. Auch das ist in den einzelnen Figuren mittels Doppelpfeilen dargestellt.

Ferner ist über die vierte Anschlussseite 55.3 des dritten passiven Armmoduls 30.3 der Roboterarm 20 mit einer elektrischen Energiequelle 52 leistungstechnisch elektrisch und mit einem Datennetzwerk 53 datentechnisch verbunden.

Eine zweite Anschlussseite 45.1 des ersten aktiven Armmoduls 25.1 ist mit einer ersten Anschlussseite 40.2 des zweiten aktiven Armmoduls 25.2 verbunden. Zwischen einer zweiten Anschlussseite 45.2 des zweiten aktiven Armmoduls 25.2 und einer zweiten Anschlussseite 45.3 des dritten aktiven Armmoduls 25.3 ist das erste passive Armmodul 30.1 angeordnet, wobei eine vierte Anschlussseite 55.1 des ersten passiven Armmoduls 30.1 mit der zweiten Anschlussseite 45.2 des zweiten aktiven Armmoduls 25.2 an einem Ende und am anderen Ende eine weitere vierte Anschlussseite 55.1 des ersten passiven Armmoduls 30.1 mit einer zweiten Anschlussseite 45.3 des dritten aktiven Armmoduls 25.3 verbunden ist. In der Ausführungsform sind somit beispielhaft beide Anschlussseiten des ersten passiven Armmoduls 30.1 als vierte Anschlussseiten 55.1 des ersten passiven Armmoduls 30.1 und somit korrespondierend und/oder komplementär zu der zweiten Anschlussseite 45.2 des zweiten aktiven Armmoduls 25.2 und der zweiten Anschlussseite 45.3 des dritten aktiven Armmoduls 25.3 ausgebildet. Dadurch kann die zweite Anschlussseite 45.2 des zweiten aktiven Armmoduls 25.2 zu der zweiten Anschlussseite 45.3 des dritten aktiven Armmoduls 25.3 auf einfache Weise beabstandet angeordnet sein und eine vordefinierte Gestaltung des Roboterarms 20 auf einfache Weise umgesetzt werden. Beispielhaft ist in Figur 1 eine erste Anschlussseite 40.3 des dritten aktiven Armmoduls 25.3 mit einer zweiten Anschlussseite 45.4 eines vierten aktiven Armmoduls 25.4 verbunden.

Ein zweites passives Armmodul 30.2 ist beispielhaft unterschiedlich in dem Modulbaukasten zu dem ersten passiven Armmodul 30.1 ausgebildet. In Axialrichtung des zweiten passiven Armmoduls 30.2 ist das zweite passive Armmodul 30.2 kürzer als das erste passive Armmodul 30.1 ausgebildet. Ferner ist eine dritte Anschlussseite 50.2 des zweiten passiven Armmoduls 30.2 identisch zu der zweiten Anschlussseite 45.4 des vierten aktiven Armmoduls 25.4 und eine vierte Anschlussseite 55.2 des zweiten passiven Armmoduls 30.2 korrespondierend und/oder komplementär zu der zweiten Anschlussseite 45.5 des fünften aktiven Armmoduls 25.5 und somit identisch zu der ersten Anschlussseite 40.5 des fünften aktiven Armmoduls 25.5 ausgebildet. Somit weist im Unterschied zu dem ersten passiven Armmodul 30.1 das zweite passive Armmodul 30.2 an seinen Enden jeweils die dritte Anschlussseite 50.2 und die vierte Anschlussseite 55.2 des zweiten passiven Armmoduls 30.2 auf, die zueinander unterschiedlich sind.

An der ersten Anschlussseite 40.5 des fünften aktiven Armmoduls 25.5 ist das fünfte aktive Armmodul 25.5 mit einer zweiten Anschlussseite 45.6 des sechsten aktiven Armmoduls 25.6 verbunden. Eine erste Anschlussseite 40.6 des sechsten aktiven Armmoduls 25.6 ist mit dem Endeffektor verbunden.

Über die Armmodule 18 und deren ersten bis vierten Anschlussseiten 40, 45, 50, 55 wird der Endeffektor wie im Weiteren noch ausführlich beschrieben mit dem Fluid 51 versorgt und ist mit der elektrischen Energiequelle 52 elektrisch und mit dem Datennetzwerk 53 datentechnisch verbunden. Ebenso sind die aktiven und passiven Armmodule 25, 30 über ihre ersten bis vierten Anschlussseiten 40, 45, 50, 55 mit dem Datennetzwerk 53, beispielsweise mit einem Feldbus oder einem EtherCAT-Netzwerk, datentechnisch und mit der elektrischen Energiequelle 52 leistungstechnisch verbunden.

Jedes der aktiven Armmodule 25 weist ein erstes Gehäuse 60 auf, wobei jedes der ersten Gehäuse 60 jeweils einen ersten Gehäuseinnenraum 65 innenseitig begrenzt. An einem Ende des ersten Gehäuses 60 ist jeweils die erste Anschlussseite 40 angeordnet. Die erste Anschlussseite 40 ist drehbar um die Rotationsachse Raₙ gegenüber dem ersten Gehäuse 60 gelagert und wird steuerbar durch die Antriebseinrichtung des jeweiligen aktiven Armmoduls 25 angetrieben. Die zweite Anschlussseite 45 ist beispielsweise geneigt, vorzugsweise senkrecht gegenüber der ersten Anschlussseite 40 ausgerichtet und drehfest mit dem ersten Gehäuse 60 verbunden. Im ersten Gehäuseinnenraum 65 sind Mittel zur fluidischen, elektrischen und datentechnischen Verbindung der ersten Anschlussseite 40 mit der zweiten Anschlussseite 45 angeordnet, auf die detailliert an späterer Stelle eingegangen wird. Dabei wird unter einer fluidischen Verbindung im Weiten verstanden, dass das Mittel zum Transport und/oder Führung und/oder Austausch des Fluids 51 ausgebildet ist.

Bei Aktivierung der Antriebseinrichtung des aktiven Armmoduls 25 verdreht die Antriebseinrichtung die erste Anschlussseite 40 relativ zum ersten Gehäuse 60. Je nach Ausgestaltung des Roboterarms 20 verschwenkt die Antriebseinrichtung somit das aktive Armmodul 25 mit Ausnahme der eigenen ersten Anschlussseite 40 um die zugeordnete Rotationsachse Raₙ oder nur die erste Anschlussseite 40 um die zugeordnete Rotationsache Raₙ.

In Figur 1 verschwenkt beispielsweise die Antriebseinrichtung des ersten aktiven Armmoduls 25.1 das erste aktive Armmodul 25.1 und die an der zweiten Anschlussseite 45.1 des ersten aktiven Armmoduls 25.1 weiter befestigten Armmodule 18 und den Endeffektor um die erste Rotationsachse Ra₁. Das sechste aktive Armmodul 25.6 ist beispielhaft gegenüber dem ersten aktiven Armmodul 25.1 identisch ausgerichtet montiert. Die Antriebseinrichtung des sechsten aktiven Armmoduls 25.6 treibt beispielsweise die erste Anschlussseite 40.6 an und rotiert den an der ersten Anschlussseite 40.6 des sechsten aktiven Armmoduls 25.6 befestigten Endeffektor. Das erste Gehäuse 60 und die zweite Anschlussseite 45.6 des sechsten aktiven Armmoduls 25.6 sind dabei ortsfest.

Bei dem in Figur 1 gezeigten Roboterarm 20 ist die erste Rotationsachse Ra₁ beispielhaft nicht beschränkt, d.h. dass der Roboterarm 10 dauerhaft in die gleiche Umfangsrichtung Ura, rotiert werden kann. Dadurch kann mittels der in Figur 1 gezeigten Armmodule 18 ein beliebig ausgebildeter Roboterarm 20 ausgebildet werden, der zahlreiche gängigen Kinematiken abbilden kann.

Es ist natürlich möglich, die jeweilige Rotationsachse Raₙ auch nur als eine Schwenkachse auszubilden, d. h. eine Bewegung des betreffenden aktiven Armmoduls 25 ist auf einen bestimmten Winkel beschränkt, wie z. B. auf Winkel kleiner als: 720°, 540°, 360°, 270°, 180°, 90° oder 45°. In Figur 1 ist vorzugweise beispielsweise die zweite Rotationsachse Ra₂ auf einen vordefinierten Winkel von beispielsweise 180° beschränkt, um ein Anschlagen des Roboterarms 20 an der Roboterbasis 15 zu verhindern. Auch kann eine Beschränkung der Bewegung der aktiven Armmodule 25 dahingehend erfolgen, dass die Armmodule 18 nicht aneinander kollidieren. Die Beschränkung kann mechanisch oder steuertechnisch, insbesondere softwaretechnisch, erfolgen.

Die passiven Armmodule 30 weisen jeweils ein zweites Gehäuse 70 auf, wobei das zweite Gehäuse 70 hohlkörperartig ausgebildet ist und sich entlang der Längsachse Laₙ in Axialrichtung Arpₙ erstreckt. In Figur 1 ist beispielhaft das zweite Gehäuse 70 kegelstumpfartig mit einem kreisförmigen Querschnitt ausgebildet. Die dritte Anschlussseite 50 des passiven Armmoduls 30 ist drehfest mit dem zweiten Gehäuse 70 an einem stirnseitigen Ende des zweiten Gehäuses 70 angeordnet und drehfest mit dem zweiten Gehäuse 70 verbunden. An einem anderen stirnseitigen Ende des zweiten Gehäuses 70 ist die vierte Anschlussseite 55 des passiven Armmoduls 30 angeordnet und drehfest mit dem zweiten Gehäuse 70 verbunden. Dabei weist durch die hohlkörperartige Ausgestaltung des zweiten Gehäuses 70 das zweite Gehäuse 70 eine besonders hohe Biege- und Torsionssteifigkeit auf, sodass das passive Armmodul 30 eine hohe Last übertragen kann.

Im Modulbaukasten kann das Armmodul 18 unterschiedliche Größen aufweisen. Insbesondere kann das erste oder zweite Gehäuse 60, 70 verschiedene Längen und/oder unterschiedliche Querschnittsflächen der ersten bis vierten Anschlussseiten 40, 45, 50, 55 aufweisen, um so eine gewünschte geometrische Ausgestaltung des Roboterarms 20 bei der Kombination der Armmodule 18 aus dem Modulbaukasten auf einfache Weise zu erhalten.

Der Modulbaukasten kann dabei derart gestaltet sein, dass die Armmodule 18 jeweils unterschiedlichen Baugruppen angehören, die unterschiedliche geometrische Ausgestaltungen aufweisen, jedoch funktionell identisch zueinander aufgebaut sind.

In der Ausführungsform sind das erste aktive Armmodul 25.1 und das zweite aktive Armmodul 25.2 identisch ausgebildet und weisen in konstruktiver Ausgestaltung die gleiche geometrische Ausgestaltung auf. In Figur 1 gehören das erste aktive Armmodul 25.1 und das zweite aktive Armmodul 25.2 zu einer ersten Baugruppe, die geometrisch die größte Ausgestaltung und die größte Erstreckung aufweist.

Das dritte aktive Armmodul 25.3 und das vierte aktive Armmodul 25.4 sind geometrisch in der konstruktiven Ausgestaltung kleiner ausgebildet als das erste und zweite aktive Armmodul 25.1, 25.2, damit Momente und Kräfte für das erste und zweite aktive Armmodul 25.1 und 25.2 reduziert sind. Sie gehören einer zweiten Baugruppe an. Ebenso sind das fünfte aktive Armmodul 25.5 und das sechste aktive Armmodul 25.6 einer dritten Baugruppe zugehörig, die die kleinste Ausgestaltung aufweist. Dadurch, dass die Armmodule 18 mit zunehmendem Abstand von der Roboterbasis 15 kleineren Baugruppen zugehören, wird das an der Roboterbasis 15 angeschlossene passive Armmodul 30, in der Ausführungsform das dritte passive Armmodul 30.3, mechanisch entlastet.

Die oben beschriebene Ausgestaltung des Modulbaukastens hat den Vorteil, dass auf einfache Weise mittels der einzelnen aktiven Armmodule 25 und gegebenenfalls mindestens einem passiven Armmodul 30 ein mehrachsiger Roboterarm 20 individuell auf die Bedürfnisse aus den aktiven bzw. passiven Armmodulen 25, 30 des Modulbaukastens maßgeschneidert zusammengestellt werden kann.

Durch die Fertigung der Armmodule 18 unabhängig von dem Roboterarm 20 kann der in Figur 1 gezeigte Industrieroboter 10 in besonders kurzer Zeit (innerhalb weniger Minuten) montiert werden. Auch kann nach Fertigstellung des Industrieroboters 10 der Industrieroboter 10 durch weitere (Arm-)Module des Modulbaukastens zur Anpassung des Industrieroboters 10 an eine andere Aufgabe flexibel angepasst und gegebenenfalls erweitert oder reduziert werden. So kann ein bestehender vier Rotationsachsen Raₙ aufweisender Roboterarm (nicht in Figur 1 gezeigt) durch zwei zusätzlich (gegebenenfalls nachträglich) zwischen dem Endeffektor und den bestehenden Armmodulen 18 montierte aktive Armmodule 25, beispielsweise auf den in Figur 1 gezeigten Industrieroboter 10, umgebaut werden.

Ferner kann auf die Anordnung von Leitungen, Kabeln oder anderen Verbindungsmitteln außenseitig an dem Industrieroboter 10 durch die innenseitige Führung des Fluids 51, der elektrischen Energie und die datentechnische Verbindung verzichtet werden, sodass eine ungewollte Beschädigung des Industrieroboters 10 vermieden werden kann.

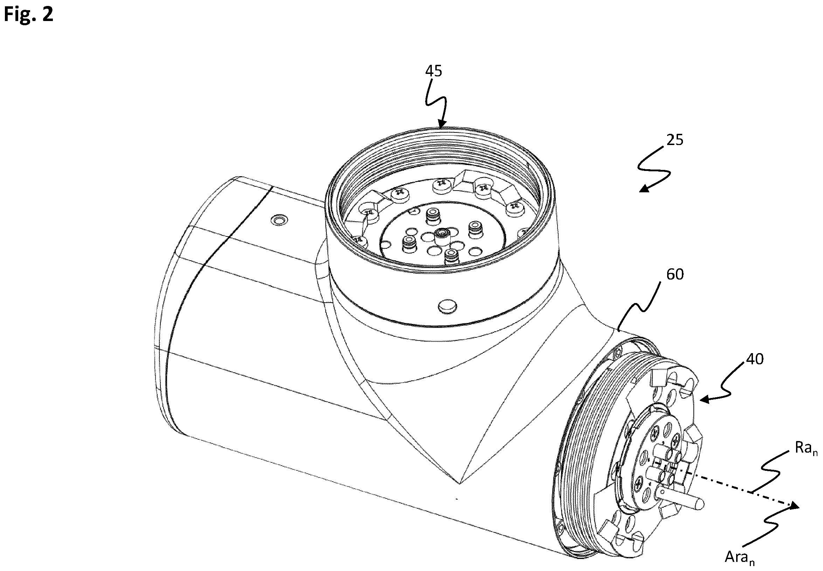

Figur 2 zeigt eine perspektivische Darstellung des in Figur 1 gezeigten aktiven Armmoduls 25 gemäß einer ersten Ausführungsform.

Das aktive Armmodul 25 ist auch über die Baugruppen hinweg jeweils identisch aufgebaut, wobei jedoch abweichend dadurch nur die geometrischen Erstreckungen der einzelnen aktiven Armmodule 25 verändert sind. Mit anderen Worten sind die aktiven J-förmig ausgebildeten aktiven Armmodule 25 der unterschiedlichen Baugruppen gegenüber einander skaliert ausgebildet.

In der Ausführungsform ist die erste Anschlussseite 40 in einer Rotationsebene senkrecht zu der Rotationsachse Raₙ angeordnet. Die zweite Anschlussseite 45 ist radial außen zu der Rotationsachse Raₙ angeordnet und geneigt, vorzugsweise senkrecht, zu der ersten Anschlussseite 40 ausgerichtet.

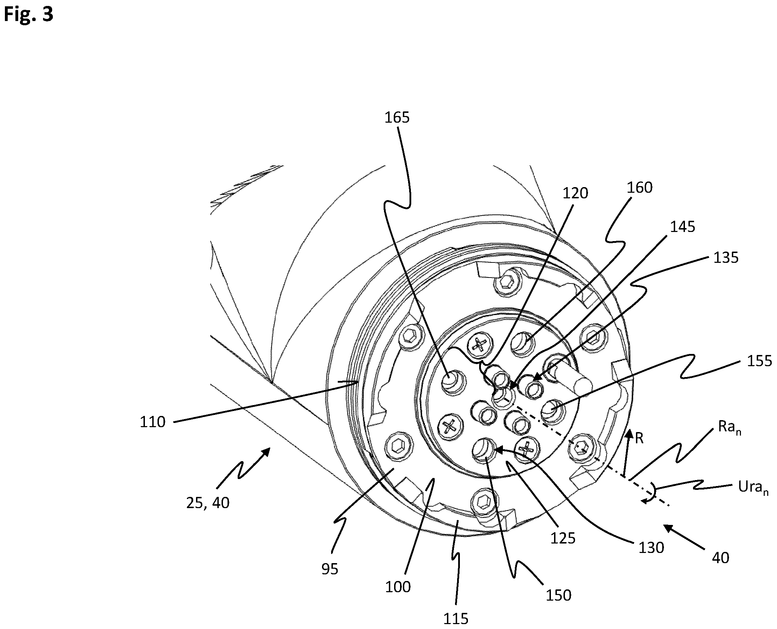

Figur 3 zeigt eine vergrößerte perspektivische Ansicht auf die erste Anschlussseite 40 des in den Figuren 1 und 2 gezeigten aktiven Armmoduls 25.

Die erste Anschlussseite 40 weist eine Anschlussplatte 95 auf, wobei die Anschlussplatte 95 sich im Wesentlichen (in ihrer Haupterstreckung) in einer Rotationsebene senkrecht zur Rotationsachse Raₙ erstreckt. Die Anschlussplatte 95 weist eine erste Stirnseite 100 auf. Die Anschlussplatte 95 weist ein Außengewinde 110 auf. Radial außen angrenzend an das Außengewinde 110 ist an der ersten Stirnseite 100 eine erste Stirnverzahnung 115 angeordnet, wobei die erste Stirnverzahnung 115 beispielsweise als Hirth-Verzahnung ausgebildet ist.

Radial innenseitig weist die Anschlussplatte 95 einen Anschlussabschnitt 120 auf. Der Anschlussabschnitt 120 ist beabstandet in Radialrichtung Rraₙ zu der ersten Stirnverzahnung 115 angeordnet. Der Anschlussabschnitt 120 weist eine zweite Stirnseite 125 auf, wobei die zweite Stirnseite 125 parallel zu der ersten Stirnseite 100 angeordnet ist. Rückseitig liegt der Anschlussabschnitt 120 an der ersten Stirnseite 100 an und ist mechanisch mit der Anschlussplatte 95 verbunden.

Die erste Anschlussseite 40 weist an dem Anschlussabschnitt 120 eine erste Fluidkontakteinrichtung 130, eine erste Leistungskontakteinrichtung 135 und eine erste Kontakteinrichtung 145 zur Datenverbindung auf.

Die erste Fluidkontakteinrichtung 130 ist konzentrisch um die Rotationsachse Raₙ angeordnet. Radial innenseitig zu der ersten Fluidkontakteinrichtung 130 ist die erste Leistungskontakteinrichtung 135 angeordnet. Die erste Fluidkontakteinrichtung 130 weist in der Ausführungsform einen ersten Fluidkontakt 150 auf. Der erste Fluidkontakt 150 ist als Buchse bzw. Weibchen ausgebildet. In der beispielhaften Ausführungsform weist die erste Fluidkontakteinrichtung 130 neben dem ersten Fluidkontakt 150 auch noch einen zweiten bis vierten Fluidkontakt 155, 160, 165 auf.

Jeder der ersten bis vierten Fluidkontakte 150, 155, 160, 165 ist von den anderen ersten bis vierten Fluidkontakten 150, 155, 160, 165 fluidisch getrennt. Dadurch wird ein Austausch des Fluids 51 zwischen dem ersten bis vierten Fluidkontakten 150, 155, 160, 165 verhindert. Die ersten bis vierten Fluidkontakte 150, 155, 160, 165 sind beispielhaft identisch zueinander ausgebildet. In Umfangsrichtung Uraₙ sind die ersten bis vierten Fluidkontakte 150, 155, 160, 165 um 90° zueinander beispielhaft versetzt angeordnet und weisen beispielhaft den gleichen Abstand zu der Rotationsachse Raₙ auf.

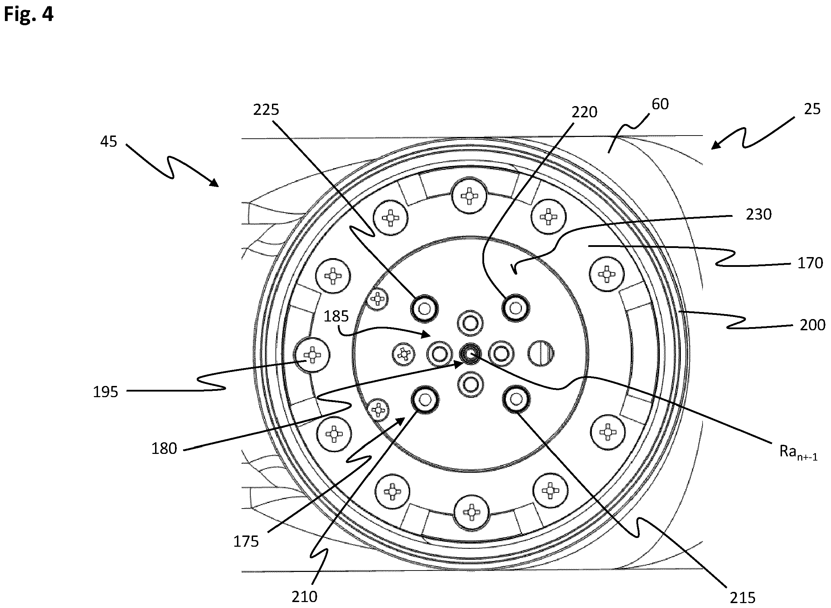

Figur 4 zeigt eine Draufsicht auf die zweite Anschlussseite 45 des in den Figuren 1 bis 3 gezeigten aktiven Armmoduls 25.

Die zweite Anschlussseite 45 weist eine zweite Anschlussplatte 170, eine zweite Fluidkontakteinrichtung 175, eine zweite Kontakteinrichtung 180 und eine zweite Leistungskontakteinrichtung 185 auf.

Die zweite Anschlussplatte 170 ist beispielhaft parallel zu der Rotationsachse ausgerichtet. Die zweite Anschlussplatte 170 weist im Wesentlichen in der Draufsicht eine kreisförmige Ausgestaltung auf. An der zweiten Anschlussplatte 170 sind die zweite Fluidkontakteinrichtung 175, die zweite Kontakteinrichtung 180 und die zweite Leistungskontakteinrichtung 185 befestigt. Die zweite Fluidkontakteinrichtung 175, die zweite Kontakteinrichtung 180 und die zweite Leistungskontakteinrichtung 185 erstrecken sich längs bzw. parallel zu einer weiteren Rotationsachse Raₙ₊₋₁, die senkrecht zu der Rotationsachse ausgerichtet ist. Die zweite Anschlussplatte 170 ist mittels eines Befestigungsmittels 195, vorzugsweise mehrere in Umfangsrichtung bezogen auf die weitere Rotationsachse Raₙ₊₋₁ versetzt zueinander angeordnete Befestigungsmittel 195, drehfest mit dem ersten Gehäuse 60 verbunden.

Umfangsseitig wird die zweite Anschlussplatte 170 durch einen Befestigungsring 200 des aktiven Armmoduls 25 umgriffen. Der Befestigungsring 200 weist ein Innengewinde auf, das korrespondierend oder zumindest komplementär zu dem Außengewinde der ersten Anschlussseite ausgebildet ist. Der Befestigungsring 200 ist axial fest gegenüber dem ersten Gehäuse 60 angeordnet. Der Befestigungsring 200 ist jedoch um die weitere Rotationsachse Raₙ₊₋₁ gegenüber dem ersten Gehäuse 60 verdrehbar.

Die zweite Fluidkontakteinrichtung 175 weist einen fünften Fluidkontakt 210 auf. Zusätzlich kann die zweite Fluidkontakteinrichtung 175 neben dem fünften Fluidkontakt 210 noch einen sechsten bis achten Fluidkontakt 215, 220, 225 aufweisen. Dadurch weist die zweite Fluidkontakteinrichtung 175 die gleiche Anzahl von Fluidkontakten 210, 215, 220, 225 auf wie die erste Fluidkontakteinrichtung. Dabei sind die erste Fluidkontakteinrichtung und die zweite Fluidkontakteinrichtung 175 komplementär zueinander angeordnet. Die fünften bis achten Fluidkontakte 210, 215, 220, 225 sind in der Ausführungsform beispielhaft identisch zueinander ausgebildet. Dabei ist der fünfte Fluidkontakt 210 rohrförmig ausgebildet. Der fünfte Fluidkontakt 210 erstreckt sich parallel zu der weiteren Rotationsachse Raₙ₊₋₁. Dabei ist mit einem festen Ende der fünfte Fluidkontakt 210 mit einer dritten Stirnseite 230 der zweiten Anschlussplatte 170 verbunden. Umfangsseitig kann der fünfte Fluidkontakt 210 gedichtet sein.

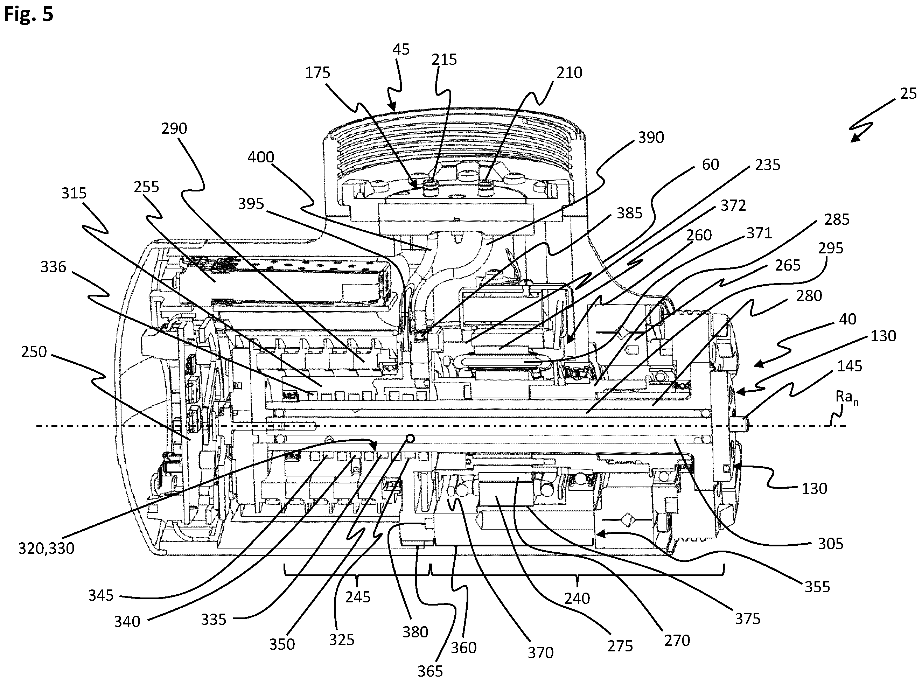

Figur 5 zeigt einen perspektivischen Längsschnitt durch das in Figur 2 gezeigte aktive Armmodul 25. Zur besseren Darstellung der einzelnen Bauelemente sind die Schnittflächen nicht schraffiert dargestellt.

Das aktive Armmodul 25 weist in einem Innenraum 235 des ersten Gehäuses 60 eine Antriebseinrichtung 240, einen Drehübertrager 245, ein Steuergerät 250 und wenigstens einen Umsetzer 255 auf.

Die Antriebseinrichtung 240 weist eine elektrische Maschine 260 und ein Getriebe 265 auf. Die elektrische Maschine 260 weist einen Rotor 270 und einen Stator 275 auf, wobei der Rotor 270 drehbar um die Rotationsachse Raₙ gelagert ist. Der Stator 275 ist drehfest mit dem ersten Gehäuse 60 verbunden.

In der Ausführungsform ist die elektrische Maschine 260 beispielhaft als bürstenloser Gleichstrommotor ausgebildet. Eingangsseitig ist das Getriebe 265 drehfest mit dem Rotor 270 verbunden. Ausgangsseitig ist das Getriebe 265 mit der ersten Anschlussseite 40 drehfest verbunden. Im Betrieb der elektrischen Maschine 260 treibt die elektrische Maschine 260 mit einer Motordrehzahl das Getriebe 265 an. Das Getriebe 265 untersetzt, vorzugsweise mit einem Untersetzungsverhältnis von 1 : 30 bis 1 : 200 die Motordrehzahl auf eine Abtriebsdrehzahl. Das Getriebe 265 treibt die erste Anschlussseite 40 und hierbei insbesondere die erste Anschlussplatte 95 an. Das Getriebe 265 ist axial zwischen der elektrischen Maschine 260 und der ersten Anschlussseite 40 bezogen auf die Rotationsachse Raₙ angeordnet.

Axial auf einer der ersten Anschlussseite 40 abgewandten Seite der Antriebseinrichtung 240 ist der Drehübertrager 245 angeordnet. In axialer Richtung bezogen auf die Rotationsachse Raₙ ist das Steuergerät 250 am gegenüberliegenden Ende des ersten Gehäuses 60 zu der ersten Anschlussseite 40 angeordnet. In Figur 5 oberseitig des Drehübertragers 245, also auf einer der zweiten Anschlussseite 45 zugewandten Seite, ist der Umsetzer 255 angeordnet.

Die erste Anschlussseite 40 weist ferner eine erste Hohlwelle 280 auf. Die Antriebseinrichtung 240 weist eine zweite Hohlwelle 285 auf. Die zweite Hohlwelle 285 verbindet das Getriebe 265 mit dem Rotor 270. Die zweite Hohlwelle 285 rotiert somit mit der Motordrehzahl und die erste Hohlwelle 280 mit der Abtriebsdrehzahl. Die zweite Hohlwelle 285 ist in axialer Richtung kürzer ausgebildet als die erste Hohlwelle 280. Die erste Hohlwelle 280 durchgreift die zweite Hohlwelle 285 sowie die Antriebseinrichtung 240 und den Drehübertrager 245. Zentral ist in der ersten Hohlwelle 280 zur datentechnischen Verbindung des Steuergeräts 250 mit der ersten Kontakteinrichtung 145 in der ersten Hohlwelle 280 ein Lichtwellenleiter (in Figur 5 nicht dargestellt) angeordnet, der datentechnisch mit dem Umsetzer 255 verbunden ist. Der Umsetzer 255 kann seinerseits datentechnisch mit dem Steuergerät 250 verbunden sein. Ferner kann der Umsetzer 255 mittels eines nicht dargestellten zweiten Lichtwellenleiters mit der zweiten Kontakteinrichtung 180 der zweiten Anschlussseite 45 datentechnisch verbunden sein. Der Umsetzer 255 ist ausgebildet, das mittels des ersten Lichtwellenleiters übertragene optische Signal in ein elektrisches Datensignal umzusetzen und dem Steuergerät 250 bereitzustellen. Auch kann mittels des Umsetzers 255 ein von dem Steuergerät 250 bereitgestelltes weiteres elektrisches Datensignal durch den Umsetzer 255 in ein optisches Datensignal umgewandelt werden und an die erste und/oder zweite Kontakteinrichtung 145, 180 übertragen werden. Das Steuergerät 250 und der Umsetzer 255 können auch integriert ausgebildet sein. Auch eine andere Ausgestaltung der Datenübertragung zwischen der ersten Kontakteinrichtung 145 und der zweiten Kontakteinrichtung 180 kann vorgesehen sein.

Der Drehübertrager 245 weist wenigstens eine Schleifringeinheit 290 auf. Vorzugsweise weist der Drehübertrager 245 eine Mehrzahl von axial nebeneinander angeordneten Schleifringeinheiten 290 auf. Jeweils ein Leistungskontakt der ersten Leistungskontakteinrichtung ist elektrisch mittels einer in der ersten Hohlwelle 280 angeordneten elektrischen Verbindung mit einer zugeordneten Schleifringeinheit 290 elektrisch verbunden. Ausgangsseitig ist die Schleifringeinheit 290 elektrisch mit der zweiten Leistungskontakteinrichtung der zweiten Anschlussseite 45 verbunden. Die Schleifringeinheit 290 stellt eine Übertragung der elektrischen Leistung, die zwischen der ersten Leistungskontakteinrichtung und der zweiten Leistungskontakteinrichtung ausgetauscht wird, auch bei Rotation der ersten Anschlussseite 40 um die Rotationsachse Raₙ sicher.

Das Steuergerät 250 ist elektrisch über eine in Figur 5 nicht dargestellte dritte elektrische Verbindung über die Schleifringeinheit 290 mit der ersten Leistungskontakteinrichtung und/oder der zweiten Leistungskontakteinrichtung elektrisch verbunden.

Für den ersten bis vierten Fluidkontakt ist jeweils in der ersten Hohlwelle 280 ein erster bis vierter Wellenfluidkanal 295, 305 angeordnet, die beispielhaft in Umfangsrichtung um 90° versetzt angeordnet sind. Jeder der ersten bis vierten Wellenfluidkanäle 295, 305 ist fluidisch mit dem zugeordneten Fluidkontakt fluidisch verbunden. Dabei verläuft der erste bis vierte Wellenfluidkanal 295, 305 jeweils im Wesentlichen entlang der Rotationsachse Raₙ mit radialem Versatz zu der Rotationsachse Raₙ. Der jeweilige erste bis vierte Wellenfluidkanal 295, 305 mündet an dem jeweils zugeordneten ersten bis vierten Fluidkontakt.

Der Drehübertrager 245 weist ein drittes Gehäuse 315 auf. Das dritte Gehäuse 315 weist eine bohrungsartig ausgebildete Aufnahme 320 auf, wobei die erste Hohlwelle 280 die Aufnahme 320 durchgreift. Das dritte Gehäuse 315 weist wenigstens einen ersten nutförmig ausgebildeten Abnehmerkanal 325 auf, wobei der erste Abnehmerkanal 325 ringförmig innenseitig an einer ersten inneren Umfangsseite 330 der Aufnahme 320 angeordnet ist. Zusätzlich kann das dritte Gehäuse 315 auch noch einen zweiten bis vieren Abnehmerkanal 335, 340, 345 aufweisen, die axial versetzt zueinander bezogen auf die Rotationsachse Raₙ angeordnet sind. Die Abnehmerkanäle 325, 335, 340, 345 sind jeweils mittels einer Axialdichtung 336 gegenübereinander und gegenüber des Innenraums 235 fluidisch gedichtet. Dadurch wird ein Eintritt des Fluids 51 in den Innenraum 235 verhindert. Die Schleifringeinheit 290 und wenigstens einer der Abnehmerkanäle 325, 335, 340, 345 können radial überlappend angeordnet sein. In der Ausführungsform umgreift die Schleifringeinheit 290 abschnittsweise das dritte Gehäuse 315.

Zur fluidischen Verbindung des dritten Wellenfluidkanals 305 mit dem ersten Abnehmerkanal 325 ist in der ersten Hohlwelle 280 axial auf Höhe des ersten Abnehmerkanals 325 eine erste Bohrung 350 angeordnet, die als Durchgangsöffnung in der ersten Hohlwelle 280 ausgebildet ist und sich von radial außen bis radial nach innen zum dritten Wellenfluidkanal 305 erstreckt.

Ebenso können der zweite bis vierte Abnehmerkanal 335, 340, 345 mit jeweils einer in der ersten Hohlwelle 280 angeordneten zweiten bis vierten Bohrung fluidisch mit dem jeweils zugeordneten ersten bis vierten Wellenfluidkanal 295 verbunden sein. Die zweite bis vierte Bohrung sind in Figur 5 verdeckt.

Das aktive Armmodul 25 weist einen Wärmetauscher 355 auf. In Axialrichtung bezogen auf die Rotationsachse Raₙ ist der Wärmetauscher 355 geometrisch zwischen dem Getriebe 265 und dem Drehübertrager 245 angeordnet. Der Wärmetauscher 355 weist einen Wärmetauscherfluidkanal 380 auf, wobei der Wärmetauscherfluidkanal 380 fluidisch zwischen dem Drehübertrager 245 und der zweiten Fluidkontakteinrichtung 175 angeordnet ist. In der Ausführungsform ist ausschließlich ein einziger Wärmetauscherfluidkanal 380 vorgesehen. Auch kann der Wärmetauscher 355 mehrere Wärmetauscherfluidkanäle 380 aufweisen. Der Wärmetauscherfluidkanal 380 mündet an einer Seite in dem ersten Abnehmerkanal 325.

Der Wärmetauscher 355 weist beispielhaft einen ersten Wärmetauscherabschnitt 360 und einen zweiten Wärmetauscherabschnitt 365 auf. Der erste Wärmetauscherabschnitt 360 ist ringförmig oder hohlzylindrisch ausgebildet und kann einstückig und materialeinheitlich mit dem ersten Gehäuse 60 ausgebildet sein. Alternativ können das erste Gehäuse 60 und der erste Wärmetauscherabschnitt 360 zweiteilig ausgebildet sein, wobei dann der erste Wärmetauscherabschnitt 360 innenseitig am ersten Gehäuse 60 beispielsweise anliegt und am ersten Gehäuse 60 befestigt ist.

Der erste Wärmetauscherabschnitt 360 weist beispielhaft im Wesentlichen eine ringförmige oder hohlzylindrische Grundstruktur auf, wobei an einer zweiten inneren Umfangsseite 370 des ersten Wärmetauscherabschnitts 360 der erste Wärmetauscherabschnitt 360 gestuft ausgebildet sein kann. Die Stufung der zweiten inneren Umfangsseite 370 dient zur Schaffung von radialem Bauraum für Wicklungen 371 des Stators 275. Der Wärmetauschers 355 liegt an der zweiten inneren Umfangsseite 370 an dem Stator 275 und ist thermisch mit dem Stator 275 gekoppelt.

Innenseitig liegt an der zweiten inneren Umfangsseite 370 der Stator 275 mit einer ersten äußeren Umfangsseite 375 des Statorkerns 372 flächig an, sodass der Stator 275 thermisch mit dem ersten Wärmetauscherabschnitt 360 gekoppelt ist. Dabei kann der Statorkern 372 zum verbesserten flächigen Anliegen eingepresst in den ersten Wärmetauscherabschnitt 360 sein. Auch kann zusätzlich zur verbesserten thermischen Kopplung zwischen der ersten äußeren Umfangsseite 375 und dem ersten Wärmetauscherabschnitt 360 ein Wärmeleitmittel, beispielsweise eine Wärmeleitpaste, insbesondere beispielsweise eine Silberpaste, vorgesehen sein.

Der zweite Wärmetauscherabschnitt 365 ist in Figur 5 beispielhaft einstückig und materialeinheitlich mit dem dritten Gehäuse 315 des Drehübertragers 245 ausgebildet. Alternativ wäre es auch möglich, dass der zweite Wärmetauscherabschnitt 365 und das dritte Gehäuse 315 mehrteilig ausgebildet sind.

Sowohl der erste Wärmetauscherabschnitt 360 als auch der zweite Wärmetauscherabschnitt 365 weisen ein wärmeleitfähiges Material, insbesondere ein Metall, besonders vorteilhafterweise eine Aluminiumlegierung, auf.

Der Drehübertrager 245 weist wenigstens einen ersten Anschluss 385 auf, wobei der erste Anschluss 385 mittels einer ersten Fluidleitung 390 mit dem fünften Fluidkontakt 210 fluidisch verbunden ist. Zusätzlich weist der Drehübertrager 245 ferner einen zweiten Anschluss 395 bis vierten Anschluss auf. In Figur 5 ist nur der zweite Anschluss 395 dargestellt, da sich der dritte und vierte Anschluss vor der Schnittebene befinden. Im Allgemeinen kann gesagt werden, dass die Anzahl der Anschlüsse 385, 395 der Anzahl von Abnehmerkanälen 325, 335, 340, 345 und der Anzahl von Fluidkontakten jeweils der ersten oder zweiten Fluidkontakteinrichtung 130, 175 entspricht. Der Anschluss 385, 395 ist beispielhaft auf der zur zweiten Anschlussseite 45 hin zugewandten Seite angeordnet. Der zweite Anschluss 395 ist analog zum ersten Anschluss 385 mittels einer zweiten Fluidleitung 400 mit dem sechsten Fluidkontakt 215 fluidisch verbunden. Die erste Fluidleitung 390 und/oder die zweite Fluidleitung 400 kann beispielsweise als Schlauchleitung oder als metallische Rohrleitung ausgebildet sein.

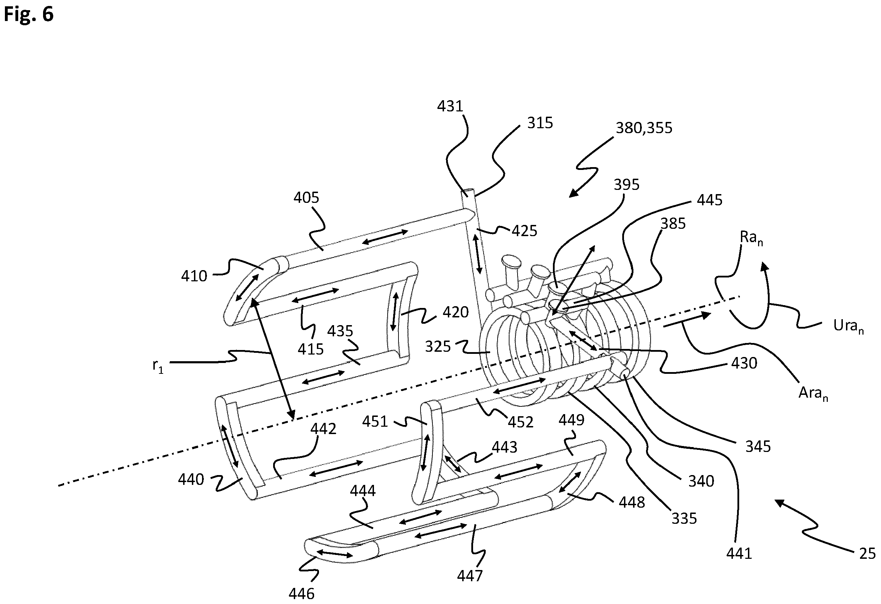

Figur 6 zeigt eine perspektivische Darstellung des Wärmetauscherfluidkanals 380 des Wärmetauschers 355 in einer im Verhältnis zur Figur 5 gedrehten Ansicht.

In Figur 6 sind aus Übersichtlichkeitsgründen im Wesentlichen nur wenige Komponenten des aktiven Armmoduls 25 dargestellt, um die Ausgestaltung des Wärmetauscherfluidkanals 380 zu erläutern.

Der Wärmetauscherfluidkanal 380 ist mäanderförmig in Umfangsrichtung Uraₙ um den Stator verlaufend ausgebildet. Diese Ausgestaltung hat den Vorteil, dass der Wärmetauscherfluidkanal 380 besonders einfach und der Wärmetauscher 355 kostengünstig herstellbar ist.

Der Wärmetauscherfluidkanal 380 weist wenigstens einen ersten Kanalabschnitt 405, einen zweiten Kanalabschnitt 410 und einen dritten Kanalabschnitt 415 auf. Zusätzlich kann der Wärmetauscherfluidkanal 380 auch einen vierten bis fünfzehnten Kanalabschnitt 420, 435, 440, 442, 443, 444, 446, 447, 448, 449, 451, 452 sowie, sofern notwendig, einen Zulaufkanalabschnitt 425 und einen Rücklaufkanalabschnitt 430 aufweisen. Auch eine andere Ausgestaltung des Wärmetauscherfluidkanals 380 wäre denkbar. So kann die Anzahl des vierten bis fünfzehnten Kanalabschnitts 420, 435, 440, 442, 443, 444, 446, 447, 448, 449, 451, 452 dahingehend beispielsweise variiert werden, dass der Wärmetauscherfluidkanal sechs bis zehn Windungen aufweist.

Der Zulaufkanalabschnitt 425 kann abschnittsweise in der Ausführungsform als radial von außen nach innen verlaufende Bohrung ausgebildet sein, die im dritten Gehäuse 315 des Drehübertragers 245 und dem zweiten Wärmetauscherabschnitt 365 angeordnet ist. Dabei kann der Zulaufkanalabschnitt 425 tangential zu der Rotationsachse Raₙ verlaufend in dem dritten Gehäuse 315 und dem zweiten Wärmetauscherabschnitt 365 angeordnet sein und innenseitig an dem ersten Abnehmerkanal 325 münden. Außenseitig wird der Zulaufkanalabschnitt 425 mittels eines ersten Verschlussmittels 431 verschlossen. Das erste Verschlussmittel 431 kann beispielsweise eine in den Zulaufkanalabschnitt 425 eingeschraubte Verschlusskappe sein. Radial außenseitig ist der Zulaufkanalabschnitt 425 mit dem ersten Kanalabschnitt 405 fluidisch verbunden.

In der Ausführungsform sind der erste, dritte, fünfte, siebte, neunte, elfte, dreizehnte und fünfzehnte Kanalabschnitte 405, 415, 435, 442, 444, 447, 449, 452 in Umfangsrichtung versetzt zueinander bezogen auf die Rotationsachse Raₙ angeordnet. Dabei weisen der erste, dritte, fünfte, siebte, neunte, elfte, dreizehnte und fünfzehnte Kanalabschnitt 405, 415, 435, 442, 444, 447, 449, 452 beispielhaft den gleichen radialen Abstand r₁ zu der Rotationsachse Raₙ auf. Der erste, dritte, fünfte, siebte, neunte, elfte, dreizehnte und fünfzehnte Kanalabschnitt 405, 415, 435, 442, 444, 447, 449, 452 ist jeweils entlang der Rotationsachse Raₙ, vorzugsweise parallel zu der Rotationsachse Raₙ, verlaufend ausgebildet. Dabei kann der erste, dritte, fünfte, siebte, neunte, elfte, dreizehnte und fünfzehnte Kanalabschnitt 405, 415, 435, 442, 444, 447, 449, 452 mittels eines spanenden Verfahrens oder bereits beispielsweise beim Gießen des ersten Wärmetauscherabschnitts 360 in den ersten Wärmetauscherabschnitt 360 eingebracht werden. Der dritte, fünfte, siebte, neunte, elfte und dreizehnte Kanalabschnitt 405, 415, 435, 442, 444, 447, 449, 452 weisen eine geringere Axialerstreckung in Axialrichtung Araₙ als der erste und fünfzehnte Kanalabschnitt 405, 452 auf.

Auf der zum Zulaufkanalabschnitt 425 gegenüberliegenden Axialseite weist der Wärmetauscherfluidkanal 380 den zweiten Kanalabschnitt 410 auf, wobei der zweite Kanalabschnitt 410 sich in Umfangsrichtung erstreckt. Dabei kann der zweite Kanalabschnitt 410 teilringförmig ausgebildet sein. Der zweite Kanalabschnitt 410 verbindet fluidisch den ersten Kanalabschnitt 405 mit dem dritten Kanalabschnitt 415.

Auf der zum Drehübertrager 245 zugewandten Seite ist der dritte Kanalabschnitt 415 mittels des vierten Kanalabschnitts 420 mit dem fünften Kanalabschnitt 435 verbunden. Der vierte Kanalabschnitt 420 ist beispielhaft teilringförmig ausgebildet und erstreckt sich in Umfangsrichtung. Auf der zum vierten Kanalabschnitt 420 gegenüberliegenden Axialseite (auf der zur ersten Anschlussseite zugewandten Seite) verbindet der sechste Kanalabschnitt 440, der in der Ausführungsform identisch zum zweiten Kanalabschnitt 410 ausgebildet ist, den fünften Kanalabschnitt 435 mit dem siebten Kanalabschnitt 442.

Auf der zum Drehübertrager 245 zugewandten Seite ist der siebte Kanalabschnitt 442 mittels des achten Kanalabschnitts 443, der in der Ausführungsform identisch zum vierten Kanalabschnitt 420 ausgebildet ist, mit dem neunten Kanalabschnitt 444 verbunden. Der achte Kanalabschnitt 443 ist beispielhaft teilringförmig ausgebildet und erstreckt sich in Umfangsrichtung.

Auf der zum achten Kanalabschnitt 443 gegenüberliegenden Axialseite (auf der zur ersten Anschlussseite zugewandten Seite) verbindet der zehnte Kanalabschnitt 446, der in der Ausführungsform beispielhaft identisch zum zweiten Kanalabschnitt 410 ausgebildet ist, den neunten Kanalabschnitt 444 mit dem elften Kanalabschnitt 447.

Auf der zum Drehübertrager 245 zugewandten Seite ist der elfte Kanalabschnitt 447 mittels des zwölften Kanalabschnitts 448, der in der Ausführungsform identisch zum vierten Kanalabschnitt 420 ausgebildet ist, mit dem dreizehnten Kanalabschnitt 449 verbunden. Der zwölfte Kanalabschnitt 448 ist beispielhaft teilringförmig ausgebildet und erstreckt sich in Umfangsrichtung.

Auf der zum Drehübertrager 245 abgewandten Axialseite (auf der zur ersten Anschlussseite zugewandten Seite) verbindet der vierzehnte Kanalabschnitt 451, der in der Ausführungsform identisch zum zweiten Kanalabschnitt 410 ausgebildet ist, den dreizehnten Kanalabschnitt 449 mit dem fünfzehnten Kanalabschnitt 452. Dabei weisen der zweite, sechste, zehnte und vierzehnte Kanalabschnitt 410, 440, 446, 451 den gleichen radialen Abstand r₁ zu der Rotationsachse Raₙ auf und sind in einer gemeinsamen Ebene senkrecht zu der Rotationsachse Raₙ angeordnet. Ebenso weisen der vierte, achte, und zwölfte Kanalabschnitt 420, 443, 448 den gleichen radialen Abstand r₁ zu der Rotationsachse Raₙ auf und sind in einer gemeinsamen weiteren Ebene senkrecht zu der Rotationsachse Raₙ angeordnet. Der fünfzehnte Kanalabschnitt 452 mündet auf der zum Drehübertrager 245 zugewandten Seite in dem Rücklaufkanalabschnitt 430.

Die Anordnung des ersten bis fünfzehnten Kanalabschnitts 405, 410, 415, 420, 435, 440, 442, 443, 444, 446, 447, 448, 449, 451, 452 ist dabei so dimensioniert, dass der Wärmetauscherfluidkanal 380 zumindest 270°, vorzugsweise 330° um die Rotationsachse Raₙ und den Stator mäanderförmig geführt ist. Der fünfzehnte Kanalabschnitt 452 mündet stirnseitig in dem Rücklaufkanalabschnitt 430. Der Rücklaufkanalabschnitt 430 ist tangential zu der Rotationsachse Raₙ ausgerichtet und als Sacklochbohrung beispielhaft ausgeführt. Radial außen ist der Rücklaufkanalabschnitt 430 durch ein zweites Verschlussmittel 441 verschlossen. Das zweite Verschlussmittel 441 kann identisch zu dem ersten Verschlussmittel 431 ausgebildet sein. Radial innen mündet der Rücklaufkanalabschnitt 430 in dem ersten Anschluss 385.

Diese Ausgestaltung hat den Vorteil, dass der Wärmetauscherfluidkanal 380 eine besonders lange Kanallänge zwischen dem ersten Abnehmerkanal 325 und dem ersten Anschluss 385, an dem der Rücklaufkanalabschnitt 430 mündet, in dem Wärmetauscher 355 aufweisen kann. In der Ausführungsform verbindet beispielhaft ausschließlich der Wärmetauscherfluidkanal 380 den ersten Abnehmerkanal 325 mit dem ersten Anschluss 385. Dadurch wird eine Bypassströmung zwischen dem ersten Anschluss 385 und dem ersten Abnehmerkanal 325 vermieden.

Der zweite Abnehmerkanal 335 ist mittels eines kurzen im dritten Gehäuse 315 verlaufenden Verbindungskanals 445 direkt mit dem zweiten Anschluss 395 verbunden. Analog dazu sind auch der dritte und vierte Abnehmerkanal 340, 345 direkt mit dem jeweils zugeordneten Anschluss mittels eines getrennten weiteren Verbindungskanals mit dem zugeordneten dritten bzw. vierten Anschluss verbunden.

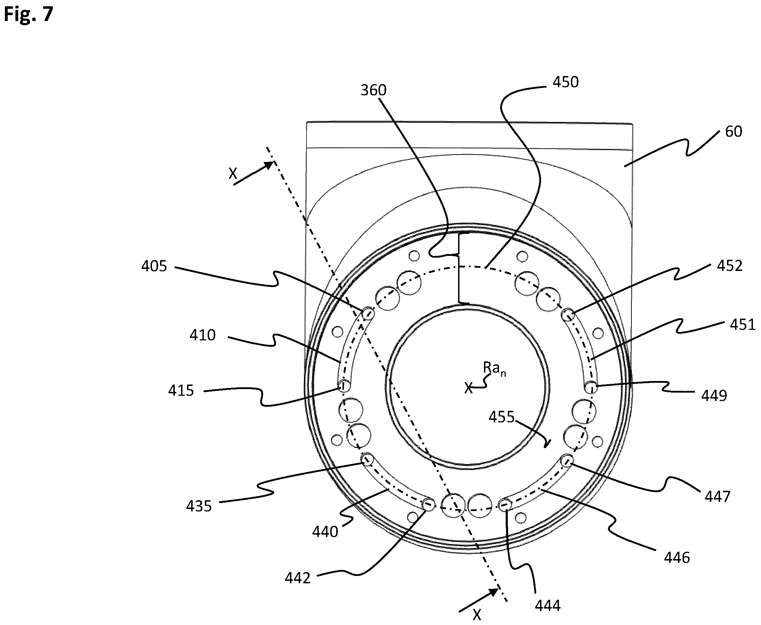

Figur 7 zeigt eine Seitenansicht auf das erste Gehäuse 60 des in den Figuren 2 bis 3 gezeigten aktiven Armmoduls 25 gemäß der ersten Ausführungsform.

Der zweite Kanalabschnitt 410 und der sechste Kanalabschnitt 440 sind auf einer gemeinsamen ersten Kreisbahn 450 um die Rotationsachse Raₙ verlaufend angeordnet. Der erste Kanalabschnitt 405, der dritte Kanalabschnitt 415 und der fünfte Kanalabschnitt 435 sind in regelmäßigen Abständen in Umfangsrichtung um die Rotationsachse Raₙ angeordnet, sodass sich der dritte Kanalabschnitt 410 und der sechste Kanalabschnitt 440 über ein gleiches Winkelsegment der ersten Kreisbahn 450 erstrecken. Dabei können der zweite und/oder sechste Kanalabschnitt 410, 440 bogenförmig ausgebildet sein.

Von besonderem Vorteil ist es, um das erste Gehäuse 60 besonders kostengünstig herzustellen, wenn an einer ersten Wärmetauscherstirnseite 455 des ersten Wärmetauscherabschnitts 360 der zweite und/oder sechste Kanalabschnitt 410, 440 nutförmig ausgebildet ist. Dabei ist der zweite und/oder sechste Kanalabschnitt 410, 440 an der ersten Wärmetauscherstirnseite 455 offen. Die erste Wärmetauscherstirnseite 455 ist senkrecht zu der Rotationsachse Raₙ auf einer der ersten Anschlussseite 40 zugewandten Seite des ersten Wärmetauscherabschnitts 360 angeordnet.

Durch die nutförmige Ausgestaltung des zweiten, sechsten, zehnten und vierzehnten Kanalabschnitts 410, 440, 444, 451 kann der zweite, sechste, zehnte und vierzehnte Kanalabschnitt 410, 440, 444, 451 bereits beim Gießen des ersten Gehäuses 60 bzw. des ersten Wärmetauscherabschnitts 360 mitausgeformt werden. Alternativ kann der zweite und/oder sechste und/oder zehnte und/oder vierzehnte Kanalabschnitt 410, 440, 444, 451 spanend, beispielsweise mit einem Fräsverfahren, in die erste Wärmetauscherstirnseite 455 eingebracht werden. Auch könnte der zweite und/oder sechste und/oder zehnte und/oder vierzehnte Kanalabschnitt 410, 440, 444, 451 auch mitgegossen werden.

Eine Erstreckung in Umfangsrichtung des zweiten Kanalabschnitts 410 ist in Umfangsrichtung so gewählt, dass an den jeweiligen Enden des ersten Kanalabschnitts 410 in Umfangsrichtung jeweils der erste und dritte Kanalabschnitt 405, 415 münden. Ebenso ist eine Erstreckung in Umfangsrichtung des sechsten Kanalabschnitts 440 ist in Umfangsrichtung so gewählt, dass an den jeweiligen Enden des sechsten Kanalabschnitts 440 in Umfangsrichtung jeweils der fünfte und dritte Kanalabschnitt 435, 415 münden. Der zweite Kanalabschnitt 410 und der sechste Kanalabschnitt 440 sind in Umfangsrichtung voneinander getrennt ausgebildet.

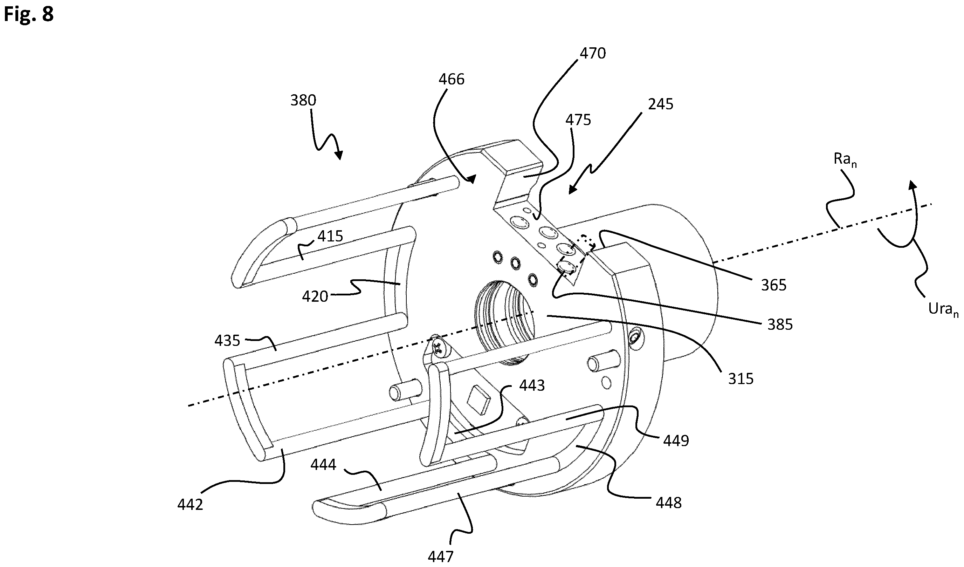

Figur 8 zeigt eine perspektivische Darstellung des Drehübertragers 245 und des Wärmetauscherfluidkanals 380 des in Figur 2 gezeigten aktiven Armmoduls 25.

Der zweite Wärmetauscherabschnitt 365 kann (teil-) ringförmig ausgebildet sein. Der zweite Wärmetauscherabschnitt 365 ist in der Ausführungsform beispielhaft einstückig und materialeinheitlich mit dem dritten Gehäuse 315 des Drehübertragers 245 ausgebildet. Beispielhaft sind der vierte, neunte und zwölfte Kanalabschnitt 420, 443, 448 nutförmig in dem zweiten Wärmetauscherabschnitt 365 ausgebildet und angrenzend an eine zweite Wärmetauscherstirnseite 466 des zweiten Wärmetauscherabschnitts 365 angeordnet. Die zweite Wärmetauscherstirnseite 466 ist senkrecht zu der Rotationsachse Raₙ angeordnet. Die erste Wärmetauscherstirnseite 466 ist der ersten Anschlussseite zugewandt. Der vierte, neunte und zwölfte Kanalabschnitt 420, 443, 448 sind an der zweiten Wärmetauscherstirnseite 466 offen. Der vierte, neunte und zwölfte Kanalabschnitt 420, 443, 448 kann auf einer zweiten Kreisbahn um die Rotationsachse Raₙ verlaufend angeordnet sein. Dabei können die erste Kreisbahn 450 (vgl. Figur 7) und die zweite Kreisbahn den gleichen Durchmesser aufweisen.

In Umfangsrichtung ist der vierte Kanalabschnitt 420 nur so breit gewählt, dass der dritte und der fünfte Kanalabschnitt 415, 435 jeweils an einem Ende jeweils eines vierten Kanalabschnitts 420 münden. In analoger Weise sind der neunte und zwölfte Kanalabschnitt 443, 448 ausgebildet, wobei der vierte, neunte und zwölfte Kanalabschnitte 420, 443, 448 in Umfangsrichtung voneinander räumlich getrennt sind.

Oberseitig kann an dem dritten Gehäuse 315 eine erste Aussparung 470 angeordnet sein, wobei die erste Aussparung 470 sich von radial außen nach radial innen erstreckt und einen planen Aussparungsgrund 475 aufweist. In Umfangsrichtung Uraₙ schließt sich beidseitig der ersten Aussparung 470 der zweite Wärmetauscherabschnitt 365 an. Am Aussparungsgrund 475 sind der erste Anschluss 385 bis vierte Anschluss angeordnet. In Figur 8 ist aus Übersichtlichkeitsgründen nur der erste Anschluss 385 strichliert angedeutet.

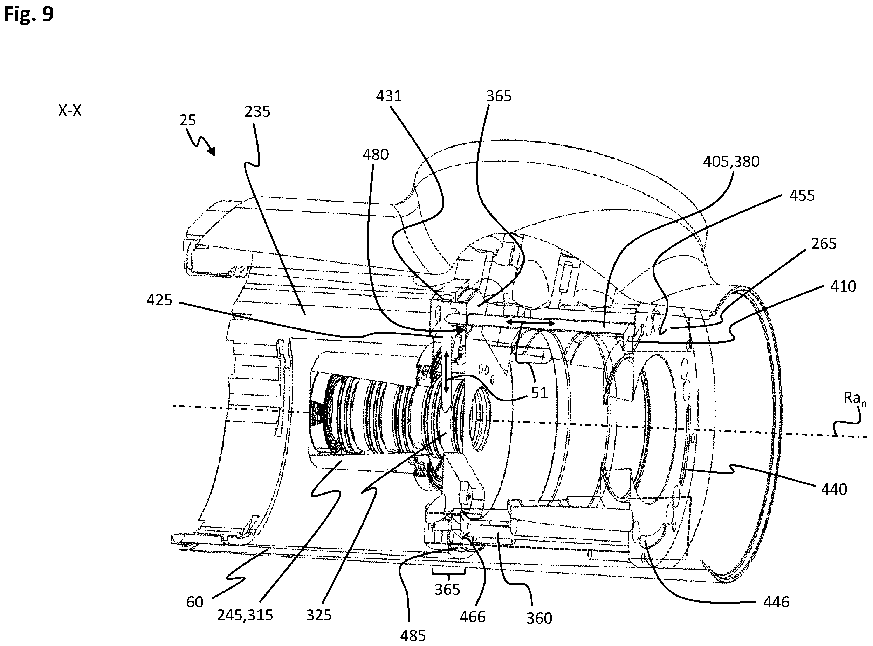

Figur 9 zeigt eine Schnittansicht entlang einer in Figur 7 gezeigten Schnittebene X-X durch das aktive Armmodul 25, wobei in Figur 9 aus Übersichtlichkeitsgründen nur das erste Gehäuse 60 und der Drehübertrager 245 dargestellt sind. Weiterhin sind die Schnittflächen in Fig. 9 nicht geschlossen dargestellt.

Der zweite Wärmetauscherabschnitt 365 liegt mit der zweiten Wärmetauscherstirnseite 466 an einer dritten Wärmetauscherstirnseite 480 des ersten Wärmetauscherabschnitts 360 an. Die dritte Wärmetauscherstirnseite 480 ist auf der zur ersten Anschlussseite abgewandten Seite des ersten Wärmetauscherabschnitts 360 angeordnet und erstreckt sich ebenso wie die erste und zweite Wärmetauscherstirnseite 455, 466 in einer Drehebene senkrecht zur Rotationsachse Raₙ.

Umfangsseitig kann zur Zentrierung des zweiten Wärmetauscherabschnitts 365 und - sofern das dritte Gehäuse 315 mit dem zweiten Wärmetauscherabschnitt 365 einstückig und materialeinheitlich ausgebildet ist - auch des Drehübertragers 245 ein Zentrierabsatz 485 im ersten Gehäuse 60 vorgesehen sein, an dem umfangsseitig der zweite Wärmetauscherabschnitt 365 zentriert wird, sodass eine zuverlässige Ausrichtung und Fluchten der beiden Wärmetauscherabschnitte 360, 365 relativ zueinander in radialer Richtung definiert festgelegt sind.

Ferner kann zusätzlich ein in Figur 9 nicht dargestelltes erstes Dichtmittel zwischen der zweiten und dritten Wärmetauscherstirnseite 466, 480 vorgesehen sein, um den Wärmetauscherfluidkanal 380 fluidisch gegenüber dem Innenraum 235 abzudichten. Das erste Dichtmittel kann aus einer ausgehärteten Flüssigdichtung ausgebildet werden und/oder kann ein oder mehrere Dichtringe aufweisen.

Auf der zur ersten Anschlussseite axial zugewandten Seite wird der im ersten Wärmetauscherabschnitt 360 angeordnete zweite, sechste, zehnte und vierzehnte Kanalabschnitt 410, 440, 444, 451 stirnseitig durch ein Anliegen des Getriebes 265 (schematisch strichliert angedeutet) an der ersten Wärmetauscherstirnseite 455 verschlossen.

Zum fluidischen Abdichten des Wärmetauscherfluidkanals 380 an der ersten Wärmetauscherstirnseite 455 kann ein zweites Dichtmittel (in Figur 9 nicht dargestellt) zwischen dem Getriebe 265 und der ersten Wärmetauscherstirnseite 455 angeordnet sein. Das erste und/oder zweite Dichtmittel kann eine Flüssigkeitsdichtung sein.

Wie bereits oben erläutert saugt die Fördereinrichtung 515 das Fluid 51 an. Die bewirkt, dass in dem in Figur 9 gezeigten aktiven Armmodul 25 das Fluid 51 von dem ersten Abnehmerkanal 325 über den Zulaufkanalabschnitt 425 aus dem ersten Abnehmerkanal 325 radial nach außen hin strömt. Dabei kühlt das Fluid 51 das dritte Gehäuse 315 des Drehübertragers 245 und den zweiten Wärmetauscherabschnitt 365 und nimmt dabei Wärme von dem dritten Gehäuse 315 auf. Radial außen angelangt, wird das Fluid 51 durch das erste Verschlussmittel 431 am Austritt aus dem Wärmetauscherfluidkanal 380 gehindert. Nach Durchströmung des Zulaufkanalabschnitts 425 strömt das Fluid 51 in den ersten Kanalabschnitt 405 ein und wird in Axialrichtung Araₙ zum zweiten Kanalabschnitt 410 geleitet.

Figur 10 zeigt eine perspektivische Darstellung des aktiven Armmoduls 25, wobei aus Übersichtlichkeitsgründen und zur verbesserten Erläuterung der Funktionsweise des aktiven Armmoduls 25 auf die Darstellung zahlreicher Komponenten verzichtet wurde. Dabei wird die folgende Figur 10 in Zusammenhang mit Figur 1 und Figur 6 erläutert, sodass die in den Figuren 1, 6 und 10 gezeigten Bezugszeichen zur genaueren Erläuterung der Funktionsweise des Roboterarms 20 verwendet werden.

In montiertem Zustand des Roboterarms 20 greifen beispielsweise die zweite Anschlussseite 45.1 des ersten Armmoduls 25.1 und die erste Anschlussseite 40.2 des zweiten aktiven Armmoduls 25.2 ineinander ein.

Zur mechanischen Befestigung in Axialrichtung ist der Befestigungsring 200 auf das Außengewinde 110 aufgeschraubt, sodass die zweite Anschlussplatte 170 der zweiten Anschlussseite 45.1 des ersten aktiven Armmoduls 25.1 und die erste Anschlussplatte 95 der ersten Anschlussseite 40.2 des zweiten aktiven Armmoduls 25.2 aneinander angepresst sind.

Zur drehfesten Übertragung greifen die erste Stirnverzahnung 115 und die zweite Stirnverzahnung 191 ineinander ein. Zur datentechnischen Verbindung kontaktiert die erste Kontakteinrichtung 145 des zweiten aktiven Armmoduls 25.2 die zweite Kontakteinrichtung 180 des ersten aktiven Armmoduls 25.1, sodass das Steuergerät 250 durch die datentechnische Verbindung mit der ersten und zweiten Kontakteinrichtung 145, 180 datentechnisch mit der Roboterbasis 15 verbunden ist.

Dadurch ist von der Roboterbasis 15 (vgl. Figur 1) über das dritte passive Armmodul 30.3, an das erste aktive Armmodul 25.1 das Datensignal übertragbar. Von dem ersten aktiven Armmodul 25.1 und dann über die zweite Anschlussseite 45.1 des ersten aktiven Armmoduls 25.1 und die erste Anschlussseite 40.2 des zweiten aktiven Armmoduls 25.2 hinweg ist das optische Signal an das zweite aktive Armmodul 25.2 übertragbar. Das optische Signal kann dann weiter im aktiven Armmodul 25, beispielsweise dem zweiten aktiven Armmodul 25.2 zu der zweiten Anschlussseite 45.2 des zweiten aktiven Armmoduls 25.2 hinweg übertragen werden. Die Übertragung des optischen Signals erfolgt dann im Weiteren über die weiteren aktiven und passiven Armmodule 25, 30 hin zu der Endeffektoranschlussseite 35. Mittels des übertragenen optischen Signals kann der an der Endeffektoranschlussseite 35 angeschlossene Endeffektor angesteuert werden. Ferner können mittels des übertragenen optischen Signals die zwischen der Roboterbasis 15 und der Endeffektoranschlussseite 35 angeordneten passiven und aktiven Armmodule 25, 30 angesteuert werden.

Ebenso kontaktiert die erste Leistungskontakteinrichtung 135 die zweite Leistungskontakteinrichtung 185. Eine elektrische Leistung, die über die Leistungskontakteinrichtungen 135, 185 übertragen wird, kann dabei zum Betrieb der elektrischen Maschine 260, insbesondere zur Bestromung von Wicklungen des Stators 275 und zum Betrieb des Umsetzers und des Steuergeräts 250, genutzt werden. Die elektrische Energie wird von der Roboterbasis 15 bereitgestellt, um alle Armmodule 18 und die Endeffektoranschlussseite 35 mit elektrischer Energie zu versorgen.

So wird die elektrische Energie von der Roboterbasis 15 zumindest teilweise über die zweite Anschlussseite 45.1 des ersten aktiven Armmoduls 25.1 und die erste Anschlussseite 40.2 des zweiten aktiven Armmoduls 25.2 an das zweite aktive Armmodul 25.2 übertragen. Das zweite aktive Armmodul 25.2 stellt durch die elektrische Verbindung zwischen der ersten Leistungskontakteinrichtung 135 und der zweiten Leistungskontakteinrichtung 185 und dem zweiten aktiven Armmodul 25.2 elektrische Energie auch an der zweiten Anschlussseite 45.2 des zweiten aktiven Armmoduls 25.2 bereit.

Dadurch kann über die aktiven Armmodule 25 und die passiven Armmodule 30 hinweg von der Roboterbasis 15 aus in Richtung Endeffektoranschlussseite 35 elektrische Energie über die ersten und zweiten Anschlussseiten 40, 45 übertragen werden.

Um das Fluid 51 von der Roboterbasis 15 an die Endeffektoranschlussseite 35 zu übertragen, greift jeweils die erste Fluidkontakteinrichtung 130 in die zweite Fluidkontakteinrichtung 175 ein und stellt eine fluiddichte Verbindung zwischen der ersten Anschlussseite 40.2 des zweiten aktiven Armmoduls 25.2 und der zweiten Anschlussseite 45.1 des ersten aktiven Armmoduls 25.1 bereit. Dabei greift beispielsweise der fünfte Fluidkontakt 210 in den ersten Fluidkontakt 150 ein. Ebenso greift der zweite Fluidkontakt 155 in den sechsten Fluidkontakt 215, der dritte Fluidkontakt 160 in den siebten Fluidkontakt 220 und der vierte Fluidkontakt 165 in den achten Fluidkontakt 225 und bildet zwischen der ersten Anschlussseite 40.2 des zweiten aktiven Armmoduls 25.2 und der zweiten Anschlussseite 45.1 des ersten aktiven Armmoduls 25.1 jeweils eine fluiddichte Verbindung aus.

Das Fluid 51 wird über das erste aktive Armmodul 25.1 von der ersten Anschlussseite 40.1 an die zweite Anschlussseite 45.1 des ersten aktiven Armmoduls 25.1 übertragen und gesaugt. Dabei wird das Fluid 51 mit einem ersten Temperaturniveau, beispielsweise von 5 °C bis 20 °C an der Roboterbasis bereitgestellt. Vom dritten passiven Armmodul 30.3 strömt über den ersten Fluidkontakt 150 der ersten Fluidkontakteinrichtung 130 (vgl. Figur 5) das Fluid 51 über den ersten Wellenfluidkanal 295 in axialer Richtung in Richtung des Drehübertragers 245. Das Fluid 51 tritt über die erste Bohrung 350 in den ersten Abnehmerkanal 325 ein. Durch den in Umfangsrichtung umlaufend um die Rotationsachse Raₙ ausgebildeten ersten Abnehmerkanal 325 kann unabhängig von der Ausrichtung der ersten Anschlussseite 40.1 des ersten aktiven Armmoduls 25.1 die Fluidübertragung von dem ersten Wellenfluidkanal 295 an den drehfest angeordneten Drehübertrager 245 übertragen werden.

Ein Saugen des Fluids 51 durch die aktiven Armmodule 25 hat gegenüber dem Pumpen des Fluids 51 durch die aktiven Armmodule 25 den Vorteil, dass bei einer Undichtigkeit der Fluidkanäle innerhalb eines aktiven Armmoduls 25 kein Fluid 51 in das aktive Armmodul 25 mit den darin enthaltenen elektrischen und elektronischen Komponenten einströmt, so dass auch im Fall einer Leckage eine notwenige Sicherheit gegeben ist.

Beim Betrieb bzw. bei Aktivierung der Antriebseinrichtung 240 verdreht sich das zweite aktive Armmodul 25.2 relativ um die zweite Rotationsachse Ra₂ gegenüber dem ersten aktiven Armmodul 25.1 und es wird ein Drehmoment zwischen dem ersten aktiven Armmodul 25.1 und dem zweiten aktiven Armmodul 25.2 ausgetauscht. Aufgrund der an dem zweiten aktiven Armmodul 25.2 hin zum Endeffektor angeschlossenen weiteren Armmodule 18 hat die Antriebseinrichtung 240 des zweiten aktiven Armmoduls 25.2 beim Schwenken der weiteren an dem zweiten aktiven Armmodul 25.2 angeschlossenen Armmodule ein sehr hohes Drehmoment um die weiteren Armmodule 18 um die zweite Rotationsachse Ra₂ aufzubringen. Das hohe Drehmoment erfordert eine hohe Stromaufnahme der Wicklungen 371 der Antriebseinrichtung 240 des zweiten aktiven Armmoduls 25.2. Aufgrund des elektrischen Widerstands der Wicklungen 371 des Stators 275 des zweiten aktiven Armmoduls 25.2 erwärmt sich der Stator 275 insbesondere bei hohen elektrischen Strömen stark. Dies kann zu einer thermischen Beschädigung des Stators 275, insbesondere der Wicklungen 371 des Stators 275 führen.

In der Weiterbildung des Industrieroboters 10 wird im Betrieb des Industrieroboters 10 die Roboterbasis 15 mit druckbeaufschlagtem Fluid 51 versorgt, vorzugsweise Druckluft oder Kühlflüssigkeit. Das Fluid 51 kann an der Endeffektoranschlussseite zum Kühlen eines Spanvorgangs genutzt werden. Das Fluid 51 wird mittels der Förderpumpe 515 in die Fluidleitungen der Roboterbasis 15 gepumpt. Das Fluid 51 wird über die Roboterbasis 15 zunächst in das dritte passive Armmodul 30.3 und dann über das erste aktive Armmodul 25.1 eingeleitet.

Auch in der Weiterbildung wird das Fluid 51 wird über das erste aktive Armmodul 25.1 von der ersten Anschlussseite 40.1 an die zweite Anschlussseite 45.1 des ersten aktiven Armmoduls 25.1 übertragen und weitergeleitet. Dabei wird das Fluid 51 mit dem ersten Temperaturniveau an der Roboterbasis 15 bereitgestellt. Vom dritten passiven Armmodul 30.3 strömt über den ersten Fluidkontakt 150 der ersten Fluidkontakteinrichtung 130 (vgl. Figur 5) das Fluid 51 über den ersten Wellenfluidkanal 295 in axialer Richtung in Richtung des Drehübertragers 245. Das Fluid 51 tritt über die erste Bohrung 350 in den ersten Abnehmerkanal 325 ein. Durch den in Umfangsrichtung umlaufend um die Rotationsachse Raₙ ausgebildeten ersten Abnehmerkanal 325 kann unabhängig von der Ausrichtung der ersten Anschlussseite 40.1 des ersten aktiven Armmoduls 25.1 die Fluidübertragung von dem ersten Wellenfluidkanal 295 an den drehfest angeordneten Drehübertrager 245 übertragen werden.

Das druckbeaufschlage Fluid 51 hat den Vorteil, dass ein hoher Massenstrom von Fluid 51 durch den Roboterarm 20 sichergestellt werden kann. Dadurch kann eine gute Kühlung aller aktiver Armmodule 25 des Roboterarms 20 sichergestellt werden.

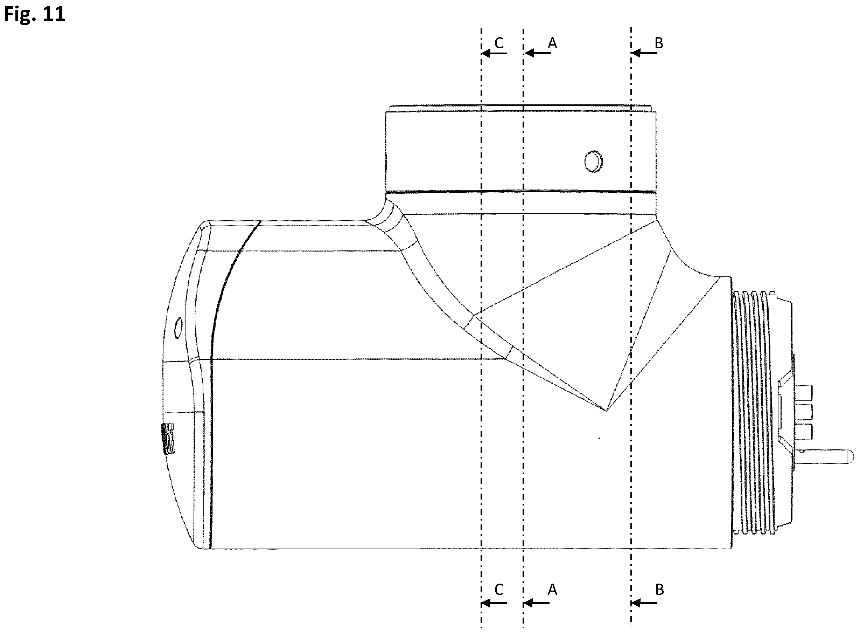

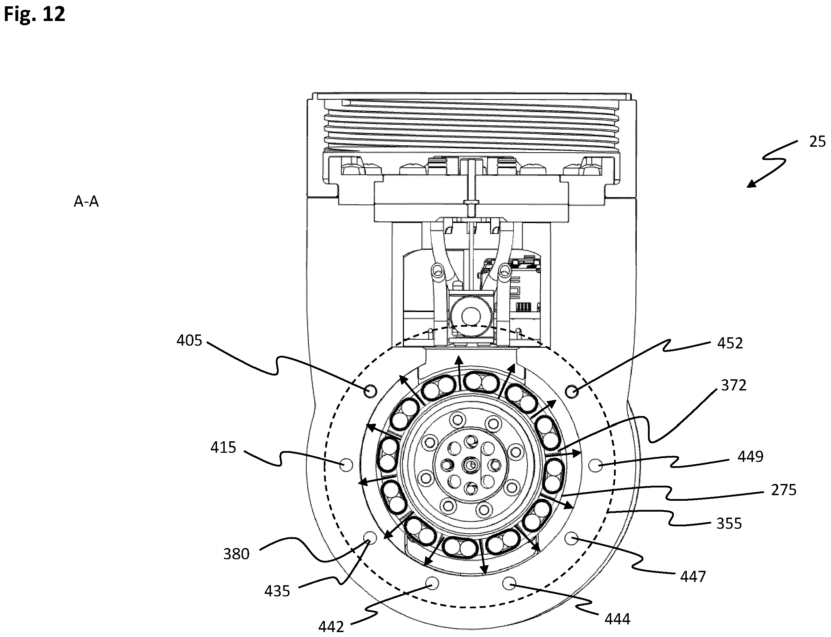

Figur 11 zeigt eine Seitenansicht des aktiven Armmoduls 25. Figur 12 zeigt eine Schnittansicht entlang einer in Figur 11 gezeigten Schnittebene A-A.

Durch die thermische Kopplung des Wärmetauschers 355 mit dem Stator 275, insbesondere mit dem Statorkern 372, wird bei Erwärmung des Stators 275 auch der Wärmetauscher 355 erwärmt. Ein Wärmefluss ist in Figur 12 mittels Pfeilen symbolisch dargestellt. Der Wärmetauscher 355 weist wärmeleitfähiges Material auf und überträgt die Wärme in Richtung dem Wärmetauscherfluidkanal 380.

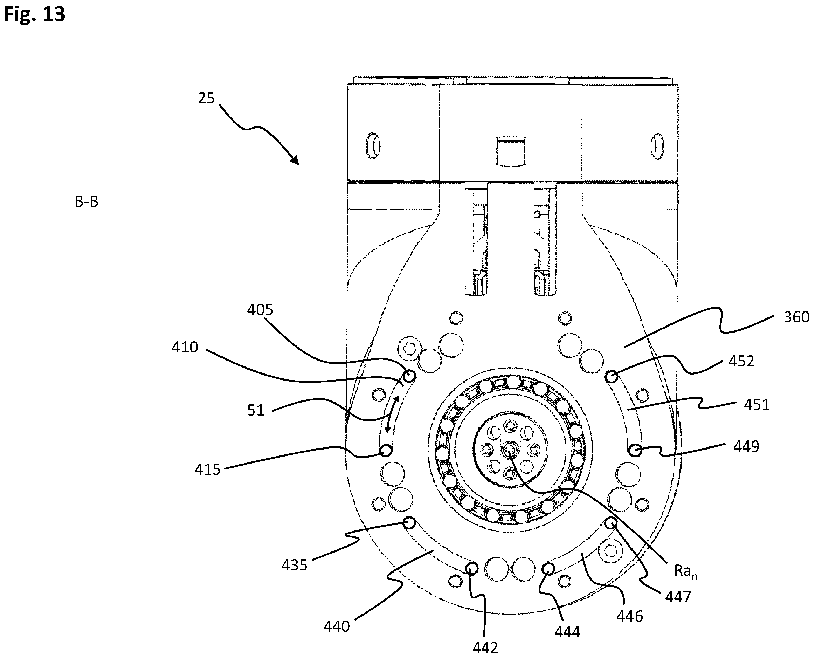

Figur 13 zeigt eine Schnittansicht entlang einer in Figur 11 gezeigten Schnittebene B-B durch das in Figur 11 gezeigte aktive Armmodul 25.

Das Fluid 51 strömt von dem zweiten Wärmetauscherabschnitt durch den ersten Kanalabschnitt 405 in den zweiten Kanalabschnitt 415. Im zweiten Kanalabschnitt 410 wird das Fluid 51 in Umfangsrichtung um die Rotationsachse Raₙ auf der zur ersten Anschlussseite zugewandten Seite geführt. Nach Durchströmung des zweiten Kanalabschnitts 410 durchströmt das Fluid 51 den dritten Kanalabschnitt 415 wieder in Axialrichtung Axaₙ in Richtung des zweiten Wärmetauscherabschnitts. Wie bereits im Zusammenhang mit der Figur 6 beschrieben, durchströmt das Fluid 51 dann im weiteren Verlauf den vierten bis fünfzehnten Kanalabschnitt 420, 435, 440, 442, 443, 444, 446, 447, 448, 449, 451, 452. Während der Durchströmung des ersten bis fünfzehnten Kanalabschnitts 405, 410, 415, 420, 435, 440, 442, 443, 444, 446, 447, 448, 449, 451, 452 nimmt das Fluid 51 Wärme vom ersten Wärmetauscherabschnitt 360 auf und kühlt diesen.

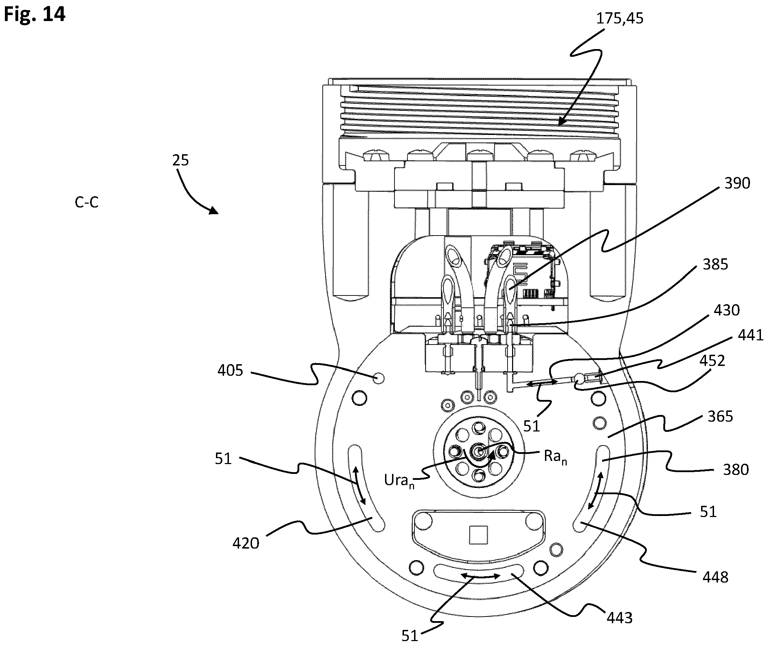

Figur 14 zeigt eine Schnittansicht entlang einer in Figur 11 gezeigten Schnittebene C-C durch das in Figur 11 gezeigte aktive Armmodul 25.

Danach strömt das Fluid 51 in den vierten Kanalabschnitt 420 ein. Der vierte Kanalabschnitt 420 führt das Fluid 51 entlang der zweiten Wärmetauscherstirnseite in Umfangsrichtung Uraₙ. Der zweite Wärmetauscherabschnitt 365 ist thermisch mit dem ersten Wärmetauscherabschnitt 360 gekoppelt, sodass im vierten Kanalabschnitt 420 das Fluid 51 sowohl den ersten Wärmetauscherabschnitt 360 als auch den zweiten Wärmetauscherabschnitt 365 kühlt bzw. Wärme aufnimmt. Dabei wird im vierten Kanalabschnitt 420 das Fluid 51 weiter in Umfangsrichtung Uraₙ um die Rotationsachse Raₙ geführt. Die hier für den vierten Kanalabschnitt 420 beschriebenen Merkmale gelten in analoger Weise für den achten und zwölften Kanalabschnitt 443, 448 des Wärmetauscherfluidkanals 380.

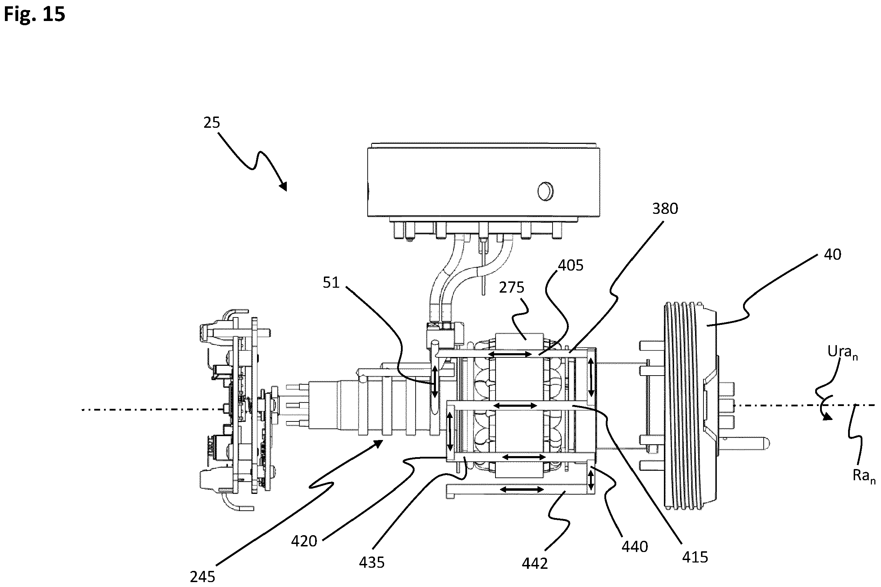

Figur 15 zeigt eine Seitenansicht der in Figur 11 gezeigten Darstellung des aktiven Armmoduls 25.

Nach dem Durchströmen des vierten Kanalabschnitts 420 tritt das Fluid 51 in den fünften Kanalabschnitt 435 ein und wird in axialer Richtung versetzt zu dem ersten Kanalabschnitt 405 wieder in Richtung der ersten Anschlussseite 40 zu dem sechsten Kanalabschnitt 440 geführt. Im sechsten Kanalabschnitt 440 strömt das Fluid 51 in Umfangsrichtung Uraₙ in die gleiche Richtung wie im zweiten Kanalabschnitt 410. Nach Durchströmen des sechsten Kanalabschnitts 440 wird das Fluid 51 in den siebten Kanalabschnitt 442 geführt. Der siebte Kanalabschnitt 442 führt das Fluid in Axialrichtung Axaₙ in Richtung des Drehübertragers 245.

Im Folgenden werden die Figuren 13 bis 15 gemeinsam erläutert.

Nach Durchströmung des siebten Kanalabschnitts 442 führt der achte Kanalabschnitt 443 (vgl. Figur 14) das Fluid 51 in Umfangsrichtung Uraₙ zu dem neunten Kanalabschnitt 444 (vgl. Figur 13). Im neunten Kanalabschnitt 444 wird das Fluid 51 in Axialrichtung Axaₙ der ersten Anschlussseite 40 zu dem zehnten Kanalabschnitt 446 geführt. Der zehnte Kanalabschnitt 446 lenkt das Fluid 51 wieder in Umfangsrichtung Uraₙ um und führt das Fluid 51 in Umfangsrichtung Uraₙ zum elften Kanalabschnitt 447. Der elfte Kanalabschnitt 447 führt das Fluid 51 in Axialrichtung Axaₙ hin zu dem Drehübertrager 245. Am Ende des elften Kanalabschnitts 447 strömt das Fluid 51 in den zwölften Kanalabschnitt 448. Der zwölfte Kanalabschnitt 448 führt das Fluid 51 in Umfangsrichtung Uraₙ zu dem dreizehnten Kanalabschnitt 449. Im dreizehnten Kanalabschnitt 449 strömt das Fluid 51 in Axialrichtung Axaₙ zu dem vierzehnten Kanalabschnitt 451. Der vierzehnte Kanalabschnitt 451 führt das Fluid 51 in Umfangsrichtung Uraₙ zu dem fünfzehnten Kanalabschnitt 452. Der fünfzehnte Kanalabschnitt 452 für in Axialrichtung Axaₙ das Fluid 51 zu dem Rücklaufkanalabschnitt 430.

Am Ende des Wärmetauscherfluidkanals 380 strömt das Fluid 51 über den Rücklaufkanalabschnitt 430 in Richtung des ersten Anschlusses 385. Am ersten Anschluss 385 wird das Fluid 51 aus dem Wärmetauscher 355 bzw. dem Drehübertrager 245 ausgeleitet.

Bei der Durchströmung der einzelnen ersten bis fünfzehnten Kanalabschnitte 405, 410, 415, 420, 435, 440, 442, 443, 444, 446, 447, 448, 449, 451, 452 erwärmt sich das Fluid 51 mit zunehmender zurückgelegter Strecke in dem Wärmetauscherfluidkanal 380. Durch die mäanderförmige Ausgestaltung des Wärmetauscherfluidkanals 380 und durch die in Umfangsrichtung das Fluid 51 nahezu vollständige Umschließung des Stators 275 durch den Wärmetauscher 355 wird eine besonders gute Kühlung des Stators 275 erzielt. Dabei werden lokale Temperaturunterschiede durch das wärmeleitfähige Material des Wärmetauschers 355 ausgeglichen. Das Fluid 51 weist am ersten Anschluss 385 ein zweites Temperaturniveau auf, das höher ist als das erste Temperaturniveau.

Vom ersten Anschluss 385 wird das Fluid 51 über die erste Fluidleitung 390 zu dem fünften Fluidkontakt geführt, wobei der fünfte Fluidkontakt der zweiten Fluidkontakteinrichtung 175 derart angeordnet ist, dass bei Montage der zweiten Anschlussseite 45 an der ersten Anschlussseite der fünfte Fluidkontakt den ersten Fluidkontakt kontaktiert.

Im Folgenden wird auf die Figuren 1, 6 und 10 Bezug genommen.

Das erwärmte Fluid 51 wird über die zweite Fluidkontakteinrichtung 175 in die erste Fluidkontakteinrichtung 130 in das an der zweiten Anschlussseite 45.1 des ersten Armmoduls 25.1 angeschossene zweite aktive Armmodul 25.2 eingeleitet.

Durch die identische Ausgestaltung der ersten bis sechsten aktiven Armmodule 25.1 bis 25.6 über die Baugruppen hinweg kühlt das Fluid 51 auf dem Weg zwischen der Roboterbasis 15 und der Endeffektoranschlussseite 35 die jeweils in dem aktiven Armmodul 25 angeordnete Antriebseinrichtung 240, insbesondere den Stator 275, aktiv und unabhängig davon, ob das jeweilige erste bis sechste aktive Armmodul 25.1 bis 25.6 gerade aktiviert ist, das heißt die Antriebseinrichtung 240 die jeweilige zweite Anschlussseite 45 verdreht oder deaktiviert ist. Dies kann dazu führen, dass die anderen, nicht aktivierten Armmodule 18, insbesondere die aktiven Armmodule 25, Wärme vom erwärmten Fluid 51 aufnehmen und das Fluid 51 kühlen. Dies hat zur Folge, dass die Armmodule 18 als thermischer Pufferspeicher wirken.

Insbesondere kann auch in kalter Arbeitsumgebung des Industrieroboters 10 das Fluid 51 in Verbindung mit dem Wärmetauscher 355 dazu genutzt werden, um, insbesondere nach längerem Stillstand des Industrieroboters 10, mittels eines vorgewärmten Fluids 51 den Industrieroboter 10 auf eine Arbeitstemperatur zu bringen. Dabei kann durch die wärmeleitfähige Ausgestaltung des Wärmetauschers 355 und insbesondere bei einer einstückigen und materialeinheitlichen Ausgestaltung des ersten Gehäuses 60 mit dem Wärmetauscher 355 der Innenraum des ersten Gehäuses 60 und die darin angeordneten Komponenten, insbesondere elektronischen Komponenten wie beispielsweise dem Umsetzer oder das Steuergerät 250, vorgewärmt werden. Dadurch kann beispielsweise eine Kondensatbildung innerhalb des ersten Gehäuses 60, insbesondere bei kalten Arbeitsumgebungen des Industrieroboters 10, vermieden werden.

Das Fluid 51, insbesondere wenn das Fluid 51 als Hydraulikflüssigkeit ausgebildet ist, wird wieder über die Armmodule 18 hin zu der Roboterbasis 15 geführt.

Das rückströmende Fluid 51 wird über den sechsten Fluidkontakt in die zweite Anschlussseite 45 eingeleitet. Der sechste Fluidkontakt ist korrespondierend zu dem zweiten Fluidkontakt angeordnet und kontaktiert den zweiten Fluidkontakt in montiertem Zustand des Roboterarms. In der Rückströmung des Fluids 51 strömt das Fluid 51 von der zweiten Anschlussseite 45 über die zweite Fluidleitung an den zweiten Anschluss 395. Der zweite Anschluss 395 ist auf kurzem Weg (ohne Wärmetauscherkanal) mit dem zweiten Abnehmerkanal 335 verbunden, sodass unter Umgehung des Wärmetauscherfluidkanals 380 das rückströmende Fluid 51 in den zweiten Abnehmerkanal 335 geführt wird. Vom zweiten Abnehmerkanal 335 wird das rückströmende Fluid 51 über den zweiten Wellenfluidkanal hin zu dem zweiten Fluidkontakt der ersten Fluidkontakteinrichtung 130 der ersten Anschlussseite 40 geführt. Dadurch wird vermieden, dass gekühlte aktive Armmodule 25 durch das rückströmende erwärmte Fluid 51 anstatt gekühlt erwärmt werden.

In der in Figur 1 erläuterten Weiterbildung des Industrieroboters 10 (wenn also das Fluid 51 druckbeaufschlagt in die Roboterbasis 30 geleitet wird) kann je nach Ausgestaltung des Endeffektors kann das Fluid 51, beispielsweise zum Kühlen und Schmieren eines Fräsprozesses, genutzt werden und beispielsweise am Endeffektor ausgespritzt werden. Ist das Fluid 51 beispielsweise Druckluft, kann am Endeffektor das Fluid 51 in die Umgebung abgegeben werden. Auch kann das Fluid 51 im Endeffektor zur Betätigung eines Druckluftaktuators beispielsweise genutzt werden und nach Betätigung in die Umgebung abgegeben werden.

In der Weiterbildung des in Figur 1 gezeigten Industrieroboters 10 ist auch denkbar, dass die Strömungsrichtung des Fluids 51 umgekehrt zu der oben beschriebenen Ausgestaltung ist. Beispielhaft kann das Fluid 51 ohne Durchströmung des Wärmetauschers 355 über den zweiten Fluidkontakt, den zweiten Wellenfluidkanal und den zweiten Anschluss hin zu dem sechsten Fluidkontakt in dem Armmodul geführt werden, sodass das Fluid 51 mit dem ersten Temperaturniveau zu der Endeffektoranschlussseite 35 übertragen wird. Erst in der Rückströmung des Fluids 51 wird das Fluid 51 kommend von dem fünften Fluidkontakt und dem ersten Anschluss über den Wärmetauscher geführt. Dabei durchströmt das Fluid 51 die Primärseite der Wärmetauscher 355 und kühlt jeweils den Stator 275 der aktiven Armmodule 25 auf dem Rückweg von der Endeffektoranschlussseite 35 hin zu der Roboterbasis 15. An der Roboterbasis 15 wird das rückgeführte Fluid 51 durch die Förderpumpe angesaugt und ausgangsseitig der Förderpumpe in den Fluidspeicher geführt, sodass das Fluid 51 in einem Kreislauf in dem Industrieroboter 10 zirkuliert.

Diese Ausgestaltung ist von besonderem Vorteil, wenn die Endeffektoranschlussseite 35 ein besonders hohes Druckniveau zum Betrieb des Endeffektors benötigt. Durch die direkte Führung des Fluids 51 ist ein Druckverlust in einem Hinweg von der Roboterbasis 15 hin zu der Endeffektoranschlussseite 35 besonders gering, da eine Leitungslänge für das Fluid 51 zwischen der Roboterbasis 15 und der Endeffektoranschlussseite 35 besonders kurz ist.

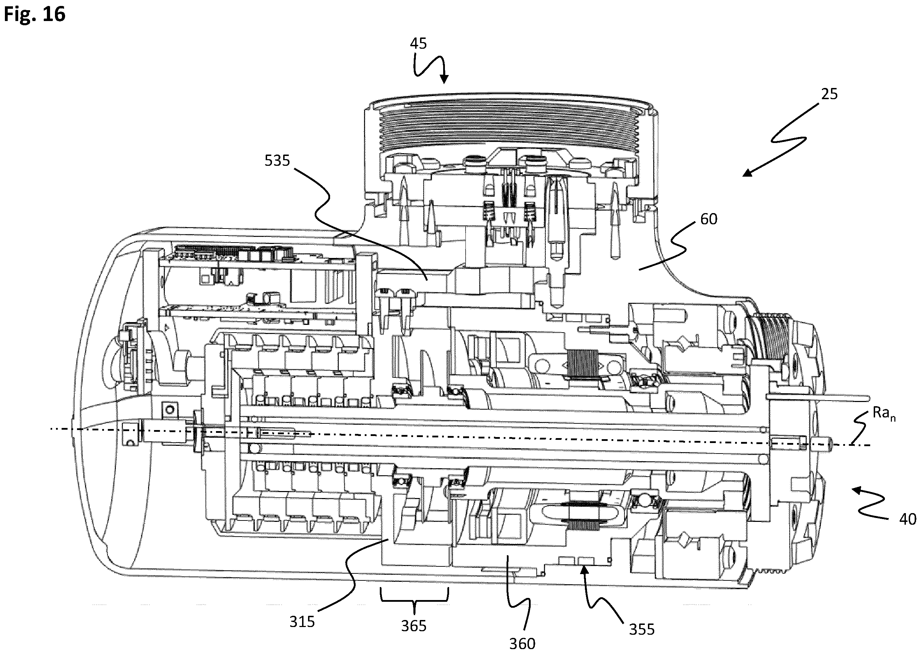

Figur 16 zeigt einen perspektivischen Längsschnitt durch ein aktives Armmodul 25 gemäß einer zweiten Ausführungsform.

Zur besseren Darstellung der einzelnen Bauelemente des in Figur 16 gezeigten aktiven Armmoduls 25 sind die Schnittstellen nicht schraffiert dargestellt.

Das aktive Armmodul 25 gemäß der zweiten Ausführungsform (vgl. Figur 16) ist im Wesentlichen identisch zu dem in den Figuren 2 bis 15 gezeigten aktiven Armmodul 25 gemäß der ersten Ausführungsform ausgebildet. Im Folgenden wird ausschließlich auf die Unterschiede des in Figur 16 gezeigten aktiven Armmoduls 25 gemäß der zweiten Ausführungsform gegenüber dem in den Figuren 2 bis 15 gezeigten aktiven Armmodul 25 gemäß der ersten Ausführungsform eingegangen.

Gegenüber der in den Figuren 2 bis 15 gezeigten ersten Ausführungsform ist der Wärmetauscher 355 des aktiven Armmoduls 25 in Figur 16 weitergebildet. Zusätzlich weist das aktive Armmodul 25 in Figur 16 einen Leitungsblock 535 auf. Des Weiteren wird auf die in Figur 5 gezeigten Schlauchleitungen verzichtet. Auf die konstruktive Ausgestaltung des aktiven Armmoduls 25 gemäß der zweiten Ausführungsform wird in den folgenden Figuren detailliert eingegangen.

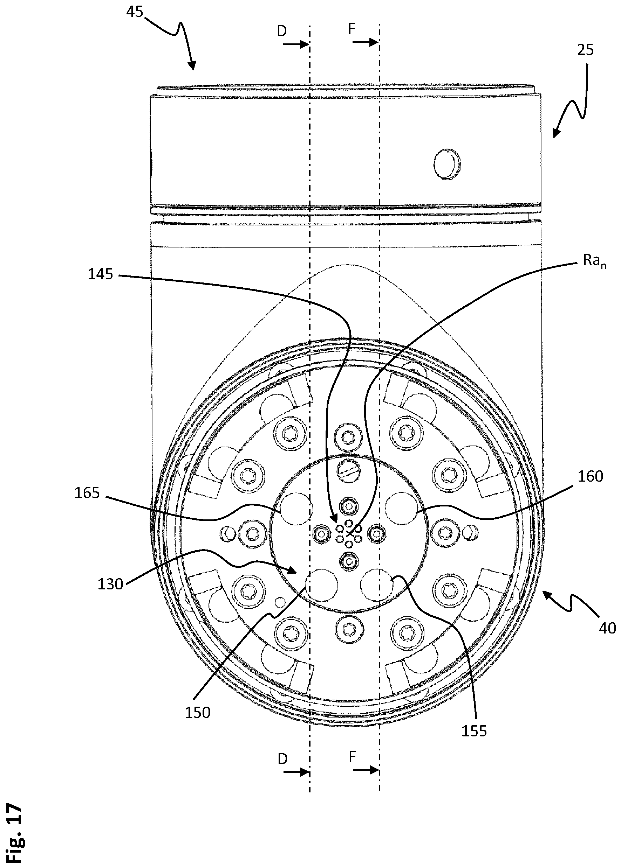

Figur 17 zeigt eine Seitenansicht auf das in Figur 16 gezeigte aktive Armmodul 25 gemäß der zweiten Ausführungsform.

Die erste Anschlussseite 40 des aktiven Armmoduls 25 gemäß der zweiten Ausführungsform ist gegenüber der in den Figuren 2 bis 15 gezeigten ersten Ausführungsform des aktiven Armmoduls 25 dahingehend weitergebildet, dass die erste Fluidkontakteinrichtung 130 anstatt des ersten bis vierten Fluidkontakts 150, 155, 160, 165 in unregelmäßigem Abstand in Umfangsrichtung bezogen auf die Rotationsachse Raₙ zueinander angeordnet sind.

Zusätzlich ist die erste Datenkontakteinrichtung 145 mehrpolig ausgebildet und dient dazu, eine zweite Kontakteinrichtung 180 einer zweiten Anschlussseite 45 eines angeschlossenen, hier nicht gezeigten anderen aktiven Armmoduls 25 elektrisch zu kontaktieren, um ein elektrisches Datensignal zu übertragen.

Die zweite Anschlussseite 45 (in Figur 17 verdeckt) ist entsprechend korrespondierend zu der ersten Anschlussseite 40 ausgebildet, sodass in montiertem Zustand des ersten aktiven Armmoduls 25.1 an dem zweiten aktiven Armmodul 25.2 die erste Fluidkontakteinrichtung 130 die zweite Fluidkontakteinrichtung 175 kontaktiert, um das Fluid 51 über die erste und zweite Fluidkontakteinrichtung 130, 175 hinweg zu übertragen. Ebenso kontaktiert die erste Kontakteinrichtung 145 die zweite Kontakteinrichtung 180 elektrisch, um das elektrische Datensignal zwischen der ersten Kontakteinrichtung 145 und der zweiten Kontakteinrichtung 180 zu übertragen.

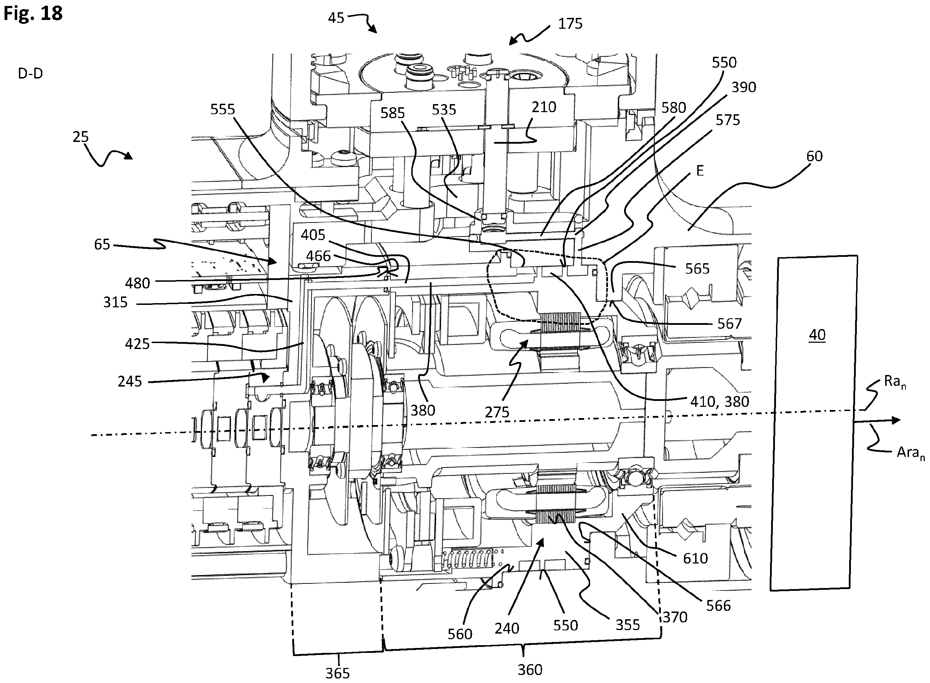

Figur 18 zeigt einen Ausschnitt einer Schnittansicht entlang einer in Figur 17 gezeigten Schnittebene D-D durch das in Figur 17 gezeigte aktive Armmodul 25 gemäß der zweiten Ausführungsform.

In Figur 18 sind beispielhaft der erste Wärmetauscherabschnitt 360 und der zweite Wärmetauscherabschnitt 365 des Wärmetauschers 355 jeweils hohlzylindrisch um die Rotationsachse Raₙ ausgebildet. Der zweite Wärmetauscherabschnitt 365 ist auf der zur ersten Anschlussseite 40 (in Figur 18 schematisch dargestellt) zugewandten Seite des dritten Gehäuses 315 und radial außen an dem dritten Gehäuse 315 angeordnet. Das dritte Gehäuse 315 und der zweite Wärmetauscherabschnitt 365 können einstückig und materialeinheitlich ausgebildet sein. Dabei überragt der zweite Wärmetauscherabschnitt 365 stirnseitig das dritte Gehäuse 315 axial in Richtung der ersten Anschlussseite 40.

Auf einer zur ersten Anschlussseite 40 zugewandten Seite des zweiten Wärmetauscherabschnitts 365 schließt sich der erste Wärmetauscherabschnitt 360 an den zweiten Wärmetauscherabschnitt 365 an. Dabei liegt der erste Wärmetauscherabschnitt 360 auf einer der ersten Anschlussseite 40 abgewandten Axialseite mit der dritten Wärmetauscherstirnseite 480, die beispielsweise plan ausgebildet ist und in einer Drehebene zu der Rotationsachse Raₙ verläuft, an der zweiten Wärmetauscherstirnseite 466 des zweiten Wärmetauscherabschnitts 365 vorzugsweise flächig an. Dadurch sind der erste Wärmetauscherabschnitt 360 und der zweite Wärmetauscherabschnitt 365 thermisch miteinander gekoppelt. Vorzugsweise sind der erste Wärmetauscherabschnitt 360 und der zweite Wärmetauscherabschnitt 365 aus einem wärmeleitfähigen Material, beispielsweise Aluminium, hergestellt. Radial innenseitig zu dem ersten Wärmetauscherabschnitt 360 ist die Antriebseinrichtung 240 angeordnet. Dabei umschließt der erste Wärmetauscherabschnitt 360 in radialer Richtung die Antriebseinrichtung 240.

Der Wärmetauscherfluidkanal 380 ist abweichend zu der in den Figuren 2 bis 15 gezeigten Ausgestaltung ausgebildet. Der Wärmetauscherfluidkanal 380 ist in seiner Anzahl von Kanalabschnitten reduziert. Dabei ist beispielhaft der zweite Kanalabschnitt 410 des Wärmetauscherfluidkanals 380 an einer zweiten äußeren Umfangsseite 550 des ersten Wärmetauscherabschnitts 360 angeordnet. Der zweite Kanalabschnitt 410 ist nutförmig ausgebildet und um die Rotationsachse Raₙ beispielhaft schraubenförmig um die Rotationsachse Raₙ geführt.

Das erste Gehäuse 60 weist eine Wärmetauscheraufnahme 555 auf. Die Wärmetauscheraufnahme 555 wird in radialer Richtung durch eine dritte innere Umfangsseite 560 des ersten Gehäuses 60 begrenzt. Die dritte innere Umfangsseite 560 kann zylinderförmig um die Rotationsachse Raₙ verlaufend ausgeformt sein. Auf der zum dritten Gehäuse 315 zugewandten Axialseite und somit auf einer der ersten Anschlussseite 40 abgewandten Axialseite ist die Wärmetauscheraufnahme 555 offen.

In axialer Richtung wird die Wärmetauscheraufnahme 555 auf der zur ersten Anschlussseite 40 zugewandten Seite durch einen sich in radialer Richtung von außen nach innen erstreckenden ersten Absatz 565 begrenzt. Der erste Absatz 565 weist auf einer der ersten Anschlussseite 40 abgewandten Seite eine erste Absatzfläche 566 auf, die sich im Wesentlichen in einer Ebene senkrecht zu der Rotationsachse Raₙ erstreckt. Radial innenseitig begrenzt der erste Absatz 565 eine Durchführung 567, die sich radial innenseitig an die erste Absatzfläche 566 anschließt.

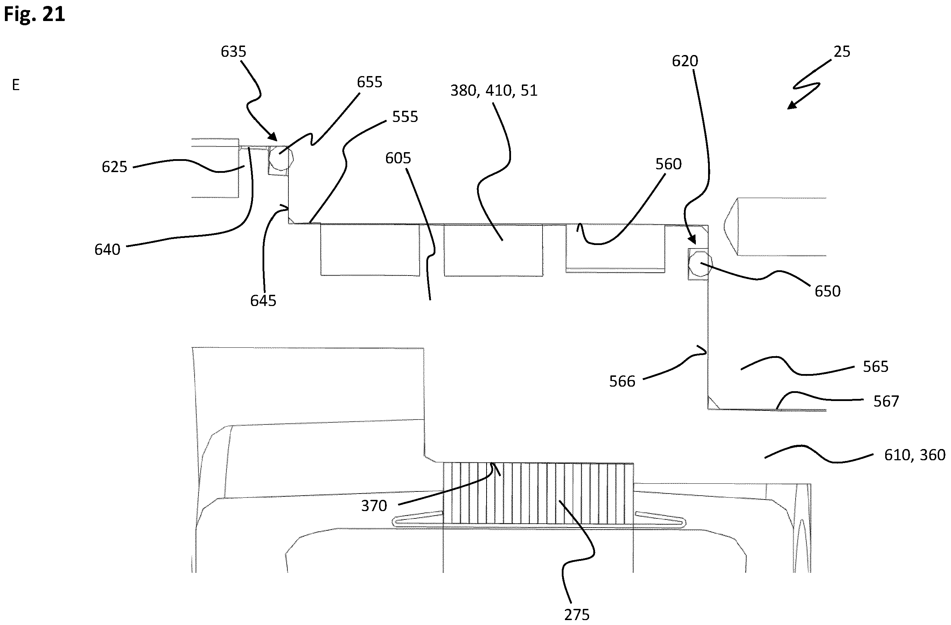

Ferner weist das erste Gehäuse 60 eine umlaufend um die Rotationsachse Raₙ ausgebildete zweite Aussparung 640 auf. Die zweite Aussparung 640 schließt sich an ein axiales Ende des ersten Gehäuses 60 auf einer von der ersten Anschlussseite 40 abgewandten Axialseite an und kann auf einer Kreisbahn um die Rotationsachse Raₙ verlaufend ausgebildet sein. Auf der zu ersten Anschlussseite 40 zugewandten Seite schließt sich die zweite Aussparung 640 an die Wärmetauscheraufnahme 555 an (die zweite Aussparung 640 ist in Figur 21 dargestellt). Ein Aussparungsgrund 645 (vgl. Figur 21) der zweiten Aussparung 640 verläuft im Wesentlichen in einer Drehebene senkrecht zu der Rotationsachse Raₙ und ist Teil der dritten inneren Umfangsseite 560.

Der erste Kanalabschnitt 405 ist in der Ausführungsform beispielhaft bohrungsartig ausgebildet und erstreckt sich parallel zu der Rotationsachse Raₙ sowohl durch den ersten Wärmetauscherabschnitt 360 als auch den zweiten Wärmetauscherabschnitt 365. Dabei mündet auf der zur ersten Anschlussseite 40 zugewandten Seite der erste Kanalabschnitt 405 in dem zweiten Kanalabschnitt 410. Auf der zur ersten Anschlussseite 40 abgewandten Seite mündet der erste Kanalabschnitt 405 in dem Zulaufkanalabschnitt 425 des Drehübertragers 245. Dabei ist in radialer Richtung der erste Kanalabschnitt 405 radial nach außen hin versetzt zu der Rotationsachse Raₙ angeordnet.

In axialer Richtung ist etwa der Leitungsblock 535 zwischen dem ersten Gehäuse 60 und dem Drehübertrager 245, insbesondere dem dritten Gehäuse 315 angeordnet. Dabei ist der Leitungsblock 535 radial außenseitig zu dem ersten Wärmetauscherabschnitt 360 und dem zweiten Wärmetauscherabschnitt 365 angeordnet.

Ferner ist in dem ersten Gehäuse 60 die erste Fluidleitung 390 angeordnet. Die erste Fluidleitung 390 ersetzt die in den Figuren 2 bis 15 gezeigte, als Schlauchleitung ausgebildete erste Fluidleitung 390. Die erste Fluidleitung 390 weist beispielhaft einen ersten Bohrungsabschnitt 575 und einen zweiten Bohrungsabschnitt 580 auf. Der erste Bohrungsabschnitt 575 erstreckt sich in radialer Richtung nach außen und mündet radial innenseitig an dem zweiten Kanalabschnitt 410. Der zweite Bohrungsabschnitt 580 erstreckt sich parallel zu der Rotationsachse Raₙ von einer der ersten Anschlussseite 40 abgewandten Axialseite des ersten Gehäuses 60 in Richtung des ersten Bohrungsabschnitts 575 und mündet in dem ersten Bohrungsabschnitt 575. Der erste Bohrungsabschnitt 575 ist radial außenseitig des zweiten Kanalabschnitts 410 angeordnet.

Von radial außen nach radial innen ist eine Gewindebohrung 585 in dem ersten Gehäuse 60 angeordnet. In die Gewindebohrung 585 ist der fünfte Fluidkontakt 210 der zweiten Fluidkontakteinrichtung 175 der zweiten Anschlussseite 45 eingeschraubt. Der erste Bohrungsabschnitt 575 sowie der zweite Bohrungsabschnitt 580 sind jeweils nach außen hin verschlossen, sodass ein Austritt des Fluids 51 aus dem ersten Bohrungsabschnitt 575 oder dem zweiten Bohrungsabschnitt 580 in den ersten Gehäuseinnenraum 65 verhindert wird. Die erste Fluidleitung 390 verbindet den fünften Fluidkontakt 210 mit dem zweiten Kanalabschnitt 410, sodass auf den Rücklaufkanalabschnitt 430 und den ersten Anschluss 385 verzichtet werden kann.

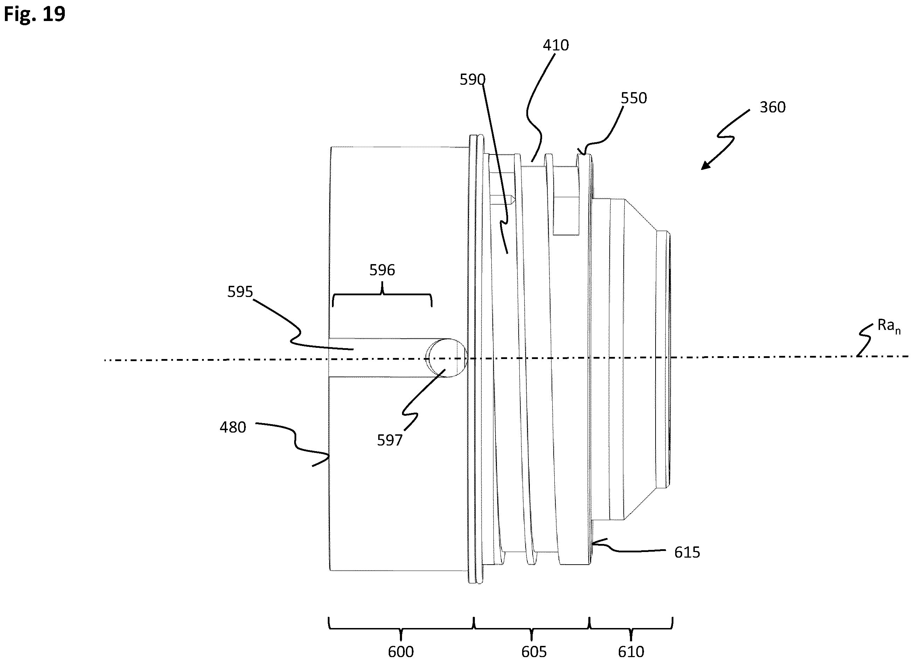

Figur 19 zeigt eine Seitenansicht auf den in Figur 18 gezeigten ersten Wärmetauscherabschnitt 360.

Der erste Wärmetauscherabschnitt 360 weist einen ersten Teilbereich 600, einen zweiten Teilbereich 605 und einen dritten Teilbereich 610 auf. Der erste Teilbereich 600 ist hohlzylindrisch ausgebildet und schließt sich an die dritte Wärmetauscherstirnseite 480 axial an. Der zweite Teilbereich 605 schließt sich auf einer der dritten Wärmetauscherstirnseite 480 abgewandten Axialseite des ersten Teilbereichs 600 an den ersten Teilbereich 600 an. Auch der zweite Teilbereich 605 ist im Wesentlichen hohlzylindrisch ausgebildet und kann eine geringfügig kleinere radiale Erstreckung aufweisen als der erste Teilbereich 600.

Zwischen dem zweiten Teilbereich 605 und dem dritten Teilbereich 610 weist der erste Wärmetauscherabschnitt 360 eine zweite Absatzfläche 615 auf. Die zweite Absatzfläche 615 ist ringförmig und in einer Drehebene senkrecht zu der Rotationsachse Raₙ verlaufend ausgebildet. Die zweite Absatzfläche 615 bildet einen zweiten Absatz zwischen dem zweiten Teilbereich 605 und dem dritten Teilbereich 610 auf der zur ersten Anschlussseite 40 zugewandten Axialseite am ersten Wärmetauscherabschnitt 360 aus.

Der dritte Teilbereich 610 schließt sich radial innenseitig zu der zweiten Absatzfläche 615 an den zweiten Teilbereich 605 auf einer vom ersten Teilbereich 600 abgewandten Seite in axialer Richtung an. Der dritte Teilbereich 610 ist in seiner Grundform konusartig ausgebildet.

Der zweite Kanalabschnitt 410 ist am zweiten Teilbereich 605 angeordnet und ist in wenigstens einer, ein Winkelsegment von wenigstens 300° einschließenden Windung 590 um die Rotationsachse Raₙ verlaufend ausgebildet. Vorzugsweise ist der zweite Kanalabschnitt 410 in vorzugsweise mehreren Windungen 590 um die Rotationsachse Raₙ schraubenförmig an der zweiten äußeren Umfangsseite 550 verlaufend ausgebildet.

Axial versetzt zu dem zweiten Kanalabschnitt 410 weist der zweite Wärmetauscherabschnitt 365 in dem ersten Teilbereich 600 eine Leitungsführung 595 auf. Die Leitungsführung 595 beginnt in axialer Richtung an der dritten Wärmetauscherstirnseite 480. Die Leitungsführung 595 ist in einem ersten Führungsabschnitt 596 nutartig in der zweiten äußeren Umfangsseite 550 parallel zu der Rotationsachse Raₙ verlaufend ausgebildet. Auf der zum zweiten Teilbereich 605 zugewandten Seite ist die Leitungsführung 595 in einem zweiten Führungsabschnitt 597 bohrungsartig ausgebildet und erstreckt sich von der zweiten äußeren Umfangsseite 550 von radial außen nach innen und mündet an der zweiten inneren Umfangsseite 370 des ersten Wärmetauscherabschnitts 360.

Die Leitungsführung 595 dient dazu, elektrische Anschlussleitungen des Stators 275 durch den ersten Wärmetauscherabschnitt 360 zu führen. Die Leitungsführung 595 ist dabei beabstandet von dem ersten und zweiten Kanalabschnitt 405, 410 angeordnet. Dabei ist die Leitungsführung 595 gegenüber dem Wärmetauscherfluidkanal 380 abgedichtet, sodass ein Eindringen von Fluid 51 in die Leitungsführung 595 verhindert wird.

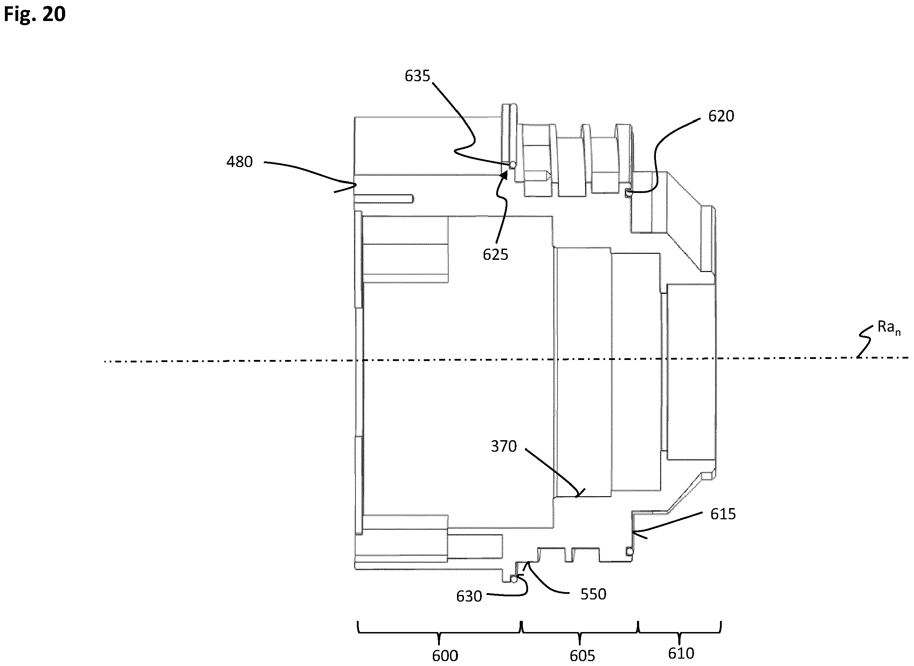

Figur 20 zeigt einen Teilschnitt durch den in Figur 19 gezeigten ersten Wärmetauscherabschnitt 360. Der Teilschnitt der Figur 20 verläuft entlang einer Schnittebene, die parallel zu der Rotationsachse Raₙ verläuft.

In der zweiten Absatzfläche 615 ist beispielsweise eine erste Dichtnut 620 angeordnet. Die erste Dichtnut 620 ist umlaufend um die Rotationsachse Raₙ ausgebildet. Dabei ist die erste Dichtnut 620 auf der zur ersten Anschlussseite 40 zugewandten Seite offen ausgebildet.

An der zweiten äußeren Umfangsseite 550 ist ferner ein dritter Absatz 625 angeordnet. Der dritte Absatz 625 ist an einem Übergang zwischen dem ersten Teilbereich 600 und dem zweiten Teilbereich 605 angeordnet. Der dritte Absatz 625 erstreckt sich von radial innen nach radial außen hin. Der dritte Absatz 625 weist auf der zur ersten Anschlussseite 40 zugewandten Axialseite eine dritte Absatzfläche 630 auf, die sich im Wesentlichen in einer Drehebene senkrecht zu der Rotationsachse Raₙ erstreckt. Zusätzlich ist in dem dritten Absatz 625 beispielsweise eine zweite Dichtnut 635 angeordnet, wobei die zweite Dichtnut 635 nach radial außen und axial in Richtung der ersten Anschlussseite 40 offen ausgebildet sein kann. Die zweite Dichtnut 635 kann auch radial nach innen hin versetzt zu einem äußeren Ende des dritten Absatzes 625 angeordnet sein und nach außen geschlossen ausgebildet sein. Der zweite Kanalabschnitt 410 ist axial zwischen der zweiten Absatzfläche 615 und dem dritten Absatz 625 angeordnet.

Figur 21 zeigt einen in Figur 18 markierten Ausschnitt E der in Figur 18 gezeigten Schnittansicht durch das aktive Armmodul 25 gemäß der zweiten Ausführungsform.

In montiertem Zustand des aktiven Armmoduls 25 durchgreift der dritte Teilbereich 610 die Durchführung 567. Ferner liegt radial innenseitig der Stator 275 an der zweiten inneren Umfangsseite 370 im zweiten Teilbereich 605 an und ist thermisch mit dem ersten Wärmetauscherabschnitt 360 verbunden.

In die Wärmetauscheraufnahme 555 greift mit dem zweiten Teilbereich 605 der erste Wärmetauscherabschnitt 360 ein. Dabei begrenzt die dritte innere Umfangsseite 560 radial außen den zweiten Kanalabschnitt 410. Dadurch wird der zweite Kanalabschnitt 410 besonders einfach ausgebildet. Ferner greift der dritte Absatz 625 in die zweite Aussparung 640 ein.

In der ersten Dichtnut 620 ist beispielhaft abschnittsweise ein erstes Dichtelement 650 angeordnet. Das erste Dichtelement 650 kann beispielsweise ein erster Dichtring sein. In montiertem Zustand liegt das erste Dichtelement 650 an der ersten Absatzfläche 566 des ersten Absatzes 565 an und bildet eine erste Dichtebene aus. Durch das erste Dichtelement 650 wird der Wärmetauscherfluidkanal 380 auf der zur ersten Anschlussseite 40 zugewandten Seite fluiddicht abgedichtet.

In der zweiten Dichtnut 635 ist beispielhaft abschnittsweise ein zweites Dichtelement 655 angeordnet, das als zweiter Dichtring ausgebildet sein kann. Das zweite Dichtelement 655 liegt an dem Aussparungsgrund 645 an. Zusätzlich kann das zweite Dichtelement 655 durch die nach außen hin offene Ausgestaltung der zweiten Dichtnut 635 auch an der dritten inneren Umfangsseite 560 der zweiten Aussparung 640 anliegen. Das zweite Dichtelement 655 bildet zusammen mit dem Aussparungsgrund 645 eine zweite Dichtebene aus. Dabei dichtet das zweite Dichtelement 655 den Wärmetauscherfluidkanal 380 axial auf der zur ersten Anschlussseite 40 abgewandten Seite des zweiten Kanalabschnitts 410 ab. Dadurch wird an dem zweiten Dichtelement 655 ein Austritt des Fluids 51 aus dem Wärmetauscherfluidkanal 380, insbesondere dem zweiten Kanalabschnitt 410, verhindert.

Durch die zwei Dichtebenen kann beim Einfügen des ersten Wärmetauscherabschnitts 360 in das erste Gehäuse 60 eine zuverlässige, sich automatische sich beim Einschieben einstellende Abdichtung sichergestellt werden. Ferner kann auf das Einbringen von Flüssigdichtmitteln verzichtet werden, sodass die Abdichtung besonders zuverlässig ist.

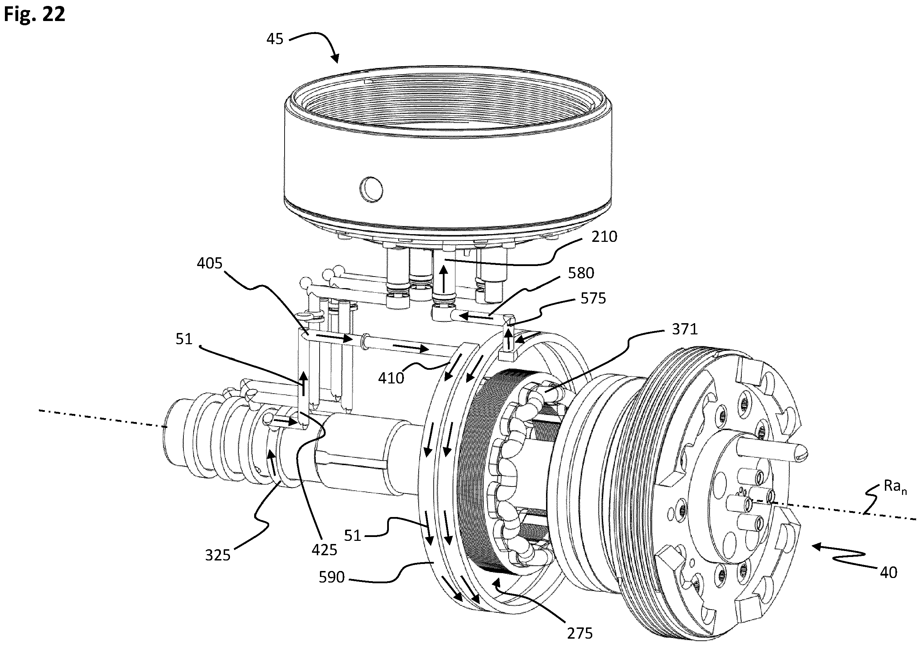

Figur 22 zeigt eine perspektivische Darstellung des in den Figuren 16 bis 18 gezeigten aktiven Armmoduls 25 gemäß der zweiten Ausführungsform.

Aus Übersichtlichkeitsgründen und zur verbesserten Erläuterung der Funktionsweise des aktiven Armmoduls 25 wird auf die Darstellung zahlreicher Komponenten des aktiven Armmoduls 25 verzichtet wird. Dabei wird Figur 22 in Zusammenhang mit den Figuren 16 bis 21 erläutert, sodass die in den Figuren 16 bis 21 gezeigten Bezugszeichen zur genauen Erläuterung der Funktionsweise des Roboterarms 20 mitverwendet werden.

Das Fluid 51 tritt mit dem ersten Temperaturniveau in den ersten Abnehmerkanal 325 ein. Vom Abnehmerkanal 325 strömt das Fluid 51 in den Zulaufkanalabschnitt 425 und wird von dem Zulaufkanalabschnitt 425 radial nach außen geführt. Radial außen wird das Fluid 51 vom Zulaufkanalabschnitt 425 in den ersten Kanalabschnitt 405 umgelenkt. Im ersten Kanalabschnitt 405, der sich sowohl durch den ersten Wärmetauscherabschnitt 360 als auch den zweiten Wärmetauscherabschnitt 365 erstreckt, wird das Fluid 51 in Richtung des zweiten Kanalabschnitts 410 geführt. Durch die thermische Kopplung des ersten Wärmetauscherabschnitts 360 mit dem zweiten Wärmetauscherabschnitt 365 und dem dritten Gehäuse 315 nimmt das Fluid 51 bereits im Zulaufkanalabschnitt 425 und im ersten Kanalabschnitt 405 Wärme vom dritten Gehäuse 315 und dem zweiten Wärmetauscherabschnitt 365 auf.

Auf der zur ersten Anschlussseite 40 zugewandten Seite mündet der erste Kanalabschnitt 405 im zweiten Kanalabschnitt 410. Das Fluid 51 wird vom ersten Kanalabschnitt 405 aus axialer Richtung in Umfangsrichtung umgelenkt und das Fluid 51 wird in den Windungen 590 vorzugsweise mehrfach um die Rotationsachse Raₙ um den ersten Wärmetauscherabschnitt 360 herumgeführt. Dadurch weist der zweite Kanalabschnitt 410 eine besonders lange Kanallänge auf und das in dem zweiten Kanalabschnitt 410 geführte Fluid 51 kann besonders viel Wärme von dem ersten Wärmetauscherabschnitt 360 aufnehmen.

Dadurch, dass der zweite Kanalabschnitt 410 im zweiten Teilbereich 605 des ersten Wärmetauscherabschnitts 360 angeordnet ist und einen besonders geringen radialen Abstand zu dem Stator 275 aufweist, wird eine besonders gute Wärmeübertragung zwischen dem Fluid 51 und dem Stator 275 sichergestellt. Insbesondere können dadurch Wicklungen 371 des Stators 275 besonders gut gekühlt werden.

Nach Durchströmen der Windungen 590 des zweiten Kanalabschnitts 410 durch das Fluid 51 wird das Fluid 51 radial nach außen in den ersten Bohrungsabschnitt 575 geführt. Radial außen strömt das Fluid 51 aus dem ersten Bohrungsabschnitt 575 in den parallel zur Rotationsachse Raₙ ausgerichteten zweiten Bohrungsabschnitt 580. Das Fluid 51 wird vom ersten Bohrungsabschnitt 575 durch den zweiten Bohrungsabschnitt 580 zum fünften Fluidkontakt 210 der zweiten Anschlussseite 45 geführt.

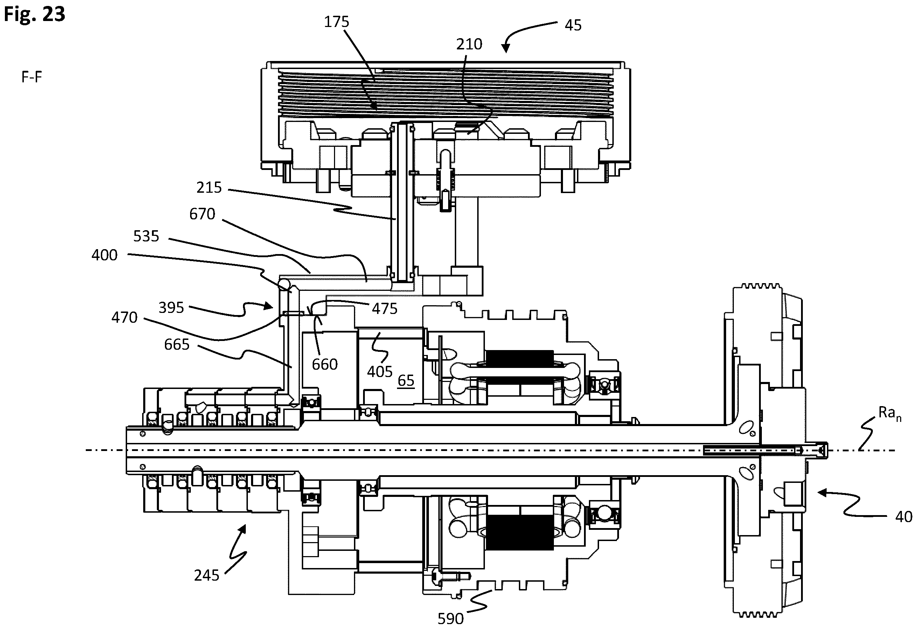

Figur 23 zeigt eine Schnittansicht entlang einer in Figur 17 gezeigten Schnittebene F-F durch das aktive Armmodul 25 gemäß der zweiten Ausführungsform.

Um auf die in Figur 5 gezeigten, als Schlauchleitungen ausgebildeten zweiten bis vierten Fluidleitungen zu verzichten, ist in der Ausführungsform der Leitungsblock 535 zwischen der zweiten Anschlussseite 45 und dem Drehübertrager 245 angeordnet. Je nach Ausgestaltung der ersten und zweiten Anschlussseite 40, 45 weist der Leitungsblock 535 eine entsprechende Anzahl von Fluidleitungen 400 abzüglich der im ersten Gehäuse 60 geführten ersten Fluidleitung 390 auf. In der Ausführungsform ist somit die zweite bis vierte Fluidleitung 400 in dem Leitungsblock 535 ausgebildet. Die dritte und vierte Fluidleitung sind in Figur 23 nicht dargestellt. Für sie gilt jedoch das für die zweite Fluidleitung 400 im Folgenden Erläuterte ebenso. Einziger Unterschied ist, dass die dritte und vierte Fluidleitung versetzt und fluidisch getrennt zu der zweiten Fluidleitung 400 geführt sind.

An einer zur zweiten Anschlussseite 45 zugewandten Seite sind der sechste bis achte Fluidkontakt 215, 220, 225 in den Leitungsblock 535 fluiddicht gegenüber dem ersten Gehäuseinnenraum 65 an dem Leitungsblock 535 befestigt, beispielsweise eingeschraubt.

Der Leitungsblock 535 weist in der Schnittansicht eine im Wesentlichen L-förmige Ausgestaltung auf. Dabei liegt mit einer Auflagefläche 660, die auf einer der zweiten Anschlussseite 45 abgewandten Seite des Leitungsblocks 535 angeordnet ist und beispielsweise an einer kurzen Seite des L-förmigen Querschnitts angeordnet ist, der Leitungsblock 535 auf dem Aussparungsgrund 475 der ersten Aussparung 470 des Drehübertragers 245 auf. Dabei greift der Leitungsblock 535 abschnittsweise in die erste Aussparung 470 ein. Die erste Aussparung 470 ist beispielhaft in Figur 23 deutlich flacher in radialer Richtung bezogen auf die Rotationsachse Raₙ ausgebildet als wie in Figur 8 gezeigt. Dadurch kann der Herstellungsaufwand für den Drehübertrager 245 besonders geringgehalten werden.

Die zweite Fluidleitung 400 weist einen ersten Leitungsabschnitt 665 und einen zweiten Leitungsabschnitt 670 auf. Der erste Leitungsabschnitt 665 und der zweite Leitungsabschnitt 670 sind jeweils beispielhaft als Bohrung in dem Leitungsblock 535 ausgebildet. Dabei mündet an der Auflagefläche 660 der erste Leitungsabschnitt 665 am zweiten Anschluss 395 des Drehübertragers 245. Dabei kann der erste Leitungsabschnitt 665 in einer Tangentialebene bezogen auf die Rotationsachse Raₙ geführt sein. Der erste Leitungsabschnitt 665 erstreckt sich von dem zweiten Anschluss 395 radial nach außen hin und mündet radial außenseitig in dem zweiten Leitungsabschnitt 670. Der zweite Leitungsabschnitt 670 verläuft parallel zur Rotationsachse Raₙ und mündet in dem sechsten Fluidkontakt 215 auf einer zum ersten Leitungsabschnitt 665 abgewandten Axialseite.

Am Übergang zwischen dem sechsten Fluidkontakt 215 und dem zweiten Leitungsabschnitt 670 ist die zweite Fluidleitung 400 jeweils mittels eines dritten Dichtelements, beispielsweise mittels eines dritten Dichtrings, abgedichtet, um auch bei einer hohen Druckbeaufschlagung des Fluids 51 eine zuverlässige Abdichtung des Fluids 51 am Leitungsblock 535 sicherzustellen.

Durch den Leitungsblock 535 wird das Fluid 51 zwischen dem sechsten bis achten Fluidkontakt 215, 220, 225 und dem Drehübertrager 245 ausgetauscht und jeweils fluidisch getrennt in dem Leitungsblock 535 geführt. Dadurch kann auf die Schlauchleitungen, wie sie in Figur 5 dargestellt sind, um den Drehübertrager 245 mit der zweiten Fluidkontakteinrichtung 175 zu verbinden, verzichtet werden. Ferner kann der Leitungsblock 535 besonders einfach montiert werden.

Durch den Leitungsblock 535 wird ferner ein axialer Versatz des zweiten bis vierten Anschlusses 395 gegenüber der zweiten Fluidkontakteinrichtung 175 und der räumlich versetzten Anordnung des sechsten bis achten Fluidkontakts 215, 220, 225 ermöglicht und ausgeglichen.

Die in den Figuren 1 bis 23 beschriebene Ausgestaltung des Industrieroboters 10 hat den Vorteil, dass durch die zusätzliche Kühlung der Antriebseinrichtung 240 auch die Antriebseinrichtung 240 mit höheren Strömen betrieben werden kann, ohne dass dadurch die Antriebseinrichtung 240 thermisch überhitzt. Dadurch stellt die Antriebseinrichtung 240 bei gleicher Baugröße ein höheres Drehmoment bereit. Dies resultiert darin, dass das aktive Armmodul 25 geeignet ist, eine größere Last als bei einem ungekühlten aktiven Armmodul 25 zu tragen.

Es wird darauf hingewiesen, dass über die Roboterbasis 15 nicht nur das Fluid 51, sondern auch ein weiteres Fluid bereitgestellt werden kann. Das weitere Fluid kann identisch zu dem Fluid 51 gewählt sein, kann jedoch ein unterschiedliches Temperatur- und/oder Druckniveau als das Fluid 51 sich von dem Fluid 51 unterscheidendes Temperatur- und/oder Druckniveau aufweisen. Das weitere Fluid kann über den dritten und/oder vierten Fluidkontakt, den dritten und/oder vierten Wellenfluidkanal, den dritten und/oder vierten Abnehmerkanal und den siebten und/oder achten Fluidkontakt jedes aktiven Armmoduls 25 zwischen der Roboterbasis 15 und der Endeffektoranschlussseite 35 übertragen werden. Wie die Fluidführung des Fluids 51 und gegebenenfalls des weiteren Fluids in dem Roboterarm erfolgen soll, wird dabei mittels der Roboterbasis 15 festgelegt.

Durch die Kühlung mittels des Wärmetauschers und des Fluids 51 ist sichergestellt, dass die einzelnen ersten Gehäuse 60 der aktiven Armmodule sich nur geringfügig ausdehnen. Insbesondere bei der in Figur 1 gezeigten Zusammensetzung des Industrieroboters 10 aus vielen unterschiedlichen einzelnen Armmodulen 18 wirkt sich eine geringfügige thermische Ausdehnung der aktiven Armmodule 25, beispielsweise insbesondere eine Längung der aktiven Armmodule 25, in Summe auf die Positionierung und Wiederholgenauigkeit des Industrieroboters 10 deutlich aus, sodass, wenn die thermische Ausdehnung der ersten Gehäuse der aktiven Armmodule 25 besonders niedrig gehalten wird, dadurch die Positionier- und Wiederholgenauigkeit des Industrieroboters 10 beispielsweise bei Pick-and-Place-Aufgaben gesteigert werden kann.

Ferner weisen die aktiven Armmodule 25 im Wesentlichen eine konstante Modultemperatur auf, wodurch die Wiederholgenauigkeit und die Absolutgenauigkeit über die langanhaltenden Pick-and-Place-Aufgaben konstant gehalten werden kann.

Zusätzlich wird durch die Kühlung eine Lebensdauer von Elektronikkomponenten, beispielsweise des Steuergeräts 250 und des Umsetzers 255 erhöht, da eine thermische Belastung der Elektronikkomponenten reduziert ist, sodass der in Figur 1 gezeigte Industrieroboter 10 besonders langlebig ist.

Der oben beschriebene Industrieroboter 10 eignet sich dank seiner aktiven Kühlung der Antriebseinrichtung 240 ebenso zum Einsatz in großen Höhen, insbesondere beispielsweise oberhalb von 2.000 Metern, oder in besonders heißen Gegenden oder unter Einsatzbedingungen, beispielsweise in Großindustrieanlagen zur Metallherstellung, da durch die aktive Kühlung Wärme besonders gut aus dem Industrieroboter 10 abgeführt werden kann.

Ferner wird, wie oben beschrieben, neben der Steigerung der Leistung im Dauerbetrieb, auch eine Verkürzung der Lebensdauer, verringert. Auch weist das aktive Armmodul 25 eine besonders gute Deratingkurve auf.

### Bezugszeichenliste

- 10: Industrieroboter
- 15: Roboterbasis
- 18: Armmodul
- 20: Roboterarm
- 25: aktives Armmodul
- 25.1: erstes aktives Armmodul
- 25.2: zweites aktives Armmodul
- 25.3: drittes aktives Armmodul
- 25.4: viertes aktives Armmodul
- 25.5: fünftes aktives Armmodul
- 25.6: sechstes aktives Armmodul
- 25.7: siebtes aktives Armmodul
- 25.8: achtes aktives Armmodul
- 30: passives Armmodul
- 30.1: erstes passives Armmodul
- 30.2: zweites passives Armmodul
- 30.3: drittes passives Armmodul
- 35: Endeffektoranschlussseite
- 40: erste Anschlussseite
- 40.1: erste Anschlussseite des ersten aktiven Armmoduls
- 40.2: erste Anschlussseite des zweiten aktiven Armmoduls
- 40.3: erste Anschlussseite des dritten aktiven Armmoduls
- 40.4: erste Anschlussseite des vierten aktiven Armmoduls
- 40.5: erste Anschlussseite des fünften aktiven Armmoduls
- 40.6: erste Anschlussseite des sechsten aktiven Armmoduls
- 40.8: erste Anschlussseite des achten aktiven Armmoduls
- 45: zweite Anschlussseite
- 45.1: zweite Anschlussseite des ersten aktiven Armmoduls
- 45.2: zweite Anschlussseite des zweiten aktiven Armmoduls
- 45.3: zweite Anschlussseite des dritten aktiven Armmoduls
- 45.4: zweite Anschlussseite des vierten aktiven Armmoduls
- 45.5: zweite Anschlussseite des fünften aktiven Armmoduls
- 45.6: zweite Anschlussseite des sechsten aktiven Armmoduls
- 50: dritte Anschlussseite
- 50.1: dritte Anschlussseite des ersten passiven Armmoduls
- 50.2: dritte Anschlussseite des zweiten passiven Armmoduls
- 50.3: dritte Anschlussseite des dritten passiven Armmoduls
- 51: Fluid
- 52: elektrische Energiequelle
- 53: Datennetzwerk
- 55: vierte Anschlussseite
- 55.1: vierte Anschlussseite des ersten passiven Armmoduls
- 55.2: vierte Anschlussseite des zweiten passiven Armmoduls
- 55.3: vierte Anschlussseite des dritten passiven Armmoduls
- 60: erstes Gehäuse
- 65: erster Gehäuseinnenraum
- 70: zweites Gehäuse
- 75: zweiter Gehäuseinnenraum
- 80: erster Gehäuseabschnitt
- 85: zweiter Gehäuseabschnitt
- 90: Seitenfläche
- 95: erste Anschlussplatte
- 100: erste Stirnseite
- 110: Außengewinde
- 115: erste Stirnverzahnung
- 120: Anschlussabschnitt
- 125: zweite Stirnseite
- 130: erste Fluidkontakteinrichtung
- 135: erste Leistungskontakteinrichtung
- 145: erste Kontakteinrichtung
- 150: erster Fluidkontakt
- 155: zweiter Fluidkontakt
- 160: dritter Fluidkontakt
- 165: vierter Fluidkontakt
- 170: zweite Anschlussplatte
- 175: zweite Fluidkontakteinrichtung
- 180: zweite Kontakteinrichtung
- 185: zweite Leistungskontakteinrichtung
- 190: zweite Kontaktseite
- 191: zweite Stirnverzahnung
- 195: Befestigungsmittel
- 200: Befestigungsring
- 210: fünfter Fluidkontakt
- 215: sechster Fluidkontakt
- 220: siebter Fluidkontakt
- 225: achter Fluidkontakt
- 230: dritte Stirnseite
- 235: Innenraum
- 240: Antriebseinrichtung
- 245: Drehübertrager
- 250: Steuergerät
- 255: Umsetzer
- 260: elektrische Maschine
- 265: Getriebe
- 270: Rotor
- 275: Stator
- 280: erste Hohlwelle
- 285: zweite Hohlwelle
- 290: Schleifringeinheit
- 295: erster Wellenfluidkanal
- 300: zweiter Wellenfluidkanal
- 305: dritter Wellenfluidkanal
- 310: vierter Wellenfluidkanal
- 315: drittes Gehäuse
- 320: Aufnahme
- 325: erster Abnehmerkanal
- 330: erste innere Umfangsseite
- 335: zweiter Abnehmerkanal
- 336: Axialdichtung
- 340: dritter Abnehmerkanal
- 345: vierter Abnehmerkanal
- 350: erste Bohrung
- 355: Wärmetauscher
- 360: erster Wärmetauscherabschnitt
- 365: zweiter Wärmetauscherabschnitt
- 370: zweite innere Umfangsseite
- 371: Wicklung
- 372: Statorkern
- 375: erste äußere Umfangsseite
- 380: Wärmetauscherfluidkanal
- 385: erster Anschluss
- 390: erste Fluidleitung
- 395: zweiter Anschluss
- 400: zweite Fluidleitung
- 405: erster Kanalabschnitt
- 410: zweiter Kanalabschnitt
- 415: dritter Kanalabschnitt
- 420: vierter Kanalabschnitt
- 425: Zulaufkanalabschnitt
- 430: Rücklaufkanalabschnitt
- 431: erstes Verschlussmittel
- 435: fünfter Kanalabschnitt
- 440: sechster Kanalabschnitt
- 441: zweites Verschlussmittel
- 442: siebter Kanalabschnitt
- 443: achter Kanalabschnitt
- 444: neunter Kanalabschnitt
- 445: Verbindungskanal
- 446: zehnter Kanalabschnitt
- 447: elfter Kanalabschnitt
- 448: zwölfter Kanalabschnitt
- 449: dreizehnter Kanalabschnitt
- 450: erste Kreisbahn
- 451: vierzehnter Kanalabschnitt
- 452: fünfzehnter Kanalabschnitt
- 455: erste Wärmetauscherstirnseite
- 460: zweite Kreisbahn
- 466: zweite Wärmetauscherstirnseite
- 470: erste Aussparung
- 475: Aussparungsgrund
- 480: dritte Wärmetauscherstirnseite
- 485: Zentrierabsatz
- 510: Fluidspeicher
- 515: Förderpumpe
- 520: erste fluidische Versorgungsleitung
- 525: zweite fluidische Versorgungsleitung
- 530: dritte fluidische Versorgungsleitung
- 535: Leitungsblock
- 550: zweite äußere Umfangsseite
- 555: Wärmetauscheraufnahme
- 560: dritte innere Umfangsseite
- 565: erster Absatz
- 566: erste Absatzfläche
- 567: Durchführung
- 575: erster Bohrungsabschnitt
- 580: zweiter Bohrungsabschnitt
- 585: Gewindebohrung
- 590: Windung
- 595: Leitungsführung
- 596: erster Führungsabschnitt
- 597: zweiter Führungsabschnitt
- 600: erster Teilbereich
- 605: zweiter Teilbereich
- 610: dritter Teilbereich
- 615: zweite Absatzfläche
- 620: erste Dichtnut
- 625: dritter Absatz
- 630: dritte Absatzfläche
- 635: zweite Dichtnut
- 640: zweite Aussparung
- 645: Aussparungsgrund
- 650: erstes Dichtelement
- 655: zweites Dichtelement
- 660: Auflagefläche
- 665: erster Leitungsabschnitt
- 670: zweiter Leitungsabschnitt

## Patentansprüche

1. Aktives Armmodul (25) für einen modularen Roboterarm (20) eines Industrieroboters (10),
- aufweisend ein erstes Gehäuse (60), einen Wärmetauscher (355), eine Antriebseinrichtung (240) und eine erste Anschlussseite (40) mit einer ersten Anschlussplatte (95), ,
- wobei die erste Anschlussplatte (95) mit einem weiteren Armmodul (18) oder einer Roboterbasis (15) des Roboterarms (20) mechanisch zur Übertragung von Antriebs- und Stützkräften verbindbar ist,
- wobei das erste Gehäuse (60) sich entlang einer Rotationsachse (Raₙ) erstreckt und einen die Antriebseinrichtung (240) aufnehmenden Innenraum (235) begrenzt,
- wobei der Wärmetauscher (355) zumindest abschnittweise die Antriebseinrichtung (240) aufnimmt und thermisch mit der Antriebseinrichtung (240) gekoppelt ist,
- wobei der Wärmetauscher (355) wenigstens einen Wärmetauscherfluidkanal (380) aufweist,
- wobei der Wärmetauscher (355) ausgebildet ist, Wärme zwischen der Antriebseinrichtung (240) und dem Fluid (51) auszutauschen, **gekennzeichnet durch**
- eine an der ersten Anschlussplatte (95) angeordnete erste Fluidkontakteinrichtung (130),
- wobei über die erste Fluidkontakteinrichtung (130) ein Fluid (51) mit dem weiteren Armmodul (18) oder der Roboterbasis (15) austauschbar ist,
- wobei der Wärmetauscherfluidkanal (380) mit dem Fluid (51) zum Austausch des Fluids (51) mit der ersten Fluidkontakteinrichtung (130) füllbar ist.

2. Aktives Armmodul (25) nach Anspruch 1,
- aufweisend eine zweite Anschlussseite (45),
- wobei die zweite Anschlussseite (45) mit dem ersten Gehäuse (60) mechanisch drehfest verbunden ist,
- wobei die zweite Anschlussseite (45) eine zweite Fluidkontakteinrichtung (175) aufweist,
- wobei der Wärmetauscherfluidkanal (380) des Wärmetauschers (355) zwischen der zweiten Fluidkontakteinrichtung (175) und der ersten Fluidkontakteinrichtung (130) angeordnet und der Wärmetauscherfluidkanal (380) zum Austausch des Fluids (51) zwischen der ersten Fluidkontakteinrichtung (130) und der zweiten Fluidkontakteinrichtung (175) ausgebildet ist,
- und/oder
- wobei der Wärmetauscherfluidkanal (380) mäanderförmig verlaufend um die Antriebseinrichtung (240) ausgebildet ist, und/oder
- wobei der Wärmetauscherfluidkanal (380) zumindest abschnittsweise schraubenförmig in wenigstens einer Windung (590), vorzugsweise wenigstens in zwei Windungen (590) um die Rotationsachse (Raₙ) verlaufend um die Antriebseinrichtung (240) ausgebildet ist.

3. Aktives Armmodul (25) nach einem der vorhergehenden Ansprüche,
- aufweisend einen Drehübertrager (245),
- wobei die erste Anschlussseite (40) drehbar um die Rotationsachse (Raₙ) gelagert ist,
- wobei der Drehübertrager (245) die erste Fluidkontakteinrichtung (130) mit dem Wärmetauscherfluidkanal (380) verbindet,
- wobei der Drehübertrager (245) ausgebildet ist, in einer Rotation der ersten Anschlussseite (40) das Fluid (51) zwischen dem Wärmetauscherfluidkanal (380) des Wärmetauschers (355) und der ersten Fluidkontakteinrichtung (130) auszutauschen.

4. Aktives Armmodul (25) nach einem der vorhergehenden Ansprüche,
- wobei die Antriebseinrichtung (240) einen Rotor (270) und einen Stator (275) aufweist,
- wobei der Rotor (270) drehmomentschlüssig mit der ersten Anschlussseite (40) gekoppelt und ausgebildet ist, die erste Anschlussseite (40) um die Rotationsachse (Raₙ) zu rotieren,
- wobei der Wärmetauscher (355) zumindest abschnittsweise den Stator (275) aufnimmt und der Wärmetauscher (355) zumindest abschnittweise an dem Stator (275) anliegt,
- und/oder
- wobei der Wärmetauscher (355) wenigstens einen ersten Wärmetauscherabschnitt (360) aufweist,
- wobei der erste Wärmetauscherabschnitt (360) hohlzylindrisch verlaufend um die Rotationsachse (Raₙ) verlaufend ausgebildet ist,
- wobei der erste Wärmetauscherabschnitt (360) thermisch mit der Antriebseinrichtung (240) verbunden ist und die Antriebseinrichtung (240) radial außenseitig umschließt,
- wobei der erste Wärmetauscherabschnitt (360) zumindest abschnittweise den Wärmetauscherfluidkanal (380) ausbildet und ausgebildet ist, Wärme zwischen dem Fluid (51) und der Antriebseinrichtung (240) auszutauschen.

5. Aktives Armmodul (25) nach einem der vorhergehenden Ansprüche,
- wobei der Wärmetauscherfluidkanal (380) einen zweiten Kanalabschnitt (410) aufweist,
- wobei der zweite Kanalabschnitt (410) nutförmig ausgebildet sowie um die Rotationsachse (Raₙ) geführt ist,
- wobei der zweite Kanalabschnitt (410) an einer zweiten äußeren Umfangsseite (550) des Wärmetauschers (355) angeordnet ist,
- wobei das erste Gehäuse (60) an einer dritten inneren Umfangsseite (560) eine Wärmetauscheraufnahme (555) aufweist,
- wobei in die Wärmetauscheraufnahme (555) der Wärmetauscher (355) zumindest abschnittsweise eingreift,
- wobei die dritte innere Umfangsseite (560) der Wärmetauscheraufnahme (555) außenseitig den zweiten Kanalabschnitt (410) begrenzt,
oder
- wobei der zweite Kanalabschnitt (410) an einer ersten Wärmetauscherstirnseite (455) des Wärmetauschers (355) angeordnet ist,
- wobei der zweite Kanalabschnitt (410) bogenförmig, um die Rotationsachse (Raₙ) verlaufend ausgebildet ist,
- wobei vorzugsweise das aktive Armmodul (25) ein Getriebe (265) aufweist,
- wobei das Getriebe (265) eingangsseitig drehfest mit der Antriebseinrichtung (240) und ausgangsseitig drehfest mit der ersten Anschlussseite (40) verbunden ist,
- wobei das Getriebe (265) stirnseitig an dem Wärmetauscher (355) anliegt und den zweiten Kanalabschnitt (410) verschließt.

6. Aktives Armmodul (25) nach Anspruch 5 und Anspruch 3,
- wobei der Wärmetauscher (355) an dem Drehübertrager (245) anliegt und der Wärmetauscherfluidkanal (380) einen ersten Kanalabschnitt (405) aufweist,
- wobei der erste Kanalabschnitt (405) sich entlang einer Richtung der Rotationsachse (Raₙ) erstreckt und beabstandet zu der Rotationsachse (Raₙ) bohrungsartig verlaufend ausgebildet ist,
- wobei der erste Kanalabschnitt (405) an einer Seite in den zweiten Kanalabschnitt (410) mündet und an einer anderen Seite mit dem Drehübertrager (245) verbunden ist,
- wobei der erste Kanalabschnitt (405) zum Austausch des Fluids zwischen dem Drehübertrager (245) und dem zweiten Kanalabschnitt (410) ausgebildet ist.

7. Aktives Armmodul (25) nach Anspruch 6,
- wobei der Wärmetauscher (355) einen zweiten Wärmetauscherabschnitt (365) aufweist,
- wobei der zweite Wärmetauscherabschnitt (365) hohlzylindrisch um die Rotationsachse (Raₙ) verlaufend ausgebildet ist,
- wobei der zweite Wärmetauscherabschnitt (365) mit einem dritten Gehäuses (315) des Drehübertragers (245) verbunden ist,
- wobei der erste Wärmetauscherabschnitt (360) an einer zur ersten Anschlussseite (40) abgewandten dritten Wärmetauscherstirnseite (480) an einer vierten Wärmetauscherstirnseite (545) des zweiten Wärmetauscherabschnitts (365) anliegt,
- wobei der erste Kanalabschnitt (405) durch den zweiten Wärmetauscherabschnitt (365) durchgeführt ist.

8. Aktives Armmodul (25) nach einem der Ansprüche 4 bis 7,
- wobei der Wärmetauscher (355) einen axial neben dem ersten Wärmetauscherabschnitt (360) angeordneten zweiten Wärmetauscherabschnitt (365) aufweist,
- wobei der zweite Wärmetauscherabschnitt (365) hohlzylindrisch um die Rotationsachse (Raₙ) verlaufend ausgebildet ist,
- wobei der Wärmetauscherfluidkanal (380) in dem ersten Wärmetauscherabschnitt (360) und dem zweiten Wärmetauscherabschnitt (365) abwechselnd angeordnet ist,
- wobei der zweite Wärmetauscherabschnitt (365) stirnseitig an dem ersten Wärmetauscherabschnitt (360) anliegt und thermisch mit dem ersten Wärmetauscherabschnitt (360) verbunden ist,
- wobei vorzugsweise der zweite Wärmetauscherabschnitt (365) und ein drittes Gehäuse (315) des Drehübertragers (245) einstückig und materialeinheitlich ausgebildet sind.

9. Aktives Armmodul (25) nach einem der Ansprüche 2 bis 8,
- aufweisend eine erste Fluidleitung (390),
- wobei die erste Fluidleitung (390) bohrungsartig in dem ersten Gehäuse (60) ausgebildet ist,
- wobei sich die erste Fluidleitung (390) abschnittsweise in radialer Richtung zu der Rotationsachse (Raₙ) erstreckt und innenseitig in dem Wärmetauscherfluidkanal (380) mündet,
- wobei radial außen die erste Fluidleitung (390) mit der zweiten Fluidkontakteinrichtung (175) verbunden ist,
- wobei die erste Fluidleitung (390) zum Austausch des Fluids (51) zwischen dem zweiten Kanalabschnitt (410) und dem Wärmetauscherfluidkanal (380) ausgebildet ist.

10. Aktives Armmodul (25) nach einem der Ansprüche 3 bis 9 und Anspruch 2,
- aufweisend einen Leitungsblock (535) mit wenigstens einer zweiten Fluidleitung (400),
- wobei die zweite Fluidleitung (400) kanalförmig, insbesondere bohrungsartig in dem Leitungsblock ausgebildet ist,
- wobei an einer der zweiten Anschlussseite (45) zugewandten Seite des Leitungsblocks (535) ein sechster Fluidkontakt (215) der zweiten Fluidkontakteinrichtung (175) an dem Leitungsblock (535) befestigt ist,
- wobei an einer zur zweiten Anschlussseite (45) abgewandten Seite des Leitungsblocks (535) der Leitungsblock (535) an dem Drehübertrager (245) anliegt,
- wobei die zweite Fluidleitung (400) zum Austausch des Fluids (51) zwischen dem Drehübertrager (245) und der zweiten Fluidkontakteinrichtung (175) ausgebildet ist.

11. Aktives Armmodul (25) nach einem der vorhergehenden Ansprüche,
- wobei das erste Gehäuse (60) einen sich in radialer Richtung bezogen auf die Rotationsache (Raₙ) nach innen erstreckenden ersten Absatz (565) mit einer stirnseitig an dem ersten Absatz (565) angeordneten ersten Absatzfläche (566) aufweist,
- wobei die erste Absatzfläche (566) geneigt zu der Rotationsachse (Raₙ) angeordnet ist,
- wobei der Wärmetauscher (355) an einer der ersten Anschlussseite (40) zugewandten Seite zweiten Absatzfläche (615) aufweist,
- wobei zumindest abschnittsweise zwischen der ersten Absatzfläche (566) und der zweiten Absatzfläche (615) ein erstes Dichtelement (650), insbesondere ein erster Dichtring, angeordnet ist,
- wobei das erste Dichtelement (650) an der ersten Absatzfläche (566) anliegt und ausgebildet ist, den Wärmetauscherfluidkanal (380) gegen einen Austritt des Fluids (51) abzudichten.

12. Aktives Armmodul (25) Anspruch 11,
- wobei das erste Gehäuse (60) eine umlaufend um die Rotationsachse (Raₙ) ausgebildete zweite Aussparung (640) aufweist,
- wobei der Wärmetauscher (355) einen umlaufend um die Rotationsachse (Raₙ) ausgebildeten dritten Absatz (625) aufweist, der in die zweite Aussparung (640) zumindest abschnittweise eingreift,
- wobei der dritte Absatz (625) sich in radialer Richtung bezogen auf die Rotationsachse (Raₙ) radial nach außen erstreckt und auf einer der ersten Anschlussseite zugewandten Seite eine dritte Absatzfläche (630) aufweist, die geneigt zu der Rotationsachse (Raₙ) ausgerichtet ist,
- wobei zumindest abschnittsweise zwischen der dritten Absatzfläche (630) und einem Aussparungsgrund (645) der zweiten Aussparung (640) ein zweites Dichtelement (655), insbesondere ein zweiter Dichtring angeordnet ist,
- wobei der Wärmetauscherfluidkanal (380) axial zumindest abschnittsweise zwischen der zweiten Absatzfläche (615) und dem dritten Absatz (625) angeordnet ist,
- wobei das zweite Dichtelement (655) ausgebildet ist, den Wärmetauscher (355) gegen einen Austritt von Fluid (51) aus dem Wärmetauscherfluidkanal (380) abzudichten.

13. Aktives Armmodul (25) nach einem der Ansprüche 6 bis 12,
- wobei der Wärmetauscherfluidkanal (380) wenigstens einen dritten Kanalabschnitt (415) aufweist,
- wobei der dritte Kanalabschnitt (415) sich entlang einer Richtung der Rotationsachse (Raₙ) erstreckt und beabstandet zu der Rotationsachse (Raₙ) verlaufend ausgebildet ist,
- wobei der dritte Kanalabschnitt (415) in Umfangsrichtung versetzt zu dem ersten Kanalabschnitt (405) angeordnet ist,
- wobei der zweite Kanalabschnitt (410) den ersten Kanalabschnitt (405) mit dem dritten Kanalabschnitt (415) verbindet. ,
- wobei der Wärmetauscherfluidkanal (380) vorzugsweise wenigstens einen vierten Kanalabschnitt (420) aufweist,
- wobei der vierte Kanalabschnitt (420) an einer zweiten Wärmetauscherstirnseite (466) des zweiten Wärmetauscherabschnitts (365) angeordnet ist und nutförmig ausgebildet ist,
- wobei der vierte Kanalabschnitt (420) um die Rotationsachse (Raₙ) verlaufend ausgebildet ist,
- wobei an dem vierten Kanalabschnitt (420) der dritte Kanalabschnitt (415) mündet;
- wobei der erste Wärmetauscherabschnitt (360) an der zweiten Wärmetauscherstirnseite (466) anliegt und den vierten Kanalabschnitt (420) verschließt.

14. Roboterarm (15),
- aufweisend wenigstens ein aktives Armmodul (25) und ein Armmodul (18) oder eine Roboterbasis (15),
- wobei das aktive Armmodul (25) nach einem der vorhergehenden Ansprüche ausgebildet ist,
- wobei das Armmodul (18) eine erste Anschlussseite (40) und eine zweite Anschlussseite (45) aufweist,
- wobei die erste Anschlussseite (40) des aktiven Armmoduls (25) mit der zweiten Anschlussseite (45) des Armmoduls (18) mechanisch zur Übertragung von Stützkräften und/oder Antriebskräften zwischen dem aktiven Armmodul (25) und dem Armmodul (18) verbunden ist,
- wobei über die miteinander verbundenen ersten und zweiten Anschlussseiten (40, 45) des aktiven Armmoduls (25) und des Armmoduls (18) oder der Roboterbasis (15) ein Fluid (51) austauschbar sind.

15. Industrieroboter (10),
- aufweisend einen Roboterarm (20) nach Anspruch 14 und eine Roboterbasis (15),
- wobei die erste Anschlussseite (40) des Armmoduls (18) der Roboterbasis (15) zugewandt ist,
- wobei über die erste Anschlussseite (40) des Armmoduls (18), die zweite Anschlussseite (45) des Armmoduls (18) und die erste Anschlussseite (40) des aktiven Armmoduls (25) hinweg das Fluid (51) zwischen der Roboterbasis (15) und dem aktiven Armmodul (25) übertragbar ist.

## Claims

1. Active arm module (25) for a modular robot arm (20) of an industrial robot (10),
- having a first housing (60), a heat exchanger (355), a drive device (240), and a first connection side (40) having a first connection plate (95),
- wherein the first connection plate (95) for transmitting drive forces and supporting forces is mechanically connectable to a further arm module (18) or a robot base (15) of the robot arm (20),
- wherein the first housing (60) extends along a rotation axis (Raₙ) and delimits an interior space (235) that receives the drive device (240),
- wherein the heat exchanger (355) at least in portions receives the drive device (240) and is thermally coupled to the drive device (240),
- wherein the heat exchanger (355) has at least one heat exchanger fluid duct (380),
- wherein the heat exchanger (355) is configured to exchange heat between the drive device (240) and the fluid (51),
**characterized by**
- a first fluid contact device (130) disposed on the first connection plate (95),
- wherein a fluid (51) by way of the first fluid contact device (130) is able to be exchanged with the further arm module (18) or the robot base (15),
- wherein the heat exchanger fluid duct (380) for exchanging the fluid (51) with the first fluid contact device (130) is able to be filled with the fluid (51).

2. Active arm module (25) according to Claim 1,
- having a second connection side (45),
- wherein the second connection side (45) is mechanically co-rotationally connected to the first housing (60),
- wherein the second connection side (45) has a second fluid contact device (175),
- wherein the heat exchanger fluid duct (380) of the heat exchanger (355) is disposed between the second fluid contact device (175) and the first fluid contact device (130), and the heat exchanger fluid duct (380) is configured to exchange the fluid (51) between the first fluid contact device (130) and the second fluid contact device (175);
- and/or
- wherein the heat exchanger fluid duct (380) is configured to meander about the drive device (240);
- and/or
- wherein the heat exchanger fluid duct (380) at least in portions is configured to coil in at least one winding (590), preferably at least two windings (590), about the rotation axis (Raₙ) about the drive device (240).

3. Active arm module (25) according to one of the preceding claims,
- having a rotation transmitter (245),
- wherein the first connection side (40) is mounted so as to be rotatable about the rotation axis (Raₙ);
- wherein the rotation transmitter (245) connects the first fluid contact device (130) to the heat exchanger fluid duct (380),
- wherein the rotation transmitter (245) in a rotation of the first connection side (40) is configured to exchange the fluid (51) between the heat exchanger fluid duct (380) of the heat exchanger (355) and the first fluid contact device (130).

4. Active arm module (25) according to one of the preceding claims,
- wherein the drive device (240) has a rotor (270) and a stator (275),
- wherein the rotor (270) in a torque-locking manner is coupled to the first connection side (40) and configured to rotate the first connection side (40) about the rotation axis (Raₙ),
- wherein the heat exchanger (355) at least in portions receives the stator (275), and the heat exchanger (355) at least in portions bears on the stator (275) ;
- and/or
- wherein the heat exchanger (355) has at least one first heat exchanger portion (360),
- wherein the first heat exchanger portion (360) is configured to run in a hollow-cylindrical manner about the rotation axis (Raₙ),
- wherein the first heat exchanger portion (360) is thermally connected to the drive device (240) and on the outside radially encloses the drive device (240),
- wherein the first heat exchanger portion (360) at least in portions forms the heat exchanger fluid duct (380) and is configured to exchange heat between the fluid (51) and the drive device (240) .

5. Active arm module (25) according to one of the preceding claims,
- wherein the heat exchanger fluid duct (380) has a second duct portion (410),
- wherein the second duct portion (410) is configured to be groove-shaped and is guided about the rotation axis (Raₙ),
- wherein the second duct portion (410) is disposed on a second external circumferential side (550) of the heat exchanger (355),
- wherein the first housing (60) on a third internal circumferential side (560) has a heat exchanger receptacle (555),
- wherein the heat exchanger (355) at least in portions engages in the heat exchanger receptacle (555),
- wherein the third internal circumferential side (560) of the heat exchanger receptacle (555) on the outside delimits the second duct portion (410),
- or
- wherein the second duct portion (410) is disposed on a first heat exchanger end side (455) of the heat exchanger (355),
- wherein the second duct portion (410) is configured to run in an arcuate manner about the rotation axis (Raₙ),
- wherein the active arm module (25) preferably has a gearbox (265),
- wherein the gearbox (265) on the input side is co-rotationally connected to the drive device (240), and on the output side is co-rotationally connected to the first connection side (40),
- wherein the gearbox (265) on the end side bears on the heat exchanger (355) and closes off the second duct portion (410).

6. Active arm module (25) according to Claim 5 and Claim 3,
- wherein the heat exchanger (355) bears on the rotation transmitter (245), and the heat exchanger fluid duct (380) has a first duct portion (405),
- wherein the first duct portion (405) extends along a direction of the rotation axis (Raₙ) and is configured to run in the manner of a bore at a spacing from the rotation axis (Raₙ),
- wherein the first duct portion (405) on one side opens into the second duct portion (410), and on another side is connected to the rotation transmitter (245),
- wherein the first duct portion (405) is configured to exchange the fluid between the rotation transmitter (245) and the second duct portion (410).

7. Active arm module (25) according to Claim 6,
- wherein the heat exchanger (355) has a second heat exchanger portion (365),
- wherein the second heat exchanger portion (365) is configured to run in a hollow-cylindrical manner about the rotation axis (Raₙ),
- wherein the second heat exchanger portion (365) is connected to a third housing (315) of the rotation transmitter (245),
- wherein the first heat exchanger portion (360) on a third heat exchanger end side (480), which faces away from the first connection side (40), bears on a fourth heat exchanger end side (545) of the second heat exchanger portion (365),
- wherein the first duct portion (405) is guided through the second heat exchanger portion (365).

8. Active arm module (25) according to one of Claims 4 to 7,
- wherein the heat exchanger (355) has a second heat exchanger portion (365) disposed so as to be axially next to the first heat exchanger portion (360),
- wherein the second heat exchanger portion (365) is configured to run in a hollow-cylindrical manner about the rotation axis (Raₙ),
- wherein the heat exchanger fluid duct (380) is disposed alternatingly in the first heat exchanger portion (360) and the second heat exchanger portion (365),
- wherein the second heat exchanger portion (365) on the end side bears on the first heat exchanger portion (360) and is thermally connected to the first heat exchanger portion (360),
- wherein the second heat exchanger portion (365) and a third housing (315) of the rotation transmitter (245) are preferably configured to be in one piece and materially integral.

9. Active arm module (25) according to one of Claims 2 to 8,
- having a first fluid line (390),
- wherein the fluid line (390) is configured in the manner of a bore in the first housing (60),
- wherein the first fluid line (390) in portions extends in the radial direction in relation to the rotation axis (Raₙ) and on the inside opens into the heat exchanger fluid duct (380),
- wherein radially outside the first fluid line (390) is connected to the second fluid contact device (175),
- wherein the first fluid line (390) is configured to exchange the fluid (51) between the second duct portion (410) and the heat exchanger fluid duct (380) .

10. Active arm module (25) according to one of Claims 3 to 9, and Claim 2,
- having a line block (535) having at least one second fluid line (400),
- wherein the second fluid line (400) is configured in the shape of a duct, in particular in the manner of a bore, in the line block,
- wherein on a side of the line block (535) that faces the second connection side (45) a sixth fluid contact (215) of the second fluid contact device (175) is fastened to the line block (535),
- wherein on a side of the line block (535) that faces away from the second connection side (45) the line block (535) bears on the rotation transmitter (245),
- wherein the second fluid line (400) is configured to exchange the fluid (51) between the rotation transmitter (245) and the second fluid contact device (175).

11. Active arm module (25) according to one of the preceding claims,
- wherein the first housing (60), in terms of the rotation axis (Raₙ), has a first shoulder (565) which in the radial direction extends inwards and has a first shoulder face (566) that is disposed on the end side on the first shoulder (565),
- wherein the first shoulder face (566) is disposed so as to be inclined in relation to the rotation axis (Raₙ),
- wherein the heat exchanger (355) on a side that faces the first connection side (40) has a second shoulder face (615),
- wherein a first sealing element (650), in particular a first annular seal, is disposed at least in portions between the first shoulder face (566) and the second shoulder face (615),
- wherein the first sealing element (650) bears on the first shoulder face (566) and is configured to seal the heat exchanger fluid duct (380) in relation to a leakage of the fluid (51).

12. Active arm module (25) according to Claim 11,
- wherein the first housing (60) has a second recess (640) which is configured to encircle the rotation axis (Raₙ),
- wherein the heat exchanger (355) has a third shoulder (625) which is configured to encircle the rotation axis (Raₙ) and in which the second recess (640) engages at least in portions,
- wherein the third shoulder (625), in terms of the rotation axis (Raₙ), extends radially outwards and on a side that faces the first connection side has a third shoulder face (630) which is aligned so as to be inclined in relation to the rotation axis (Raₙ),
- wherein a second sealing element (655), in particular a second annular seal, is disposed at least in portions between the third shoulder face (630) and a recess base (645) of the second recess (640),
- wherein the heat exchanger fluid duct (380) axially at least in portions is disposed between the second shoulder face (615) and the third shoulder (625),
- wherein the second sealing element (655) is configured to seal the heat exchanger (355) in relation to a leakage of fluid (51) from the heat exchanger fluid duct (380).

13. Active arm module (25) according to one of Claims 6 to 12,
- wherein the heat exchanger fluid duct (380) has at least one third duct portion (415),
- wherein the third duct portion (415) extends along a direction of the rotation axis (Raₙ) and is configured to run at a spacing from the rotation axis (Raₙ),
- wherein the third duct portion (415) is disposed so as to be offset from the first duct portion (405) in the circumferential direction,
- wherein the second duct portion (410) connects the first duct portion (405) to the third duct portion (415),
- wherein the heat exchanger fluid duct (380) preferably has at least one fourth duct portion (420),
- wherein the fourth duct portion (420) is disposed on a second heat exchanger end side (466) of the second heat exchanger portion (365) and is configured to be groove shaped,
- wherein the fourth duct portion (420) is configured to encircle the rotation axis (Raₙ),
- wherein the third duct portion (415) opens out at the fourth duct portion (420),
- wherein the first heat exchanger portion (360) bears on the second heat exchanger end side (466) and closes off the fourth duct portion (420).

14. Robot arm (15),
- having at least one active arm module (25) and an arm module (18) or a robot base (15),
- wherein the active arm module (25) is configured according to one of the preceding claims,
- wherein the arm module (18) has a first connection side (40) and a second connection side (45),
- wherein the first connection side (40) of the active arm module (25) for transmitting supporting forces and/or drive forces between the active arm module (25) and the arm module (18) is mechanically connected to the second connection side (45) of the arm module (18),
- wherein a fluid (51) is able to be exchanged by way of the interconnected first and second connection sides (40, 45) of the active arm module (25) and the arm module (18) or the robot base (15) .

15. Industrial robot (10),
- having a robot arm (20) according to Claim 14, and a robot base (15),
- wherein the first connection side (40) of the arm module (18) faces the robot base (15),
- wherein the fluid (51) by way of the first connection side (40) of the arm module (18), the second connection side (45) of the arm module (18), and the first connection side (40) of the active arm module (25) is able to be transmitted between the robot base (15) and the active arm module (25).

## Revendications

1. Module de bras actif (25) pour un bras de robot modulaire (20) d'un robot industriel (10),
- présentant un premier boîtier (60), un échangeur thermique (355), un dispositif d'entraînement (240) et un premier côté de raccordement (40) pourvu d'une première plaque de raccordement (95),
- dans lequel la première plaque de raccordement (95) peut être reliée mécaniquement à un autre module de bras (18) ou à une base de robot (15) du bras de robot (20) afin de transmettre des forces d'entraînement et d'appui,
- dans lequel le premier boîtier (60) s'étend le long d'un axe de rotation (Raₙ) et délimite un espace intérieur (235) recevant le dispositif d'entraînement (240),
- dans lequel l'échangeur thermique (355) reçoit au moins par endroits le dispositif d'entraînement (240) et est couplé thermiquement au dispositif d'entraînement (240),
- dans lequel l'échangeur thermique (355) présente au moins un canal de fluide d'échangeur thermique (380),
- dans lequel l'échangeur thermique (355) est réalisé pour échanger de la chaleur entre le dispositif d'entraînement (240) et le fluide (51),
**caractérisé par**
- un premier dispositif de contact fluidique (130) disposé sur la première plaque de raccordement (95),
- dans lequel un fluide (51) peut être échangé avec l'autre module de bras (18) ou la base de robot (15) par l'intermédiaire du premier dispositif de contact fluidique (130),
- dans lequel le canal de fluide d'échangeur thermique (380) peut être rempli de fluide (51) pour échanger le fluide (51) avec le premier dispositif de contact fluidique (130).

2. Module de bras actif (25) selon la revendication 1,
- présentant un deuxième côté de raccordement (45),
- dans lequel le deuxième côté de raccordement (45) est relié mécaniquement au premier boîtier (60) de manière solidaire en rotation,
- dans lequel le deuxième côté de raccordement (45) présente un deuxième dispositif de contact fluidique (175),
- dans lequel le canal de fluide d'échangeur thermique (380) de l'échangeur thermique (355) est disposé entre le deuxième dispositif de contact fluidique (175) et le premier dispositif de contact fluidique (130), et le canal de fluide d'échangeur thermique (380) est réalisé pour échanger le fluide (51) entre le premier dispositif de contact fluidique (130) et le deuxième dispositif de contact fluidique (175),
- et/ou
- dans lequel le canal de fluide d'échangeur thermique (380) est réalisé en s'étendant en forme de méandre autour du dispositif d'entraînement (240), et/ou
- dans lequel le canal de fluide d'échangeur thermique (380) est réalisé autour du dispositif d'entraînement (240) en s'étendant au moins par endroits de manière hélicoïdale sur au moins une spire (590), de préférence sur au moins deux spires (590), autour de l'axe de rotation (Raₙ).

3. Module de bras actif (25) selon l'une quelconque des revendications précédentes,
- présentant un transmetteur de rotation (245),
- dans lequel le premier côté de raccordement (40) est monté rotatif autour de l'axe de rotation (Raₙ),
- dans lequel le transmetteur de rotation (245) relie le premier dispositif de contact fluidique (130) au canal de fluide d'échangeur thermique (380),
- dans lequel le transmetteur de rotation (245) est réalisé lors d'une rotation du premier côté de raccordement (40) pour échanger le fluide (51) entre le canal de fluide d'échangeur thermique (380) de l'échangeur thermique (355) et le premier dispositif de contact fluidique (130).

4. Module de bras actif (25) selon l'une quelconque des revendications précédentes,
- dans lequel le dispositif d'entraînement (240) présente un rotor (270) et un stator (275),
- dans lequel le rotor (270) est couplé par liaison de transmission de couple au premier côté de raccordement (40) et est réalisé pour faire tourner le premier côté de raccordement (40) autour de l'axe de rotation (Raₙ),
- dans lequel l'échangeur thermique (355) reçoit au moins par endroits le stator (275), et l'échangeur thermique (355) est au moins par endroits adjacent au stator (275),
- et/ou
- dans lequel l'échangeur thermique (355) présente au moins une première section d'échangeur thermique (360),
- dans lequel la première section d'échangeur thermique (360) est réalisée en s'étendant en cylindre creux autour de l'axe de rotation (Raₙ),
- dans lequel la première section d'échangeur thermique (360) est reliée thermiquement au dispositif d'entraînement (240) et entoure le dispositif d'entraînement (240) radialement côté extérieur,
- dans lequel la première section d'échangeur thermique (360) réalise au moins par endroits le canal de fluide d'échangeur thermique (380) et est réalisée pour échanger de la chaleur entre le fluide (51) et le dispositif d'entraînement (240).

5. Module de bras actif (25) selon l'une quelconque des revendications précédentes,
- dans lequel le canal de fluide d'échangeur thermique (380) présente une deuxième section de canal (410),
- dans lequel la deuxième section de canal (410) est réalisée en forme de rainure et guidée autour de l'axe de rotation (Raₙ),
- dans lequel la deuxième section de canal (410) est disposée sur une deuxième face circonférentielle extérieure (550) de l'échangeur thermique (355),
- dans lequel le premier boîtier (60) présente un logement d'échangeur thermique (555) sur une troisième face circonférentielle intérieure (560),
- dans lequel l'échangeur thermique (355) vient en prise au moins par endroits avec le logement d'échangeur thermique (555),
- dans lequel la troisième face circonférentielle intérieure (560) du logement d'échangeur thermique (555) délimite côté extérieur la deuxième section de canal (410),
ou
- dans lequel la deuxième section de canal (410) est disposée sur une première face frontale d'échangeur thermique (455) de l'échangeur thermique (355),
- dans lequel la deuxième section de canal (410) est réalisée en forme d'arc en s'étendant autour de l'axe de rotation (Raₙ),
- dans lequel le module de bras actif (25) présente de préférence une transmission (265),
- dans lequel la transmission (265) est reliée côté entrée de manière solidaire en rotation au dispositif d'entraînement (240) et côté sortie de manière solidaire en rotation au premier côté de raccordement (40),
- dans lequel la transmission (265) est côté frontal adjacente à l'échangeur thermique (355) et obture la deuxième section de canal (410).

6. Module de bras actif (25) selon la revendication 5 et la revendication 3,
- dans lequel l'échangeur thermique (355) est adjacent au transmetteur de rotation (245), et le canal de fluide d'échangeur thermique (380) présente une première section de canal (405),
- dans lequel la première section de canal (405) s'étend le long d'une direction de l'axe de rotation (Raₙ) et est réalisée en s'étendant à distance de l'axe de rotation (Raₙ) à la manière d'un perçage,
- dans lequel la première section de canal (405) débouche d'un côté sur la deuxième section de canal (410) et est d'un autre côté reliée au transmetteur de rotation (245),
- dans lequel la première section de canal (405) est réalisée pour échanger le fluide entre le transmetteur de rotation (245) et la deuxième section de canal (410).

7. Module de bras actif (25) selon la revendication 6,
- dans lequel l'échangeur thermique (355) présente une deuxième section d'échangeur thermique (365),
- dans lequel la deuxième section d'échangeur thermique (365) est réalisée en s'étendant en cylindre creux autour de l'axe de rotation (Raₙ),
- dans lequel la deuxième section d'échangeur thermique (365) est reliée à un troisième boîtier (315) du transmetteur de rotation (245),
- dans lequel, sur la troisième face frontale d'échangeur thermique (480), détournée vers le premier côté de raccordement (40), la première section d'échangeur thermique (360) est adjacente à une quatrième face frontale d'échangeur thermique (545) de la deuxième section d'échangeur thermique (365),
- dans lequel la première section de canal (405) traverse la deuxième section d'échangeur thermique (365) .

8. Module de bras actif (25) selon l'une quelconque des revendications 4 à 7,
- dans lequel l'échangeur thermique (355) présente une deuxième section d'échangeur thermique (365) disposée axialement à côté de la première section d'échangeur thermique (360),
- dans lequel la deuxième section d'échangeur thermique (365) est réalisée en s'étendant en cylindre creux autour de l'axe de rotation (Raₙ),
- dans lequel le canal de fluide d'échangeur thermique (380) est disposé en alternance dans la première section d'échangeur thermique (360) et dans la deuxième section d'échangeur thermique (365),
- dans lequel la deuxième section d'échangeur thermique (365) est adjacente côté frontal à la première section d'échangeur thermique (360) et est reliée thermiquement à la première section d'échangeur thermique (360),
- dans lequel la deuxième section d'échangeur thermique (365) et un troisième boîtier (315) du transmetteur de rotation (245) sont de préférence réalisés d'un seul tenant et en venant de matière.

9. Module de bras actif (25) selon l'une quelconque des revendications 2 à 8,
- présentant une première conduite de fluide (390),
- dans lequel la première conduite de fluide (390) est réalisée à la manière d'un perçage dans le premier boîtier (60),
- dans lequel la première conduite de fluide (390) s'étend par endroits dans la direction radiale par rapport à l'axe de rotation (Raₙ) et débouche côté intérieur sur le canal de fluide d'échangeur thermique (380),
- dans lequel la première conduite de fluide (390) est reliée au deuxième dispositif de contact fluidique (175) radialement à l'extérieur,
- dans lequel la première conduite de fluide (390) est réalisée pour échanger le fluide (51) entre la deuxième section de canal (410) et le canal de fluide d'échangeur thermique (380).

10. Module de bras actif (25) selon l'une quelconque des revendications 3 à 9 et la revendication 2,
- présentant un bloc de conduites (535) comprenant au moins une deuxième conduite de fluide (400),
- dans lequel la deuxième conduite de fluide (400) est réalisée en forme de canal, en particulier à la manière d'un perçage, dans le bloc de conduites,
- dans lequel un sixième contact fluidique (215) du deuxième bloc de conduites (535) est fixé sur une face, tournée vers le deuxième côté de raccordement (45), du bloc de conduites (535),
- dans lequel le bloc de conduites (535) est adjacent au transmetteur de rotation (245) sur une face, détournée vers le deuxième côté de raccordement (45), du bloc de conduites (535),
- dans lequel la deuxième conduite de fluide (400) est réalisée pour échanger le fluide (51) entre le transmetteur de rotation (245) et le deuxième dispositif de contact fluidique (175).

11. Module de bras actif (25) selon l'une quelconque des revendications précédentes,
- dans lequel le premier boîtier (60) présente un premier gradin (565) s'étendant vers l'intérieur dans la direction radiale par rapport à l'axe de rotation (Raₙ) et pourvu d'une première surface de gradin (566) disposée côté frontal au niveau du premier gradin (565),
- dans lequel la première surface de gradin (566) est disposée de manière inclinée par rapport à l'axe de rotation (Raₙ),
- dans lequel l'échangeur thermique (355) présente une deuxième surface de gradin (615) sur une face tournée vers le premier côté de raccordement (40),
- dans lequel un premier élément d'étanchéité (650), en particulier une première bague d'étanchéité, est disposé au moins par endroits entre la première surface de gradin (566) et la deuxième surface de gradin (615),
- dans lequel le premier élément d'étanchéité (650) est adjacent à la première surface de gradin (566) et est réalisé pour rendre le canal de fluide d'échangeur thermique (380) étanche contre une sortie du fluide (51) .

12. Module de bras actif (25) selon la revendication 11,
- dans lequel le premier boîtier (60) présente un deuxième évidement (640) réalisé de manière périphérique autour de l'axe de rotation (Raₙ),
- dans lequel l'échangeur thermique (355) présente un troisième gradin (625) réalisé de manière périphérique autour de l'axe de rotation (Raₙ) et qui vient en prise au moins par endroits avec le deuxième évidement (640),
- dans lequel, dans la direction radiale par rapport à l'axe de rotation (Raₙ), le troisième gradin (625) s'étend radialement vers l'extérieur et présente sur une face tournée vers le premier côté de raccordement une troisième surface de gradin (630) qui est orientée de manière inclinée par rapport à l'axe de rotation (Raₙ),
- dans lequel un deuxième élément d'étanchéité (655), en particulier une deuxième bague d'étanchéité, est disposé au moins par endroits entre la troisième surface de gradin (630) et un fond d'évidement (645) du deuxième évidement (640),
- dans lequel le canal de fluide d'échangeur thermique (380) est disposé axialement au moins par endroits entre la deuxième surface de gradin (615) et le troisième gradin (625),
- dans lequel le deuxième élément d'étanchéité (655) est réalisé pour rendre l'échangeur thermique (355) étanche contre une sortie de fluide (51) du canal de fluide d'échangeur thermique (380).

13. Module de bras actif (25) selon l'une quelconque des revendications 6 à 12,
- dans lequel le canal de fluide d'échangeur thermique (380) présente au moins une troisième section de canal (415),
- dans lequel la troisième section de canal (415) s'étend le long d'une direction de l'axe de rotation (Raₙ) et est réalisée en s'étendant à distance de l'axe de rotation (Raₙ),
- dans lequel la troisième section de canal (415) est disposée dans la direction circonférentielle de manière décalée par rapport à la première section de canal (405),
- dans lequel la deuxième section de canal (410) relie la première section de canal (405) à la troisième section de canal (415),
- dans lequel le canal de fluide d'échangeur thermique (380) présente de préférence au moins une quatrième section de canal (420),
- dans lequel la quatrième section de canal (420) est disposée sur une deuxième face frontale d'échangeur thermique (466) de la deuxième section d'échangeur thermique (365) et est réalisée en forme de rainure,
- dans lequel la quatrième section de canal (420) est réalisée en s'étendant autour de l'axe de rotation (Raₙ),
- dans lequel la troisième section de canal (415) débouche sur la quatrième section de canal (420) ;
- dans lequel la première section d'échangeur thermique (360) est adjacente à la deuxième face frontale d'échangeur thermique (466) et obture la quatrième section de canal (420).

14. Bras de robot (15),
- présentant au moins un module de bras actif (25) et un module de bras (18) ou une base de robot (15),
- dans lequel le module de bras actif (25) est réalisé selon l'une quelconque des revendications précédentes,
- dans lequel le module de bras (18) présente un premier côté de raccordement (40) et un deuxième côté de raccordement (45),
- dans lequel le premier côté de raccordement (40) du module de bras actif (25) est relié mécaniquement au deuxième côté de raccordement (45) du module de bras (18) pour transmettre des forces d'appui et/ou des forces d'entraînement entre le module de bras actif (25) et le module de bras (18),
- dans lequel un fluide (51) peut être échangé par l'intermédiaire des premier et deuxième côtés de raccordement (40, 45), reliés ensemble, du module de bras actif (25) et du module de bras (18) ou de la base de robot (15).

15. Robot industriel (10),
- présentant un bras de robot (20) selon la revendication 14 et une base de robot (15),
- dans lequel le premier côté de raccordement (40) du module de bras (18) est tourné vers la base de robot (15),
- dans lequel le fluide (51) peut être transmis entre la base de robot (15) et le module de bras actif (25) par l'intermédiaire du premier côté de raccordement (40) du module de bras (18), du deuxième côté de raccordement (45) du module de bras (18) et du premier côté de raccordement (40) du module de bras actif (25).
